(19) Europäisches Patentamt / European Patent Office / Office européen des brevets

(11) EP 2 179 082 B1

(12) **EUROPEAN PATENT SPECIFICATION**

(45) Date of publication and mention of the grant of the patent:
**29.02.2012 Bulletin 2012/09**

(21) Application number: **08798068.6**

(22) Date of filing: **18.08.2008**

(51) Int Cl.:
***D01F 6/46*** *(2006.01)* ***D04H 3/16*** *(2006.01)*
***D04H 13/00*** *(2006.01)* ***B32B 27/12*** *(2006.01)*

(86) International application number:
**PCT/US2008/073442**

(87) International publication number:
**WO 2009/026207 (26.02.2009 Gazette 2009/09)**

(54) **SOFT AND ELASTIC NONWOVEN POLYPROPYLENE COMPOSITIONS**

WEICHE UND ELASTISCHE VLIESPOLYPROPYLENZUSAMMENSTZUNGEN

COMPOSITIONS DE POLYPROPYLÈNE NON TISSÉES SOUPLES ET ÉLASTIQUES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.08.2007 US 957017 P**

(43) Date of publication of application:
**28.04.2010 Bulletin 2010/17**

(73) Proprietor: **ExxonMobil Chemical Patents Inc.**
**Baytown, TX 77520-2101 (US)**

(72) Inventors:
- **DATTA, Sudhin**
  **Houston, TX 77007 (US)**
- **THURMAN, Derek, W.**
  **Houston, TX 77062 (US)**
- **CHENG, C.Y.**
  **Seabrook, TX 77586 (US)**
- **LI, Wen**
  **Houston, TX 77059 (US)**
- **JOHNSRUD, David, R.**
  **Humble, TX 77346 (US)**

(74) Representative: **Pols, Ronald Maarten et al**
**ExxonMobil Chemical Europe Inc.**
**Intellectual Property Law Shared Services**
**Hermeslaan 2,**
**1831 Machelen (BE)**

(56) References cited:
**WO-A-2006/044083**
**US-A1- 2005 106 978**
**US-B1- 6 342 565**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 179 082 B1

## Description

### FIELD OF THE INVENTION

The invention relates to improved soft and elastic fibers and nonwoven fabrics made from single polyolefins or from blends of polyolefins.

### BACKGROUND OF THE INVENTION

Soft and elastic nonwoven fabrics and fibers of polypropylene and its copolymers with alpha olefins such as ethylene which lead to substantially softer and more extensible constructions are well known in the art. U.S. Patent Nos. 3,853,969 and 3,378,606, suggest the formation of in situ blends of isotactic polypropylene and "stereo block" copolymers of propylene and another olefin of 2 to 12 carbon atoms, including ethylene and hexene to yield blends which should be fabricated to obtain soft and elastic nonwoven fabrics.

Similar results are purportedly achieved in U.S. Patent Nos. 3,262,992; 3,882,197; and 3,888,949 which suggests the synthesis of blend compositions containing isotactic polypropylene and copolymers of propylene and an alpha-olefin, containing between 6 - 20 carbon atoms, which are softer and have improved elongation and tensile strength over either the copolymer or isotactic polypropylene. Copolymers of propylene and alpha-olefin are described wherein the alpha-olefin is hexene, octene or dodecene.

Examples of propylene homopolymers containing different levels of isotacticity in different portions of the molecule are described in U.S. Patent No. 5,594,080, in the article in the Journal American Chemical Society (1995), 117, p. 11586, in the article in the Journal American Chemical Society (1997), 119, p. 3635, in the journal article in the Journal of the American Chemical Society (1991), 113, pp. 8569-8570, and in the journal article in the Journal Macromolecules (1995), 28, pp. 3771-3778. These articles do not describe the compositions obtained in blends with a more crystalline polymer such as isotactic polypropylene, nor its resultant desirable physical properties.

U.S. Patent Nos. 5,723,217; 5,726,103; 5,736,465; 5,763,080; and 6,010,588 suggest several metallocene catalyzed processes to make polypropylene to produce fibers and fabric. U.S. Patent No. 5,891,814 discloses a dual metallocene-generated propylene polymer used to make spunbond fibers. WO 99/19547 discloses a method for producing spunbonded fibers and fabric derived from a blend of a propylene homopolymer and a copolymer of polypropylene. U.S. Patent No. 6,342,565 discloses a fiber or nonwoven fabric. Other background references include WO 03/040202.
US2005/0106978 discloses elastic nonwoven fabrics.
WO2006/044083 also discloses elactic nonwoven fabrics.
Finally, US 6,342,565 discloses elastic fibers and articles.

However, these past endeavors have generally taught that fabricating a nonwoven fabric from a fiber to form a soft or extensible article generally requires the use of a semicrystalline polymer. These semicrystalline polymers are most conveniently made in a solution process at a high molecular weight. But the manufacture of the fiber and the fabric requires a lower molecular weight polymer. Thus, the high molecular weight semicrystalline polymers are typically subjected to a free radical assisted thermal process to reduce the molecular weight to the desired range. While isotactic iPP has been made in a solvent-less process at a low enough molecular weight, less crystalline polymers containing limited amounts of crystallinity have not been made useful for the fabrication of a fiber and a nonwoven fabric.

### SUMMARY OF THE INVENTION

According to the invention, there is provided a fabric as defined in any one of the accompanying claims.

### BRIEF DESCRIPTION OF THE DRAWINGS

Figure 1: Rheological measurements of the blends in Example 1.
Figure 2A: Electron Micrograph of PP Escorene 9302 (ExxonMobil Chemical).
Figure 2B: Electron Micrograph of PP Escorene 9302 with 30 wt% of C3-C2 FPC.
Figure 2C: Electron Micrograph ofPP Escorene 9302 with 30 wt% of C3-C6 FPC.
Figure 3A: Fiber diameter distribution for an inventive Melt blown fabric.
Figure 3B: Fibers micrograph for an inventive Melt Blown fabric. For both Figures 3A and 3B the FPC contains 7.6% C6, has a heat of fusion of 78J/g and a MFR of 2910 g/10 min.
Figure 4 is a comparison of the level of the molecular degradation agent.

## DETAILED DESCRIPTION OF THE INVENTION

A detailed description will now be provided. Depending on the context, all references below to the "invention" may in some cases refer to certain specific embodiments only. In other cases it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions when the information is combined with available information and technology.

In one embodiment, this invention relates to a nonwoven fabric comprising a first polymer component (FPC) of from 5% to 99% by weight based on the total weight of the composition wherein the first component is selected from the group consisting of homopolymers of propylene and random copolymers of propylene, the first component having a heat of fusion as determined by DSC of less than 50 J/g and stereoregular propylene crystallinity; and a second polymer component (SPC) comprising from 95% to 1% by weight based on the total weight of the composition of a propylene polymer or blends of propylene polymers; wherein the nonwoven fabric has a permanent set of less than 60%.

In a preferred embodiment, the blend described herein is a homogeneous blend. By homogeneous blend is meant a composition having substantially one morphological phase in the same state. For example a blend of two polymers where one polymer is miscible with another polymer is said to be homogeneous in the solid state. Such morphology is determined using scanning electron microscopy. By miscible is meant that the blend of two or more polymers exhibits single-phase behavior for the glass transition temperature, e.g. the Tg would exist as a single, sharp transition temperature on the DMTA trace. By contrast, two separate transition temperatures would be observed for an immiscible blend, typically corresponding to the temperatures for each of the individual components of the blend. Thus a polymer blend is miscible when there is one Tg indicated on the DMTA trace. A miscible blend is homogeneous, while an immiscible blend is heterogeneous. In contrast, by heterogeneous blend is meant a composition having two or more morphological phases in the same state. For example a blend of two polymers where one polymer forms discrete packets dispersed in a matrix of another polymer is said to be heterogeneous in the solid state. Also heterogeneous blend is defined to include co-continuous blends where the blend components are separately visible, but it is unclear which is the continuous phase and which is the discontinuous phase. Such morphology is determined using scanning electron microscopy (SEM) or atomic force microscopy (AFM), in the event the SEM and AFM provide different data, then the SEM shall be used. By continuous phase is meant the matrix phase in a heterogeneous blend. By discontinuous phase is meant the dispersed phase in a heterogeneous blend.

### First Polymer Component (FPC)

The FPC of the polymer blend compositions, fibers and fabrics of the present invention comprises a crystallizable copolymer of propylene and ethylene with optional small amounts of alpha olefins with the following characteristics. A crystallizable polymer is defined as, which is distinct from a crystalline polymer, a polymeric component where the measured crystallinity of the polymer as measured by the heat of fusion by DSC, as described in the procedure below, is augmented at least by a factor of at least 1.5, or at least 2, or at least 3 by either waiting for a period of 120 hours at room temperature, by singly or repeatedly mechanical distending the sample or by contact with the SPC, which is described in more detail below. In one embodiment the invention relates to the formation of a low molecular weight propylene alpha olefin copolymer which has some or all of the below features.

### Composition:

The copolymer (FPC) includes from a lower limit of 5% or 6% or 8% or 10% by weight ethylene-derived units to an upper limit of 20% or 25% by weight ethylene-derived units. These embodiments also will include propylene-derived units present in the copolymer in the range of from a lower limit of 75% or 80% by weight to an upper limit of 95% or 94% or 92% or 90% by weight. These percentages by weight are based on the total weight of the propylene and ethylene-derived units; i.e., based on the sum of weight percent propylene-derived units and weight percent ethylene-derived units being 100%. Within these ranges, these copolymers are mildly crystalline as measured by differential scanning calorimetry (DSC), and are exceptionally soft, while still retaining substantial tensile strength and elasticity. Elasticity, as defined in detail herein below, is a dimensional recovery from elongation for these copolymers. At ethylene compositions lower than the above limits for the copolymer, such polymers are generally crystalline, similar to crystalline isotactic polypropylene, and while having excellent tensile strength, they do not have the favorable softness and elasticity. At ethylene compositions higher than the above limits for the copolymer component, the copolymer is substantially amorphous. Notwithstanding this compositional limitation on the FPC it is anticipated that it may in addition to propylene and ethylene also contain small amounts of one or more higher alpha olefins as long as the final blend of the first and

the SPC is heterogeneous in morphology. Higher alpha olefins are those that have 3 or more carbon atoms and preferably less than 20 carbon atoms. It is believed, while not meant to be limited thereby, the FPC needs to have the optimum amount of polypropylene crystallinity to crystallize with the SPC for the beneficial effects of the present invention. While such a material of higher ethylene composition may be soft, these compositions are weak in tensile strength and poor in elasticity. In summary, such copolymers of embodiments of our invention exhibit the softness, tensile strength and elasticity characteristic of vulcanized rubbers, without vulcanization.

We intend that the copolymer (FPC) may include diene-derived units. Dienes are nonconjugated diolefins which may be incorporated in polymers to facilitate chemical crosslinking reactions. Thus the FPC may include greater than 1% diene, or greater than 0.5% diene, or greater than 0.1% diene. All of these percentages are by weight in the copolymer. The presence or absence of diene can be conventionally determined by infrared techniques well known to those skilled in the art. Sources of diene include diene monomer added to the polymerization of ethylene and propylene, or use of diene in catalysts. No matter the source of such dienes, the above outlined limits on their inclusion in the copolymer are contemplated. Conjugated diene-containing metallocene catalysts have been suggested for the formation of copolymers of olefins. However, polymers made from such catalysts will incorporate the diene from the catalyst, consistent with the incorporation of other monomers in the polymerization.

**Sequence of comonomers**

The FPC of the present invention preferably comprises a random copolymer having a narrow crystallinity distribution. While not meant to be limited thereby, it is believed that the narrow crystallinity distribution of the FPC is important. The intermolecular composition distribution of the polymer is determined by thermal fractionation in a solvent. A typical solvent is a saturated hydrocarbon such as hexane or heptane. The thermal fractionation of the polymer is conducted by exposing a sample of the FPC to heptane at 50 ˚C with slight intermittent agitation. The polymer has a narrow distribution of crystallinity if no more than 25%, more preferably no more than 10% and yet more preferably no more than 5% of the FPC is insoluble after 48 hours.

In the FPC, the length and distribution of stereoregular propylene sequences is consistent with the substantially random statistical copolymerization. It is well known that sequence length and distribution are related to the copolymerization reactivity ratios. A substantially random copolymer is a copolymer for which the product of the reactivity ratios is 2 or less. In stereoblock structures, the average length of PP sequences is greater than that of substantially random copolymers with a similar composition. Prior art polymers with stereoblock structure have a distribution of PP sequences consistent with these blocky structures rather than a random substantially statistical distribution. The reactivity ratios and sequence distribution of the polymer may be determined by $^{13}C$ NMR which locates the comonomer residues in relation to the neighboring propylene residues. To produce a copolymer with the required randomness and narrow composition distribution, it is desirable to use (1) a single sited catalyst and (2) a well-mixed, continuous flow stirred tank polymerization reactor which allows only a uniform polymerization environment for growth of substantially all of the polymer chains of the SPC.

The FPC has stereoregular propylene sequences long enough to crystallize. These stereoregular propylene sequences of the FPC may match the stereoregularity of the propylene in the SPC. For example, if the SPC is predominately isotactic polypropylene, then the FPC if used, are copolymers having isotactic propylene sequences. If the SPC is predominately syndiotactic polypropylene, then FPC is a copolymer having syndiotactic sequences. It is believed that this matching of stereoregularity increases the compatibility of the components results in improved solubility and compatibility of the polymers of different crystallinities in the polymer blend composition. The aforementioned characteristics of the FPC are preferably achieved by polymerization with a chiral metallocene catalyst. In a further embodiment, the FPC of the present inventive composition comprises crystallizable propylene sequences.

One method to describe the molecular features of an ethylene-propylene copolymer is monomer sequence distribution. Starting with a polymer having a known average composition, the monomer sequence distribution can be determined using spectroscopic analysis. $^{13}C$ NMR can be used for this purpose, and can be used to establish diad and triad distribution via the integration of spectral peaks. (If $^{13}C$ NMR is not used for this analysis, substantially lower $r_1r_2$ products are normally obtained.) The reactivity ratio product is described more fully in Textbook of Polymer Chemistry, F. W. Billmeyer, Jr., Interscience Publishers, New York, p. 221 et seq. (1957).

The reactivity ratio product $r_1$ $r_2$, where $r_1$ is the reactivity of ethylene and $r_2$ is the reactivity of propylene, can be calculated from the measured diad distribution (PP, EE, EP and PE in this nomenclature) by the application of the following formulae:

$$r_1r_2=4(EE)(PP)/(EP)^2$$

$$r_1=K_{11}/K_{12}=[2(EE)/EP]X$$

$$r_2=K_{22}/K_{21}=[2(PP)/(EP)]X$$

$$P=(PP)+(EP/2)$$

$$E=(EE)+(EP/2)$$

where

$$\text{Mol \%}\ E=[(E)/(E+P)]*100$$

X=E/P in reactor
$K_{11}$ and $K_{12}$ are kinetic insertion constants for ethylene
$K_{21}$ and $K_{22}$ are kinetic insertion constants for propylene.

As is known to those skilled in the art, a reactivity ratio product $r_1r_2$ of 0 can define an "alternating" copolymer, and a reactivity ratio product of 1 is said to define a "statistically random" copolymer. In other words, a copolymer having a reactivity ratio product $r_1r_2$ of between 0.6 and 1.5 is generally said to be random (in strict theoretical terms, generally only a copolymer having a reactivity ratio product $r_1r_2$ greater than 1.5 contains relatively long homopolymer sequences and is said to be "blocky"). The copolymer of our invention will have a reactivity ratio product $r_1r_2$ of less than 1.5, or less than 1.3, or less than 1.0, or less than 0.8. The substantially uniform distribution of comonomer within polymer chains of embodiments of our invention generally precludes the possibility of significant amounts of propylene units or sequences within the polymer chain for the molecular weights (weight average) disclosed herein.

## Stereoregularity

The FPC is made with a polymerization catalyst which forms essentially or substantially isotactic polypropylene when all or substantially all propylene sequences in the second polypropylene are isotactic. Nonetheless, the polymerization catalyst used for the formation of the FPC will introduce stereo- and regio-errors in the incorporation of propylene. Stereo errors are those where the propylene inserts in the chain with a tacticity that is not isotactic and the orientation of the adjacent methyl groups is not meso. A regio-error of one kind occurs where the propylene inserts with the methylene group or the methyldiene group adjacent to a similar group in the propylene inserted immediately prior to it. A regio-error of another kind occurs where a propylene inserts in a 1,3 insertion instead of the more usual 1,2 insertion. Such errors are more prevalent after the introduction of a comonomer in the FPC. Thus, the fraction of propylene in isotactic stereoregular sequences (e.g. triads or pentads) is less than 1 for the FPC and decreases with increasing comonomer content of the FPC. While not wanting to be constrained by this theory, the introduction of these errors in the introduction of propylene, particularly in the presence of increasing amounts of comonomer, are important in the use of these propylene copolymers as the FPC. Notwithstanding the presence of these errors, the FPC is statistically random in the distribution of comonomer.

## Triad Tacticity

An ancillary procedure for the description of the tacticity of the propylene units of embodiments of the current invention is the use of triad tacticity. The triad tacticity of a polymer is the relative tacticity of a sequence of three adjacent propylene units, a chain consisting of head to tail bonds, expressed as a binary combination of m and r sequences. It is usually expressed for copolymers of the present invention as the ratio of the number of units of the specified tacticity to all of the propylene triads in the copolymer.

The triad tacticity (mm fraction) of a propylene copolymer can be determined from a $^{13}C$ NMR spectrum of the propylene copolymer and the following formula:

$$\text{mm Fraction} = \frac{PPP(mm)}{PPP(mm) + PPP(mr) + PPP(rr)}$$

where PPP(mm), PPP(mr) and PPP(rr) denote peak areas derived from the methyl groups of the second units in the following three propylene unit chains consisting of head-to-tail bonds:

PPP(mm):

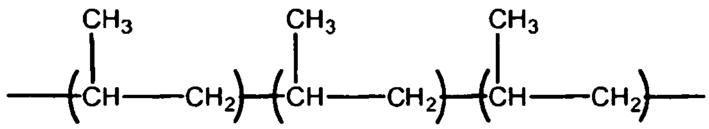

PPP(mr):

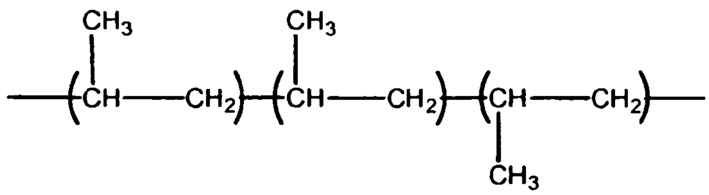

PPP(rr):

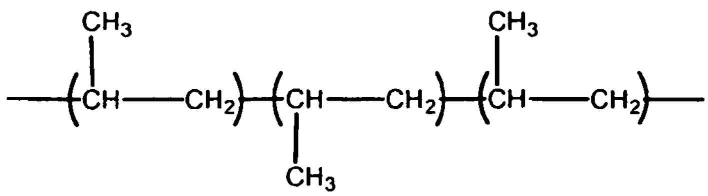

The $^{13}C$ NMR spectrum of the propylene copolymer is measured as described in U.S. Patent No. 5,504,172. The spectrum relating to the methyl carbon region (19 - 23 parts per million (ppm)) can be divided into a first region (21.2 - 21.9 ppm), a second region (20.3 - 21.0 ppm) and a third region (19.5 - 20.3 ppm). Each peak in the spectrum is assigned with reference to an article in the journal Polymer, Volume 30 (1989), page 1350.

In the first region, the methyl group of the second unit in the three propylene unit chain represented by PPP (mm) resonates. In the second region, the methyl group of the second unit in the three propylene unit chain represented by PPP (mr) resonates, and the methyl group (PPE-methyl group) of a propylene unit whose adjacent units are a propylene unit and an ethylene unit resonates (in the vicinity of 20.7 ppm). In the third region, the methyl group of the second unit in the three propylene unit chain represented by PPP (rr) resonates, and the methyl group (EPE-methyl group) of a propylene unit whose adjacent units are ethylene units resonates (in the vicinity of 19.8 ppm).

**Calculation of the Triad Tacticity and Errors in Propylene Insertion**

The calculation of the triad tacticity is outlined in the techniques shown in U.S. Patent No. 5,504,172. Subtraction of the peak areas for the error in propylene insertions (both 2,1 and 1,3) from peak areas from the total peak areas of the second region and the third region, the peak areas based on the 3 propylene units-chains (PPP(mr) and PPP(rr)) consisting of head-to-tail bonds can be obtained. Thus, the peak areas of PPP(mm), PPP(mr) and PPP(rr) can be evaluated, and hence the triad tacticity of the propylene unit chain consisting of head-to-tail bonds can be determined.

The propylene copolymers of embodiments of our invention have a triad tacticity of three propylene units, as measured by $^{13}C$ NMR, of greater than 75%, or greater than 80%, or greater than 82%, or greater than 85%, or greater than 90%.

**Stereo-and Regio-errors in Insertion of Propylene: 2,1 and 1,3 Insertions**

The insertion of propylene can occur to a small extent by either 2,1 (tail to tail) or 1,3 insertions (end to end). Examples of 2,1 insertion is shown in structures 1 and 2 below. Structure (1):

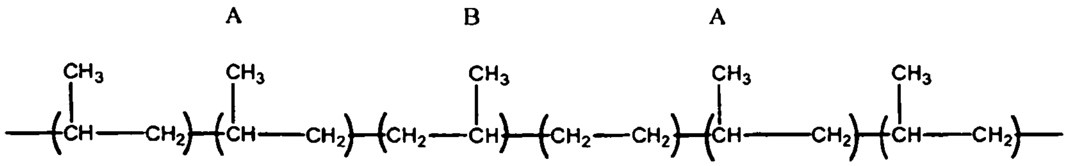

Structure (2):

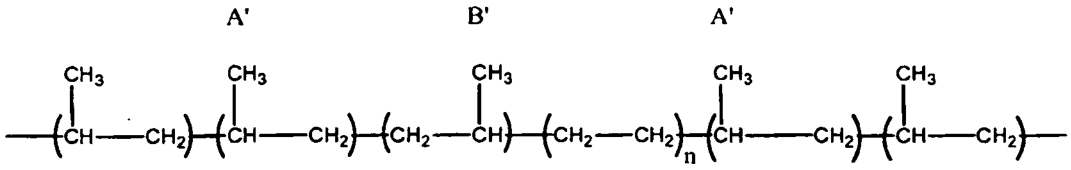

where n ≧ 2.

A peak of the carbon A and a peak of the carbon A' appear in the second region. A peak of the carbon B and a peak of the carbon B' appear in the third region, as described above. Among the peaks which appear in the first to third regions, peaks which are not based on the 3 propylene unit chain consisting of head-to-tail bonds are peaks based on the PPE-methyl group, the EPE-methyl group, the carbon A, the carbon A', the carbon B, and the carbon B'.

The peak area based on the PPE-methyl group can be evaluated by the peak area of the PPE-methine group (resonance in the vicinity of 30.8 ppm), and the peak area based on the EPE-methyl group can be evaluated by the peak area of the EPE-methine group (resonance in the vicinity of 33.1 ppm). The peak area based on the carbon A can be evaluated by twice as much as the peak area of the methine carbon (resonance in the vicinity of 33.9 ppm) to which the methyl group of the carbon B is directly bonded; and the peak area based on the carbon A' can be evaluated by the peak area of the adjacent methine carbon (resonance in the vicinity of 33.6 ppm) of the methyl group of the carbon B'. The peak area based on the carbon B can be evaluated by the peak area of the adjacent methine carbon (resonance in the vicinity of 33.9 ppm); and the peak area based on the carbon B' can be also evaluated by the adjacent methine carbon (resonance in the vicinity of 33.6 ppm).

By subtracting these peak areas from the total peak areas of the second region and the third region, the peak areas based on the three propylene unit chains (PPP(mr) and PPP(rr)) consisting of head-to-tail bonds can be obtained. Thus, the peak areas of PPP(mm), PPP(mr) and PPP(rr) can be evaluated, and the triad tacticity of the propylene unit chain consisting of head-to-tail bonds can be determined.

The proportion of the 2,1-insertions to all of the propylene insertions in a propylene elastomer is calculated by the following formula with reference to article in the journal Polymer, vol. 30 (1989), p.1350.

$$\text{Proportion of inversely inserted unit based on 2,1-insertion (\%)} = \frac{0.25 I\alpha\beta(structure(i)) + 0.5 I\alpha\beta(structure(ii))}{I\alpha\alpha + I\alpha\beta(structure(ii)) + 0.5(I\alpha\gamma + I\alpha\beta(structure(i)) + I\alpha\delta)} x100$$

Naming of the peaks in the above formula is made in accordance with a method by Carman, et al. in the journal Rubber Chemistry and Technology, volume 44 (1971), page 781, where $1_{\alpha\delta}$ denotes a peak area of the $\alpha\delta^+$ secondary carbon peak. It is difficult to separate the peak area of Iα β (structure (i)) from Iαβ (structure (ii)) because of overlapping of the peaks. Carbon peaks having the corresponding areas can be substituted therefore.

The measurement of the 1,3 insertion requires the measurement of the βγ peak. Two structures can contribute to the βγ peak: (1) a 1,3 insertion of a propylene monomer; and (2) from a 2,1-insertion of a propylene monomer followed by two ethylene monomers. This peak is described as the 1,3 insertion peak and we use the procedure described in U.S. Patent No. 5,504,172, which describes this βγ peak and understand it to represent a sequence of four methylene units. The proportion (%) of the amount of these errors is determined by dividing the area of the βγ peak (resonance in the vicinity of 27.4 ppm) by the sum of all the methyl group peaks and ½ of the area of the β γ peak, and then multiplying the resulting value by 100. If an α-olefin of three or more carbon atoms is polymerized using an olefin polymerization catalyst, a number of inversely inserted monomer units are present in the molecules of the resultant olefin polymer. In polyolefins prepared by polymerization of α-olefins of three or more carbon atoms in the presence of a chiral metallocene catalyst, 2,1-insertion or 1,3-insertion takes place in addition to the usual 1,2-insertion, such that inversely inserted units

such as a 2,1-insertion or a 1,3-insertion are formed in the olefin polymer molecule (see, Macromolecular Chemistry Rapid Communication, Volume 8, page 305 (1987), by K. Soga, T. Shiono, S. Takemura and W. Kaminski).

The proportion of inversely inserted propylene units of embodiments of our invention, based on the 2,1-insertion of a propylene monomer in all propylene insertions, as measured by $^{13}C$ NMR, is greater than 0.5% or greater than 0.6%.

The proportion of inversely inserted propylene units of embodiments of our invention, based on the 1,3-insertion of a propylene monomer, as measured by $^{13}C$ NMR, is greater than 0.05%, or greater than 0. 06%, or greater than 0.07%, or greater than 0.08%, or greater than 0.085%.

## Intermolecular Structure

### Homogeneous Distribution

Homogeneous distribution is defined as a statistically insignificant intermolecular difference of both in the composition of the copolymer and in the tacticity of the polymerized propylene. For a copolymer to have a homogeneous distribution it must meet the requirement of two independent tests: (i) intermolecular distribution of tacticity; and (ii) intermolecular distribution of composition, which are described below. These tests are a measure of the statistically insignificant intermolecular differences of tacticity of the polymerized propylene and the composition of the copolymer, respectively.

### Intermolecular Distribution of Tacticity

The copolymer of embodiments of our invention has a statistically insignificant intermolecular difference of tacticity of polymerized propylene between different chains (intermolecularly). This is determined by thermal fractionation by controlled dissolution generally in a single solvent, at a series of slowly elevated temperatures. A typical solvent is a saturated hydrocarbon such as hexane or heptane. These controlled dissolution procedures are commonly used to separate similar polymers of different crystallinity due to differences in isotactic propylene sequences, as shown in the article in Macromolecules, Vol. 26, p2064 (1993). For the copolymers of embodiments of our invention where the tacticity of the propylene units determines the extent of crystallinity, we expected this fractionation procedure will separate the molecules according to tacticity of the incorporated propylene. This procedure is described below.

In embodiments of our invention, at least 75% by weight, or at least 80% by weight, or at least 85% by weight, or at least 90% by weight, or at least 95% by weight, or at least 97% by weight, or at least 99% by weight of the copolymer is soluble in a single temperature fraction, or in two adjacent temperature fractions, with the balance of the copolymer in immediately preceding or succeeding temperature fractions. These percentages are fractions, for instance in hexane, beginning at 23 ˚C and the subsequent fractions are in approximately 8 ˚C increments above 23 ˚C. Meeting such a fractionation requirement means that a polymer has statistically insignificant intermolecular differences of tacticity of the polymerized propylene.

Fractionations have been done where boiling pentane, hexane, heptane and even di-ethyl ether are used for the fractionation. In such boiling solvent fractionations, polymers of embodiments of our invention will be totally soluble in each of the solvents, offering no analytical information. For this reason, we have chosen to do the fractionation as referred to above and as detailed herein, to find a point within these traditional fractionations to more fully describe our polymer and the surprising and unexpected insignificant intermolecular differences of tacticity of the polymerized propylene.

### Intermolecular Composition and Tacticity Distribution Determination

Intermolecular composition distribution of the copolymer is measured as described below. Nominally 30 grams of the copolymer is cut into small cubes with about ⅛" (3 mm) sides. This is introduced into a thick-walled glass bottle with a screw cap closure, along with 50 mg of Irganox 1076, an antioxidant commercially available from Ciba-Geigy Corporation. Then, 425 mL of hexane (a principal mixture of normal and iso isomers) is added to the bottle and the sealed bottle is maintained at 23 ˚C for 24 hours. At the end of this period, the solution is decanted and the residue is treated with additional hexane for an additional 24 hours. At the end of this period, the two hexane solutions are combined and evaporated to yield a residue of the polymer soluble at 23 ˚C. To the residue is added sufficient hexane to bring the volume to 425 mL and the bottle is maintained at 31 ˚C for 24 hours in a covered circulating water bath. The soluble polymer is decanted and an additional amount of hexane is added for another 24 hours at 31 ˚C prior to decanting. In this manner, fractions of the copolymers soluble at 40 ˚C, 48 ˚C, 55 ˚C and 62 ˚C are obtained at temperature increases of approximately 8 ˚C between stages. Increases in temperature to 95 ˚C can be accommodated if heptane, instead of hexane, is used as the solvent for all temperatures above about 60 ˚C. The soluble polymers are dried, weighed and analyzed for composition, as wt% ethylene content, by the IR technique described above. Soluble fractions obtained in

the adjacent temperature fractions are the adjacent fractions in the specification above.

**Intermolecular Distribution of Composition**

The copolymer of embodiments of our invention has statistically insignificant intermolecular differences of composition, which is the ratio of propylene to ethylene between different chains (intermolecular). This compositional analysis is by infrared spectroscopy of the fractions of the polymer obtained by the controlled thermal dissolution procedure described above.

A measure of the statistically insignificant intermolecular differences of composition, each of these fractions has a composition (wt% ethylene content) with a difference of less than 1.5 wt% (absolute) or less than 1.0 wt% (absolute), or less than 0.8 wt% (absolute) of the average wt% ethylene content of the whole copolymer. Meeting such a fractionation requirement means that a polymer has statistically insignificant intermolecular differences of composition, which is the ratio of propylene to ethylene.

**Intramolecular Distribution of Tacticity**

The copolymer of embodiments of our invention has statistically insignificant intramolecular differences of tacticity, which is due to isotactic orientation of the propylene units along the segments of the same chain. This compositional analysis is inferred from the detailed analysis of the differential scanning calorimetry, electron microscopy and relaxation measurement ($T_{1\rho}$). In the presence of significant intramolecular differences in tacticity, 'stereoblock' structures, where the number of isotactic propylene residues adjacent to one another is much greater than statistically expected, would form. Further, the melting point of these polymers depends on the crystallinity, since the more blocky polymers should have a higher melting point as well as depressed solubility in room temperature solvents.

**Uniformity**

Uniformity is defined to be a statistically insignificant intramolecular difference of both the composition of the copolymer and in the tacticity of the polymerized propylene. For a copolymer to be uniform it must meet the requirement of two independent tests: (i) intramolecular distribution of tacticity; and (ii) intramolecular distribution of composition, described below. These tests measure the statistically insignificant intramolecular differences of tacticity of the polymerized propylene and the composition of the copolymer, respectively.

**Intramolecular Distribution of Composition**

The copolymer of embodiments of our invention has statistically insignificant intramolecular differences of composition, which is the ratio of propylene to ethylene along the segments of the same chain. This compositional analysis is inferred from the process used for the synthesis of these copolymers as well as the results of the sequence distribution analysis of the copolymer, for weight average molecular weights in the range of from 15,000 - 5,000,000 or 20,000 - 1,000,000.

**Melting Point and Crystallinity**

The FPC has a single melting point. The melting point is determined by DSC. The FPC has a melting point ranging from an upper limit of less than 110 ˚C, or less than 90 ˚C, or less than 80 ˚C, or less than 70 ˚C, to a lower limit of greater than 25 ˚C, or greater than 35 ˚C, or greater than 40 ˚C, or greater than 45 ˚C. Generally, the FPC of the present invention has a melting point between about 105 ˚C and 0 ˚C. Preferably, the melting point is between about 90 ˚C and 20 ˚C. Most preferably, the first polymer component has a heat of fusion ranging from a lower limit of greater than 1.0 joule per gram (J/g), or greater than 1.5 J/g, or greater than 4.0 J/g, or greater than 6.0 J/g, or greater than 7.0 J/g, to an upper limit of less than 125 J/g, or less than 100 J/g, or less than 75 J/g, or less than 60 J/g, or less than 50 J/g, or less than 40 J/g, or less than 30 J/g. Alternatively, either the lower limit or the higher limit may be present (i.e. the first polymer component has a heat of fusion of less than 50 J/g). Without wishing to be bound by theory, we believe that the copolymers of embodiments of our invention have generally isotactic crystallizable propylene sequences, and the above heats of fusion are believed to be due to the melting of these crystalline segments.

In another embodiment, the copolymers of the invention have a heat of fusion that can be calculated by application of the following formula:

$$H_f > 311*(E-18.5)^2 / T$$

wherein:
$H_f$=the heat of fusion, measured as described below
E=the ethylene content (meaning units derived from ethylene) of the copolymer, measured as described below; and T is the polymerization temperature of the FPC.

**Molecular Weight and Polydispersity Index**

Molecular weight distribution (MWD) is a measure of the range of molecular weights within a given polymer sample. It is well known that the breadth of the MWD can be characterized by the ratios of various molecular weight averages, such as the ratio of the weight average molecular weight to the number average molecular weight, Mw/Mn, or the ratio of the Z-average molecular weight to the weight average molecular weight, Mz/Mw.

Mz, Mw and Mn can be measured using gel permeation chromatography (GPC), also known as size exclusion chromatography (SEC). In a typical measurement, the GPC instrument used is a Waters chromatograph equipped with ultrastyro gel columns operated at 145 ˚C. The elution solvent used is trichlorobenzene. The columns are calibrated using sixteen polystyrene standards of precisely known molecular weights. A correlation of polystyrene retention volume obtained from the standards, to the retention volume of the polymer tested yields the polymer molecular weight.

Average molecular weights M can be computed from the expression:

$$M = \frac{\sum_i N_i M_i^{n+1}}{\sum_i N_i M_i^n}$$

where $N_i$ is the number of molecules having a molecular weight $M_i$. When n = 0, M is the number average molecular weight Mn. When n = 1, M is the weight average molecular weight Mw. When n = 2, M is the Z-average molecular weight Mz. The desired MWD function (e.g., Mw/Mn or Mz/Mw) is the ratio of the corresponding M values. Measurement of M and MWD is well known in the art and is discussed in more detail in, for example, Slade, P. E. Ed., Polymer Molecular Weights Part II, Marcel Dekker, Inc., NY, (1975) 287-368; Rodriguez, F., Principles of Polymer Systems 3rd ed., Hemisphere Pub. Corp., NY, (1989) 155-160; U.S. Patent No. 4,540,753; Verstrate et al., Macromolecules, vol. 21, (1988) 3360; and references cited therein.

In embodiments of our invention, a copolymer is included having a weight average molecular weight (Mw) of from 10,000 - 5,000,000 or from 20,000 - 1,000,000 and a molecular weight distribution Mw/Mn (sometimes referred to as a "polydispersity index" (PDI)) ranging from a lower limit of 1.5 or 1. 8 to an upper limit of 40 or 20 or 10 or 5 or 3.

**Melt Flow Rate at 230 ˚C**

In one embodiment, the FPC has a MFR @ 230 ˚C of from a low of 2000 to a high of 3000 where all of the above MFRs are shown in g/10 min.

**Process of manufacture**

The polymerization process is a single stage, steady state, polymerization conducted in a well-mixed continuous feed polymerization reactor. The polymerization can be conducted in solution, although other polymerization procedures such as gas phase or slurry polymerization, which fulfils the requirements of single stage polymerization and continuous feed reactors, are contemplated.

The process can be described as a continuous, non-batch process that, in its steady state operation, is exemplified by removal of amounts of polymer made per unit time, being substantially equal to the amount of polymer withdrawn from the reaction vessel per unit time. By "substantially equal" we intend that these amounts, polymer made per unit time, and polymer withdrawn per unit time, are in ratios of one to other, of from 0.9:1; or 0.95:1; or 0.97:1; or 1:1. In such a reactor, there will be a substantially homogeneous monomer distribution. At the same time, the polymerization is accomplished in substantially single step or stage or in a single reactor, contrasted to multistage or multiple reactors (two or more). These conditions exist for substantially all of the time the copolymer is produced.

Generally, without limiting in any way the scope of the invention, one means for carrying out a process of the

present invention for the production of the FPC is as follows: (1) liquid propylene is introduced in a stirred-tank reactor which is completely or partly full of liquid comprising the solvent, the FPC as well as dissolved, unreacted monomer(s) as well as catalyst components; (2) the catalyst system is introduced via nozzles in either the vapor or liquid phase; (3) feed ethylene gas, and optionally the higher alpha olefins are introduced either into the vapor phase of the reactor, or sparged into the liquid phase as is well known in the art; (4) the reactor contains a liquid phase composed substantially of propylene, together with dissolved ethylene, and a vapor phase containing vapors of all monomers; (5) the reactor temperature and pressure may be controlled via reflux of vaporizing propylene (autorefrigeration), as well as by cooling coils, jackets, etc.; (6) the polymerization rate is controlled by the concentration of catalyst, temperature; and (7) the ethylene content of the polymer product is determined by the ratio of ethylene to propylene in the reactor, which is controlled by manipulating the relative feed rates of these components to the reactor.

For example, a typical polymerization process consists of a polymerization in the presence of a catalyst comprising a chiral bis(cyclopentadienyl) metal compound and either 1) a non-coordinating compatible anion activator, or 2) an alumoxane activator. An exemplary catalyst system is described in U.S. Patent No. 5,198,401. The alumoxane activator is preferably utilized in an amount to provide a molar aluminum to metallocene ratio of from about 1:1 to about 20,000:1 or more. The non-coordinating compatible anion activator is preferably utilized in an amount to provide a molar ratio of biscyclopentadienyl metal compound to non-coordinating anion of 10:1 to about 2:3. The above polymerization reaction is conducted by reacting such monomers in the presence of such catalyst system at a temperature of from about -50 °C to about 200 °C for a time of from about 1 second to about 10 hours to produce a co(ter)polymer having a MFR between 300 and 5000 and a PDI (polydispersity index) measured by GPC from about 1.8 to about 4.5.

While the process of the present invention includes utilizing a catalyst system in the liquid phase (slurry, solution, suspension or bulk phase or combination thereof), gas phase polymerization can also be utilized. When utilized in a gas phase, slurry phase or suspension phase polymerization, the catalyst systems will preferably be supported catalyst systems. See, for example, U.S. Patent No. 5,057,475. Such catalyst systems can also include other well-known additives such as, for example, scavengers. See, for example, U.S. Patent No. 5,153,157. These processes may be employed without limitation of the type of reaction vessels and the mode of conducting the polymerization. As stated above, and while it is also true for systems utilizing a supported catalyst system, the liquid phase process comprises the steps of contacting ethylene and propylene with the catalyst system in a suitable polymerization diluents and reacting the monomers in the presence of the catalyst system for a time and at a temperature sufficient to produce an ethylene-propylene copolymer of the desired molecular weight and composition.

According to another embodiment of the present invention, the FPC may contain small quantities of a non-conjugated diene to aid in the vulcanization and other chemical modification of the blends. The amount of diene is preferably less than 10 wt% and preferably less than 5 wt%. The diene may be selected from the group consisting of those which are used for the vulcanization of ethylene propylene rubbers and are preferably ethylidene norbornene, vinyl norbornene and dicyclopentadiene. Lesser amounts of diene, typically less than 4 wt%, may also be used to aid in the formation of star or branched architecture of the polymer which are expected to have beneficial effects in the formation and the processing of the blends of the invention.

## Catalysts and Activators for Copolymer Production

### Catalysts

A typical isotactic polymerization process consists of a polymerization in the presence of a catalyst including a bis(cyclopentadienyl) metal compound and either (1) a non-coordinating compatible anion activator, or (2) an alumoxane activator. According to one embodiment of the invention, this process comprises the steps of contacting ethylene and propylene with a catalyst in suitable polymerization diluents, the catalyst including, in one embodiment, a chiral metallocene compound, e.g., a bis(cyclopentadienyl) metal compound as described in U.S. Patent No. 5,198,401, and an activator. U.S. Patent No. 5,391,629 also describes catalysts useful to produce the copolymers of our invention.

The catalyst system described below useful for making the copolymers of embodiments of our invention, is a metallocene with a non-coordinating anion (NCA) activator, and optionally a scavenging compound. Polymerization is conducted in a solution, slurry or gas phase. The polymerization can be performed in a single reactor process. A slurry or solution polymerization process can utilize sub-or super atmospheric pressures and temperatures in the range of from -25 °C to 110 °C. In a slurry polymerization, a suspension of solid, particulate polymer is formed in a liquid polymerization medium to which ethylene, propylene, hydrogen and catalyst are added. In solution polymerization, the liquid medium serves as a solvent for the polymer. The liquid employed as the polymerization medium can be an alkane or a cycloalkane, such as butane, pentane, hexane, or cyclohexane, or an aromatic hydrocarbon, such as toluene, ethylbenzene or xylene. For slurry polymerization, liquid monomer can also be used. The medium employed should be liquid under the conditions of the polymerization and relatively inert. Hexane or toluene can be employed for solution polymerization. Gas phase polymerization processes are described in U.S. Patent Nos. 4,543,399; 4,588,790; 5,028,670, for

example. The catalyst can be supported on any suitable particulate material or porous carrier, such as polymeric supports or inorganic oxides, such as, for example silica, alumina or both. Methods of supporting metallocene catalysts are described in U.S. Patent Nos. 4,808,561; 4,897,455; 4,937,301; 4,937,217; 4,912,075; 5,008,228; 5,086,025; 5,147,949; and 5,238,892.

Propylene and ethylene are the monomers that can be used to make the copolymers of embodiments of our invention, but optionally, ethylene can be replaced or added to in such polymers with a C4 to C20 $\alpha$-olefin, such as, for example, 1-butene, 4-methyl-1-pentene, 1-hexene or 1-octene.

## Metallocene

The terms "metallocene" and "metallocene catalyst precursor" are terms known in the art to mean compounds possessing a Group 4, 5, or 6 transition metal M, with a cyclopentadienyl (Cp) ligand or ligands which may be substituted, at least one non-cyclopentadienyl-derived ligand X, and zero or one heteroatom-containing ligand Y, the ligands being coordinated to M and corresponding in number to the valence thereof. The metallocene catalyst precursors generally require activation with a suitable co-catalyst (sometimes referred to as an activator) in order to yield an active metallocene catalyst, i.e., an organometallic complex with a vacant coordination site that can coordinate, insert, and polymerize olefins.

Preferred metallocene are cyclopentadienyl complexes which have two Cp ring systems as ligands. The Cp ligands preferably form a bent sandwich complex with the metal, and are preferably locked into a rigid configuration through a bridging group. These cyclopentadienyl complexes have the general formula:

$$(Cp^1R^1_m)R^3_n\ (Cp^2R^2_p)MX_q$$

wherein $Cp^1$ and $Cp^2$ are preferably the same; $R^1$ and $R^2$ are each, independently, a halogen or a hydrocarbyl, halocarbyl, hydrocarbyl-substituted organometalloid or halocarbyl-substituted organometalloid group containing up to 20 carbon atoms; m is preferably 1 to 5; p is preferably 1 to 5; preferably two $R^1$ and/or $R^2$ substituents on adjacent carbon atoms of the cyclopentadienyl ring associated therewith can be joined together to form a ring containing from 4 to 20 carbon atoms; $R^3$ is a bridging group; n is the number of atoms in the direct chain between the two ligands and is preferably 1 to 8, most preferably I to 3; M is a transition metal having a valence of from 3 to 6, preferably from group 4, 5, or 6 of the periodic table of the elements, and is preferably in its highest oxidation state; each X is a non-cyclopentadienyl ligand and is, independently, a hydrocarbyl, oxyhydrocarbyl, halocarbyl, hydrocarbyl-substituted organometalloid, oxyhydrocarbyl-substituted organometalloid or halocarbyl-substituted organometalloid group containing up to 20 carbon atoms; and q is equal to the valence of M minus 2.

Numerous examples of the biscyclopentadienyl metallocenes described above for the invention are disclosed in U.S. Patent Nos. 5,324,800; 5,198,401; 5,278,119; 5,387,568; 5,120,867; 5,017,714; 4,871,705; 4,542,199; 4,752,597; 5,132,262; 5,391,629; 5,243,001; 5,278,264; 5,296,434; and 5,304,614.

Illustrative, but not limiting examples of preferred biscyclopentadienyl metallocenes of the type described above are the racemic isomers of:

$\mu$-$(CH_3)_2Si(indenyl)_2M(Cl)_2$,
$\mu$-$(CH_3)_2Si(indenyl)_2M(CH_3)_2$,
$\mu$-$(CH_3)_2Si(tetrahydroindenyl)_2M(Cl)_2$,
$\mu$-$(CH_3)_2Si(tetrahydroindenyl)_2M(CH_3)_2$,
$\mu$-$(CH_3)_2Si(indenyl)_2M(CH_2CH_3)_2$, and
$\mu$-$(C_6H_5)_2C(indenyl)_2M(CH_3)_2$,
wherein M is Zr, Hf, or Ti.

## Non-coordinating Anions

As already mentioned, the metallocene or precursor is activated with a non-coordinating anion. The term "non-coordinating anion" means an anion which either does not coordinate to the transition metal cation or which is only weakly coordinated to the cation, thereby remaining sufficiently labile to be displaced by a neutral Lewis base. "Compatible" non-coordinating anions are those which are not degraded to neutrality when the initially formed complex decomposes. Further, the anion will not transfer an anionic substituent or fragment to the cation so as to cause it to form a neutral four coordinate metallocene compound and a neutral by-product from the anion. Non-coordinating anions useful in accordance with this invention are those which are compatible, stabilize the metallocene cation in the sense of balancing its ionic charge, and yet retain sufficient lability to permit displacement by an ethylenically or acetylenically unsaturated monomer during polymerization. Additionally, the anions useful in this invention may be large or bulky in the sense of sufficient molecular size to largely inhibit or prevent neutralization of the metallocene cation by Lewis bases

other than the polymerizable monomers that may be present in the polymerization process. Typically the anion will have a molecular size of greater than or equal to 4 angstroms.

Descriptions of ionic catalysts for coordination polymerization including metallocene cations activated by non-coordinating anions appear in the early work in EP-A-0 277 003, EP-A-0 277 004, U.S. Patent Nos. 5,198,401 and 5,278,119, and WO 92/00333. These references suggest a method of preparation wherein metallocenes (bis Cp and mono Cp) are protonated by anionic precursors such that an alkyl/hydride group is abstracted from a transition metal to make it both cationic and charge-balanced by the non-coordinating anion. The use of ionizing ionic compounds not containing an active proton but capable of producing both the active metallocene cation and a non-coordinating anion are also known. See, EP-A-0 426 637, EP-A-0 573 403 and U.S. Patent No. 5,387,568. Reactive cations other than Bronsted acids capable of ionizing the metallocene compounds include ferrocenium, triphenylcarbonium, and triethylsilylium cations. Any metal or metalloid capable of forming a coordination complex which is resistant to degradation by water (or other Bronsted or Lewis acids) may be used or contained in the anion of the second activator compound. Suitable metals include, but are not limited to, aluminum, gold, platinum and the like. Suitable metalloids include, but are not limited to, boron, phosphorus, silicon and the like.

An additional method of making the ionic catalysts uses ionizing anionic precursors which are initially neutral Lewis acids but form the cation and anion upon ionizing reaction with the metallocene compounds. For example tris (pentafluorophenyl) boron acts to abstract an alkyl, hydride or silyl ligand to yield a metallocene cation and stabilizing non-coordinating anion; see EP-A-0 427 697 and EP-A-0 520 732. Ionic catalysts for addition polymerization can also be prepared by oxidation of the metal centers of transition metal compounds by anionic precursors containing metallic oxidizing groups along with the anion groups; see EP-A-0 495 375.

Illustrative, but not limiting, examples of suitable activators capable of ionic cationization of the metallocene compounds of the invention, and consequent stabilization with a resulting non-coordinating anion, include:

trialkyl-substituted ammonium salts such as: triethylammonium tetraphenylborate;
tripropylammonium tetraphenylborate; tri(n-butyl)ammonium tetraphenylborate;
trimethylammonium tetrakis(p-tolyl)borate; trimethylammonium tetrakis(o-tolyl)borate;
tributylammonium tetrakis(pentafluorophenyl)borate; tripropylammonium tetrakis(o,p-dimethylphenyl)borate; tributylammonium tetrakis(m,m-dimethylphenyl)borate;
tributylammonium tetrakis(p-trifluoromethylphenyl)borate; tributylammonium tetrakis(pentafluorophenyl)borate; tri (n-butyl)ammonium tetrakis(o-tolyl)borate and the like;
N,N-dialkyl anilinium salts such as: N,N-dimethylanilinium tetrakis(pentafluorophenyl)borate;
N,N-dimethylanilinium tetrakis(heptafluoronaphthyl)borate; N,N-dimethylanilinium tetrakis(perfluoro-4-biphenyl)borate; N,N-dimethylanilinium tetraphenylborate;
N,N-diethylanilinium tetraphenylborate; N,N-2,4,6-pentamethylanilinium tetraphenylborate and the like; dialkyl ammonium salts such as: di-(isopropyl)ammonium tetrakis(pentafluorophenyl)borate; dicyclohexylammonium tetraphenylborate and the like; and
triaryl phosphonium salts such as: triphenylphosphonium tetraphenylborate;
tri(methylphenyl)phosphonium tetraphenylborate; tri(dimethylphenyl)phosphonium tetraphenylborate and the like.

Further examples of suitable anionic precursors include those comprising a stable carbonium ion, and a compatible non-coordinating anion.

A catalyst system of $\mu$-$(CH_3)_2Si(indenyl)_2Hf(CH_3)_2$ with a cocatalyst of N,N-dimethylanilinium tetrakis(pentafluorophenyl)borate, can be used.

In a preferred embodiment, the activating cocatalyst, precursor ionic compounds comprise anionic Group 13 element complexes having four halogenated aromatic ligands typically bulkier than substituted tetraphenyl boron compounds of the exemplified in the identified prior art. These invention aromatic ligands consist of polycyclic aromatic hydrocarbons and aromatic ring assemblies in which two or more rings (or fused ring systems) are joined directly to one another or together. These ligands, which may be the same or different, are covalently bonded directly to the Group 13 metalloid atom. In a preferred embodiment the aryl groups of said halogenated tetraaryl Group 13 element anionic complex comprise at least one fused polycyclic aromatic hydrocarbon or pendant aromatic ring. Indenyl, napthyl, anthracyl, heptalenyl and biphenyl ligands are exemplary. The number of fused aromatic rings is unimportant so long as the ring junctions and especially the atom chosen as the point of connection to the Group 13 element center permit an essentially tetrahedral structure. Thus, for example, suitable ligands include those illustrated below, the open bond being to the Group 13 atom. See also the polycyclic compound examples in the literature for additional ligand selection, e.g., Nomenclature of Organic Compounds, Chs. 4-5 (ACS, 1974).

The choice of ligand connection point is particularly important. Substituents or ring junctions ortho to the ligand connection point present such steric bulk that adoption of an essentially tetrahedral geometry is largely precluded.

Examples of undesirable connection points are depicted below.

Suitable mixed-ligand Group 13 complexes can include fused rings or ring assemblies with ortho-substituents, or ring junctions, so long as those ligands do not exceed two in number. Thus Group 13 anions with one or two hindered fused ring aromatics with three or two unhindered ligands, where hindered aromatics are those having ortho substituents or ring junctions (illustration II) and unhindered are those without (illustration I), will typically be suitable. Tris(perfluorophenyl) (perfluoroanthracyl)borate is an illustrative complex. In this complex the anthracyl ligand is a hindered fused ring having ortho-substituents but its use with three unhindred phenyl ligands allows the complex to adopt a tetrahedral structure. Thus, generically speaking, the Group 13 complexes useful in a accordance with the invention will typically conform to the following formula:

$$[M(A)_{4-n}(B)_n]^+$$

where, M is a Group 13 element, A is an unhindered ligand as described above, B is a hindered ligand as described above, and n=1,2.

For both fused aromatic rings and aromatic ring assemblies, halogenation is highly preferred so as to allow for increased charge dispersion that contributes along with steric bulk as independent features decreasing the likelihood of ligand abstraction by the strongly Lewis acidic metallocene cation formed in the catalyst activation. Further, halogenation inhibits reaction of the hafnium cation with any remaining carbon-hydrogen bonds of the aromatic rings, and perhalogenation precludes potential undesirable reactions. It is preferred that at least one third of hydrogen atoms on carbon atoms of the aryl ligands can be replaced by halogen atoms, and more preferred that the aryl ligands be perhalogenated. Fluorine is the most preferred halogen.

Means of preparing ionic catalyst systems comprising catalytically active cations of the hafnium compounds and suitable noncoordinating anions are conventionally known, see for example U.S. Patent No. 5,198,401, WO 92/00333, and WO 97/22639. Typically the methods comprise obtaining from commercial sources or synthesizing the selected transition metal compounds comprising an abstractable ligand, e.g., hydride, alkyl or silyl group, and contacting them with a noncoordinating anion source or precursor compound in a suitable solvent. The anion precursor compound abstracts a univalent hydride, alkyl or silyl ligand that completes the valency requirements of the preferred hafnium metallocene compounds. The abstraction leaves the hafnocenes in a cationic state which is counterbalanced by the stable, compatible and bulky, noncoordinating anions according to the invention.

The noncoordinating anions are preferably introduced into the catalyst preparation step as ionic compounds having an essentially cationic complex which abstracts a non-cyclopentadienyl, labile ligand of the transition metal compounds which upon abstraction of the non-cyclopentadienyl ligand, leave as a by-product the noncoordinating anion portion. Hafnium compounds having labile hydride, alkyl, or silyl ligands on the metal center are highly preferred for the ionic catalyst systems of this invention since known in situ alkylation processes may result in competing reactions and interactions that tend to interfere with the overall polymerization efficiency under high temperature conditions in accordance with the preferred process embodiments of the invention.

Suitable cations for precursor compounds capable of providing the noncoordinating anions of the invention cocatalysts include those known in the art. Such include the nitrogen-containing cations such as those in U.S. Patent No. 5,198,401, the carbenium, oxonium or sulfonium cations of U.S. Patent No. 5,387,568, metal cations, e.g., $Ag^+$, the silylium cations of WO 96/08519, and the hydrated salts of Group I or 2 metal cations of WO 97/22635. Each of the documents of this paragraph are incorporated by reference for purposes of U.S. patent practice.

Examples of preferred precursor salts of the noncoordinating anions capable of ionic cationization of the metallocene compounds of the invention, and consequent stabilization with a resulting noncoordinating anion include trialkyl-substituted ammonium salts such as triethylammonium tetrakis(perfluoronapthyl) or tetrakis(perfluoro-4-biphenyl)boron, tripropylammonium tetrakis(perfluoronapthyl) or tetrakis(perfluoro-4-biphenyl)boron, tri(n-butyl)ammonium tetrakis(perfluoronapthyl) or tetrakis(perfluoro-4-biphenyl)boron, trimethylammonium tetrakis(perfluoronapthyl) or tetrakis(perfluoro-4-biphenyl)boron, trimethylammonium tetra tetrakis(perfluoronapthyl) or tetrakis(perfluoro-4-biphenyl)boron, tributylammonium tetrakis(perfluoronapthyl) or tetrakis(perfluoro-4-biphenyl)boron, tripropylammonium tetrakis(perfluoronapthyl) or tetrakis(perfluoro-4-biphenyl), tributylammonium tetrakis(perfluoronapthyl) or tetrakis(perfluoro-4-biphenyl)boron, tributylammonium tetrakis(perfluoronapthyl) or tetrakis(perfluoro-4-biphenyl)boron, tributylammonium tetrakis(perfluoronapthyl) or tetrakis(perfluoro-4-biphenyl)boron, tri(n-butyl)ammonium tetrakis(perfluoronapthyl) or tetrakis(perfluoro-4-biphenyl)boron and the like; N,N-dialkyl anilinium salts such as N,N-dimethylanilinium tetrakis(perfluoronapthyl) or tetrakis(perfluoro-4-biphenyl)boron, N,N-diethylanilinium tetrakis(perfluoronapthyl) or tetrakis(perfluoro-4-biphenyl)boron, N,N-2, 4,6-pentamethylanilinium tetrakis(perfluoronapthyl) or tetrakis(perfluoro-4-biphenyl)boron and the like; dialkyl ammonium salts such as di-(isopropyl)ammonium tetrakis(perfluoronapthyl) or tetrakis(perfluoro-4-biphenyl)boron, dicyclohexylammonium tetrakis(perfluoronapthyl) or tetrakis(perfluoro-4-biphenyl)boron and the like; and triaryl phosphonium salts such as triphenylphosphonium tetrakis(perfluoronapthyl) or tetrakis(perfluoro-4-biphenyl)boron, tri(methylphenyl)phosphonium tetrakis(per-fluoronapthyl) or tetrakis(perfluoro-4-biphenyl)boron, tri(dimethylphenyl)phosphonium

tetrakis(perfluoronapthyl) or tetrakis(perfluoro-4-biphenyl)boron and the like.

Further examples of suitable anionic precursors include those comprising a stable carbenium ion, and a compatible non-coordinating anion.

In yet another embodiment, the NCA portion comprises an acetylene group and is sometimes referred to as an "acetyl-aryl" moiety. A distinguishing feature of invention NCAs is the presence of an acetylenic functional group bound to a Group-13 atom. The Group-13 atom also connects to at least one fluorinated ring moiety: monofluorinated up through perfluorinated. In addition to a first ring moiety, the Group-13 atom has two other ligands that may also be ring moieties similar to or different from the first ring moiety and may be monofluorinated to perfluorinated. The goal of fluorination is to reduce the number of abstractable hydrogen. A ligand is referred to as substantially fluorinated when enough hydrogen has been fluorine-replaced so that the amount of remaining abstractable hydrogen is small enough that it does not interfere with commercial polymerization.

The cationic portion of activators according to this embodiment preferably has the form $R_3PnH$, wherein R represents an alkyl or aryl moiety; Pn represents a pnictide; N, P, or As; and H is hydrogen. Suitable R embodiments are shown below. This list does not limit the scope of the invention; any R that allows the cationic portion to function as described is within the scope of this invention. R includes, but is not limited to, methyl, phenyl, ethyl, propyl, butyl, hexyl, octyl, nonyl, 3-ethylnonyl, isopropyl, n-butyl, cyclohexyl, benzyl, trimethylsilyl, triethylsilyl, tri-n-propylsilyl, tri-isopropylsilyl, methylethylhexylsilyl, diethylnonlysilyl, triethylsilylpropyl, 2,2-dimethyloctyl, triethylsilylethyl, tri-n-propylsilylhexyl, tri-isopropylsilyloctyl, and methyldiethylsilyloctyl.

The single sited metallocene catalysts preferred for use in the present invention leads to polymers which are not compositionally and tactically homogeneous, both intramolecular and intermolecular, but also have a lower crystallinity lower ethylene content than the catalyst systems used hitherto fore to make the polymers for the present invention. Not wanting to be limited by theory, however, believing it is worth noting that some of the desirable properties obtained by blending the described additives seem likely to be derived from the following concept.

When one blends a highly isotactic polypropylene of high molecular weight with a copolymer of low molecular weight there is a tendency for the two materials to separate partially due to the solubility difference and partially due to the exclusion of the less crystalline copolymer. This tendency shows up as inhomogeneous separations described illustrated by the use of TEM's and AFM's. So the highly crystalline domains separate into islands in a sea of less crystalline or even amorphous seas (or vice versa). In any case, what we reasoned in our blend cases is that there would be some benefit to the properties of tensile, toughness, and softness if we could distribute some of the FPC into the high molecular weight isotactic blend polymer which in an embodiment is the second polymer component. In this way some of the flexibility would be engendered to the main high molecular weight poly propylene, and some of the structure integrity of the low molecular with polymer additive would be preserved by allowing on average higher uninterrupted defect free runs of polypropylene. An embodiment of this invention is to generate a soft first polymer component suitable for blending with the second polymer component which contains a lower amount of ethylene to attain a lower heat of fusion than previously known for these low molecular weight or high MFR polymers. We note that these first polymer component polymers are not atactic in the distribution of the methyl residues of the incorporated propylene; they are by design highly isotactic in that a predominant amount of the propylene residues are in the isotactic orientation. They are thus crystallizable in contact with the SPC. We believe that the lower amount of comonomer in the FPC leads to improved redistribution of the first polymer component into the SPC due to improved miscibility. The improved miscibility of the first and the SPC arises from a limited amount of comonomer in the first polymer component. It is an embodiment of the present invention to generate a crystallizable FPC capable of crystallizing in isotactic sequences which nevertheless has a low heat of fusion at low levels of the comonomer. The data for the variation of the heat of fusion of these first polymer components according to this the preferred mode of the invention of the making the FPCs is shown in Figure 1.

## Elasticity

Embodiments of our invention are elastic after tensile deformation. The elasticity, represented by the fractional increase in the length of the sample, represented as percent of the length of the sample, is measured according to the general procedure ASTM D790. Embodiments of the invention have elasticity, as measured by the procedure described above, of less than 30%, or less than 20%, or less than 10%, or less than 8%, or less than 5%.

These values of the elasticity over the range of composition of the copolymer vary with the tensile strength of the sample as measured by the 500% tensile modulus. Elasticity of this family of copolymers is thus represented by two criteria: (a) extensibility to 500% elongation with a measurable modulus (500% tensile modulus) and (b) elasticity from an extension to 200% elongation on a slightly oriented sample as described above. First, the copolymer of embodiments of our invention should have a measurable tensile strength at 500% elongation (also known as 500% tensile modulus), of greater than 0.5 MPa, or greater than 0.75 MPa, or greater than 1.0 MPa, or greater than 2.0 MPa; and second, the copolymer should have the above-described elasticity.

Alternatively, the relationship of elasticity to 500% tensile modulus may be described as follows. In embodiments

of the present invention, the elasticity as a function of 500% tensile modulus in MPa is defined by: Elasticity (%) ≦0.935M+12; or Elasticity (%) ≦0.935M+6; or Elasticity (%) ≦0.935M.

**Flexural Modulus**

Softness of the copolymers of embodiments of the invention may be measured by flexural modulus. In embodiments of the present invention, the flexural modulus in MPa as a function of 500% tensile modulus in MPa where M is the 500% tensile modulus in MPa is defined by: Flexural Modulus≦$4.2e^{0.27}M$+ 50; or Flexural Modulus≦$4.2e^{0.27}M$+ 30; or Flexural Modulus≦$4.2e^{0.27}M$+ 10; or Flexural Modulus≦$4.2e^{0.27}M$+ 2.

**The Second Polymer Component (SPC)**

In accordance with the present invention, the SPC component i.e., the crystalline polypropylene polymer component may be homopolypropylene, or a copolymer of propylene, or some mixtures thereof. These mixtures are commonly known as reactor copolymers (RCP) or impact copolymers (ICP). In one embodiment, the SPC has at least one of the following characteristics.

(A) The polypropylene of the present invention is predominately crystalline or it has a melting point generally greater than 110 ˚C, preferably greater than 115 ˚C, and most preferably greater than 130 ˚C. The term "crystalline," as used herein for SPC, characterizes those polymers which possess high degrees of inter-and intra-molecular order. The SPC may also have a heat of fusion greater than 60 J/g, preferably at least 70 J/g, more preferably at least 80 J/g, as determined by DSC analysis. Determination of this heat of fusion is influenced by treatment of the sample. If treated as discussed below, the heat of fusion of this SPC could be up to about 88 J/g.

(B) The polypropylene can vary widely in composition. For example, substantially isotactic polypropylene homopolymer or propylene copolymer containing equal to or less than 10 weight percent of other monomer, i.e., at least 90% by weight propylene can be used. Further, the polypropylene can be present in the form of a graft or block copolymer, in which the blocks of polypropylene have substantially the same stereoregularity as the propylene-alpha-olefin copolymer so long as the graft or block copolymer has a sharp melting point above 110˚C and preferably above 115 ˚C and more preferably above 130 ˚C, characteristic of the stereoregular propylene sequences. The propylene polymer component may be a combination of homopolypropylene, and/or random and/or block copolymers as described herein. When the above propylene polymer component is a random copolymer, the percentage of the copolymerized alpha-olefin in the copolymer is, in general, up to 9% by weight, preferably 2% - 8% by weight, most preferably 2% - 6% by weight. The preferred alpha-olefins contain 2 or from 4 to 12 carbon atoms. The most preferred alpha-olefin is ethylene. One or two, or more alpha-olefins can be copolymerized with propylene. Exemplary alpha-olefins may be selected from the group consisting of ethylene; butene-1; pentene-1,2-methylpentene-1,3-methylbutene-1; hexene-1,3-methylpentene-1,4methylpentene-1,3,3-dimethylbutene-1; heptene-1; hexene-1; methylhexene-1; dimethylpentene-1 trimethylbutene-1; ethylpentene-1; octene-1; methylpentene-1; dimethylhexene-1; trimethylpentene-1; ethyllhexene-1; methylethylpentene-1; diethylbutene-1; propylpentane-1; decene-1; methylnonene-1; nonene-1; dimethyloctene-1; trimethylheptene-1; ethyloctene-1; methylethylbutene-1; diethylhcxene-1; dodecene-1 and hexadodecene-1.

(C) The weight average molecular weight of the SPC can be between 10,000 and 5,000,000, preferably 50,000 and 500,000, with a poly dispersity index (PDI) between 1.5 and 40.0.

(D) The thermoplastic polymer blends of the present invention may include from 0% - 95% by weight of SPC. According to a preferred embodiment, the thermoplastic polymer blends of the present invention may include from 2% - 70% by weight of the SPC, more preferred 2% - 40%, even more preferred 2% - 25% by weight of SPC in the blend.

There is no particular limitation on the method for preparing this propylene polymer component of the invention. However, in general, the polymer is a propylene homopolymer obtained by homopolymerization of propylene in a single stage or multiple stage reactors. Copolymers may be obtained by copolymerizing propylene and an alpha-olefin having 2 or from 4 to 20 carbon atoms, preferably ethylene, in a single stage or multiple stage reactor. Polymerization methods include high pressure, slurry, gas, bulk, or solution phase, or a combination thereof, using a traditional Ziegler-Natta catalyst or a single-site, metallocene catalyst system. The catalyst used is preferably one which has a high isospecificity. Polymerization may be carried out by a continuous or batch process and may include use of chain transfer agents, scavengers, or other such additives as deemed applicable.

The crystalline polypropylene can be either homopolymer or copolymers with other alpha olefin. The SPC may also be comprised of commonly available isotactic polypropylene compositions referred to as impact copolymer or reactor copolymer. However these variations in the identity of the SPC are acceptable in the blend only to the extent

that all of the components of the SPC are substantially similar in composition and the SPC is within the limitations of the crystallinity and melting point indicated above. This SPC may also contain additives such as flow improvers, nucleators and antioxidants which are normally added to isotactic polypropylene to improve or retain properties. All of these polymers are referred to as the SPC.

Exemplary commercial products of the polypropylene polymers in SPC include the family of Achieve™ polymers available from ExxonMobil Chemical Company, Baytown, Texas. The Achieve™ polymers are produced based on metallocene catalyst system. In certain embodiments, the metallocene catalyst system produces a narrow molecular weight distribution polymer. The molecular weight distribution (MWD) as measured by weight averaged molecular weight (Mw)/number averaged molecular weight (Mn) is typically in the range of 1.5 to 2.5. However, a broader MWD polymer may be produced in a process with multiple reactors. Different MW polymers can be produced in each reactor to broaden the MWD. The Achieve™ product is suitable for this application because of the narrow MWD. The narrow MWD is preferred for producing fine denier fibers such as continuous filament, spunbond and melt blown processes. Achieve™ polymer such as Achieve™ 3854, a 24 MFR homopolymer can be used as a blend component for this invention. Alternatively, Achieve™ polymer such as Achieve™ 6936G1, a 1500 MFR homopolymer can be used as a blend component for this invention. Other polypropylene random copolymer and impact copolymer made from metallocene catalyst system may also be used. The choice of SPC MFR can be used as means of adjusting the final MFR of the blend.

Polypropylene homopolymer, random copolymer and impact copolymer produced by Ziegler-Natta catalyst system have a broad MWD. The resin can be modified by a process called controlled rheology to reduce the MWD to improve spinning performance. Example of such product is PP3155, a 36 MFR homopolymer available from ExxonMobil Chemical Company, Baytown, Texas.

The SPC may also contain additives such as flow improvers, nucleators, slip additives, plasticizer, and antioxidants which are normally added to isotactic polypropylene to improve or retain properties. Other additives may also be added to improve the performance and aesthetic of the fabrics.

## Additives

A variety of additives may be incorporated into the embodiments described above used to make the fibers and fabric for various purposes. Such additives include, for example, stabilizers, antioxidants, fillers, colorants, nucleating agents and slip additives. Primary and secondary antioxidants include, for example, hindered phenols, hindered amines, and phosphates. Nucleating agents include, for example, sodium benzoate and talc. Also, other nucleating agents may also be employed such as Ziegler-Natta olefin product or other highly crystalline polymer. Other additives such as dispersing agents, for example, Acrowax C, can also be included. Slip agents include, for example, oleamide and erucamide. Catalyst deactivators are also commonly used, for example, calcium stearate, hydrotalcite, and calcium oxide, and/or other acid neutralizers known in the art.

Other additives include, for example, fire/flame retardants, plasticizers, vulcanizing or curative agents, vulcanizing or curative accelerators, cure retarders, processing aids, tackifying resins, and the like. The aforementioned additives of may also include fillers and/or reinforcing materials, either added independently or incorporated into an additive. Examples include carbon black, clay, talc, calcium carbonate, mica, silica, silicate, combinations thereof, and the like. Other additives which may be employed to enhance properties include antiblocking agents, lubricants, and nucleating agents. The lists described herein are not intended to be inclusive of all types of additives which may be employed with the present invention. Nucleating agents and fillers tend to improve rigidity of the article. The list described herein is not intended to be inclusive of all types of additives which may be employed with the present invention. Upon reading this disclosure, those of skilled in the art will appreciate other additives may be employed to enhance properties. As is understood by the skilled in the art, the blends of the present invention may be modified to adjust the characteristics of the blends as desired.

Additives which may be incorporated include, for example, fire retardants, antioxidants, plasticizers, pigments, vulcanizing or curative agents, vulcanizing or curative accelerators, cure retarders, processing aids, flame retardants, tackifying resins, and the like.

It is known that in the making of some meltspun fibers, surfactants and other active agents have been included in the polymer that is to be melt-processed. By way of example only, U.S. Patent Nos. 3,973,068 and 4,070,218 to Weber teach a method of mixing a surfactant with the polymer and then melt-processing the mixture to form the desired fabric. The fabric is then treated in order to force the surfactant to the surface of the fibers. This is often done by heating the web on a series of heated rolls and is often referred to as "blooming". As a further example, U.S. Patent No. 4,578,414 to Sawyer et al. describes wettable olefin polymer fibers formed from a composition comprising a polyolefin and one or more surface-active agents. The surface-active agents are stated to bloom to the fiber surfaces where at least one of the surface-active agents remains partially embedded in the polymer matrix. In this regard, the permanence of wettability can be better controlled through the composition and concentration of the additive package. Still further, U.S. Patent No. 4,923,914 to Nohr et al. teaches a surface-segregatable, melt-extrudable thermoplastic composition suitable for

processing by melt extrusion to form a fiber or film having a differential, increasing concentration of an additive from the center of the fiber or film to the surface thereof. The differential, increasing concentration imparts the desired characteristic, e.g., hydrophilicity, to the surface of the fiber. As a particular example in Nohr, polyolefin fiber nonwoven webs are provided having improved wettability utilizing various polysiloxanes.

For example one polymer composition, having fluorochemicals, as may be used to aid in repellency of low surface tension fluids, is treated according to the present invention and showed a 36% increase in isopropyl alcohol repellency as compared to the control polymer run without additional heat entrainment to increase jet thermal core length.

Of course, the particular active agent or agents included within one or more of the components can be selected as desired to impart or improve specific surface characteristics of the fiber and thereby modify the properties of the fabric made there from. A variety of active agents or chemical compounds have heretofore been utilized to impart or improve various surface properties including, but not limited to, absorbency, wettability, anti-static properties, anti-microbial properties, anti-fungal properties, liquid repellency (e.g. alcohol or water) and so forth. With regard to the wettability or absorbency of a particular fabric, many fabrics inherently exhibit good affinity or absorption characteristics for only specific liquids. For example, polyolefin nonwoven webs have heretofore been used to absorb oil or hydrocarbon based liquids. In this regard, polyolefin nonwoven wipes are inherently oleophillic and hydrophobic. Thus, polyolefin nonwoven fabrics need to be treated in some manner in order to impart good wetting characteristics or absorbency for water or aqueous solutions or emulsions. As an example, exemplary wetting agents that can be melt-processed in order to impart improved wettability to the fiber include, but are not limited to, ethoxylated silicone surfactants, ethoxylated hydrocarbon surfactants, ethoxylated fluorocarbon surfactants and so forth. In addition, exemplary chemistries useful in making melt-processed thermoplastic fibers more hydrophilic are described in U.S. Patent Nos. 3,973,068 and 4,070,218 to Weber et al. and U.S. Patent No. 5,696,191 to Nohr et al.

In a further aspect, it is often desirable to increase the barrier properties or repellency characteristics of a fabric for a particular liquid. As a specific example, it is often desirable in infection control products and medical apparel to provide a fabric that has good barrier or repellency properties for both water and alcohol. In this regard, the ability of thermoplastic fibers to better repel alcohol can be imparted by mixing a chemical composition having the desired repellency characteristics with the thermoplastic polymer resin prior to extrusion and thereafter melt-processing the mixture into one or more of the segments. The active agent migrates to the surface of the polymeric component thereby modifying the surface properties of the same. In addition, it is believed that the distance or gap between components exposed on the outer surface of the fiber containing significant

levels of active agent is sufficiently small to allow the active agent to, in effect, modify the functional properties of the entire fiber and thereby obtain a fabric having the desired properties. Chemical compositions suitable for use in melt-extrusion processes and that improve alcohol repellency include, but are not limited to, fluorochemicals. Exemplary melt-processable liquid repellency agents include those available from DuPont under the trade name ZONYL fluorochemicals and also those available from 3M under the trade designation FX-1801. Various active agents suitable for imparting alcohol repellency to thermoplastic fibers are described in U.S. Patent No. 5,145,727 to Potts et al., U.S. Patent No. 4,855,360 to Duchesne et al., U.S. Patent No. 4,863,983 to Johnson et al., U.S. Patent No. 5,798,402 to Fitzgerald et al., U.S. Patent No. 5,459,188 and U.S. Patent No. 5,025,052. In addition to alcohol repellency, chemical compositions can be used to similarly improve the repellency or barrier properties for other low surface tension liquids. By use of the present invention, many of the above discussed advantageous properties may be had during the formation of the fibers

**Process oil**

Process oils can be optimally added to the embodiments described above. The addition of process oil in moderate amounts lowers the viscosity and flexibility of the blend while improving the properties of the blend at temperatures near and below 0 ˚C. It is believed that these benefits arise by the lowering of the Tg of the blend. Additional benefits of adding process oil to the blend include improved processability and a better balance of elastic and tensile strength.

The process oil is typically known as extender oil in the rubber application practice. The process oils can consist of (a) hydrocarbons consisting of essentially of carbon and hydrogen with traces of hetero atoms such as oxygen or (b) essentially of carbon, hydrogen and at least one hetero atom such as dioctyl phthalate, ethers and polyethers. The process oils have a boiling point to be substantially involatile at 200 ˚C. These process oils are commonly available either as neat solids or liquids or as physically absorbed mixtures of these materials on an inert support (e.g. clays, silica) to form a free flowing powder.

The process oils usually include a mixture of a large number of chemical compounds which may consist of linear, acyclic but branched, cyclic and aromatic carbonaceous structures. Another family of process oils are certain organic esters and alkyl ether esters having a molecular weight ($M_n$) of less than 10,000. Examples of such process oils include, but are not limited to, Sunpar™ 150 and 220 from The Sun Manufacturing

Company of Marcus Hook, PA, USA and Hyprene™ V750 and Hyprene™ VI 200 from Ergon, Post Office Box 1639, Jackson, Mass. 39215-1639, USA. and IRM 903 from Calumet Lubricants Co., 10234 Highway 157, Princeton, La. 71067-9172, USA. It is also anticipated that combinations of process oils, each of which is described above may be used in the practice of the invention. In certain embodiments, the selection of the process oil be compatible or miscible with the blend composition in the melt to form, a homogenous one phase blend, although two phase blends and multi-phase blends are also contemplated.

The addition of the process oils to the mixture comprising the SPC and the FPC maybe made by any of the conventional means known to the art. These include the addition of all or part of the process oil prior to recovery of the polymer as well as addition of the process oil, in whole or in part, to the polymer as a part of a compounding for the interblending of the SPC and the FPC. The compounding step may be carried out in a batch mixer such as a mill or an internal mixer such as Banbury mixer. The compounding operation may also be conducted in a continuous process such as a twin screw extruder.

The addition of certain process oils to lower the glass transition temperature of the blends of isotactic polypropylene and ethylene propylene diene rubber has been described in the art by Ellul in U.S. Patent Nos. 5,290,886 and 5,397,832. These procedures are easily applicable to the current invention.

The SPC and FPC blend may include process oil in the range of from 1 to 50, preferably in the range of from 2 to 20 parts by weight of process oil per hundred parts of total polymer (SPC plus FPC).

## Plasticizers

In certain embodiments the various components, i.e., FPC and SPC, as well as their blends may include various amounts of plasticizer(s). In one embodiment, the plasticizer comprises $C_6$ to $C_{200}$ paraffins, and $C_8$ to $C_{100}$ paraffins in another embodiment. In another embodiment, the plasticizer consists essentially of $C_6$ to $C_{200}$ paraffins, and consists essentially of $C_8$ to $C_{100}$ paraffins in another embodiment. For purposes of the present invention and description herein, the term "paraffin" includes all isomers such as n-paraffins, branched paraffins, isoparaffins, and may include cyclic aliphatic species, and blends thereof, and may be derived synthetically by means known in the art, or from refined crude oil in such a way as to meet the requirements described for desirable NFPs described herein.

Suitable plasticizers also include "isoparaffins", "polyalphaolefins" (PAOs) and "polybutenes" (a subgroup of PAOs). These three classes of compounds can be described as paraffins which can include branched, cyclic, and normal structures, and blends thereof. They can be described as comprising $C_6$ to $C_{200}$ paraffins in one embodiment, and $C_8$ to $C_{100}$ paraffins in another embodiment.

The plasticizer may be present in the individual components and/or the blends of the invention from 0.1 wt% to 60 wt% in one embodiment, and from 0.5 wt% to 40 wt% in another embodiment, and from 1 wt% to 20 wt% in yet another embodiment, and from 2 wt% to 10 wt% in yet another embodiment, wherein a desirable range may comprise any upper wt% limit with any lower wt% limit described herein.

## The Blend of FPC and SPC

The blends of SPC and FPC and other components may be prepared by any procedure that guarantees an intimate mixture of the components. For example, the components can be combined by melt pressing the components together on a Carver press to a thickness of 0.5 millimeter (20 mils) and a temperature of 180 ˚C, rolling the resulting slab, folding the ends together and repeating the pressing, rolling, and folding operation 10 times. Internal mixers are particularly useful for solution or melt blending. Blending at a temperature of 180 ˚C to 240 ˚C in a Brabender Plastograph for 1 to 20 minutes has been found satisfactory. Still another method that may be used for admixing the components involves blending the polymers in a Banbury internal mixer above the flux temperature of all of the components, e.g., 180 ˚C for 5 minutes. A satisfactory mixture of the polymeric components is indicated by the uniformity of the morphology of the dispersion of SPC and FPC. Continuous mixing may also be used. These processes are well known in the art and include single and twin screw mixing extruders, static mixers for mixing molten polymer streams of low viscosity, impingement mixers, as well as other machines and processes, designed to disperse the FPC and the SPC in intimate contact.

The polymer blends of the instant invention exhibit a remarkable combination of desirable physical properties. The incorporation of as little as 5% SPC in the FPC composed of propylene/alpha-olefin copolymers increases the melting point of the blend. In addition, the incorporation of SPC in accordance with the instant invention can substantially reduce the stickiness of the propylene/alpha-olefin copolymer alone.

The mechanism by which the desirable characteristics of the present copolymer blends are obtained is not fully understood. However, it is believed to involve a co-crystallization phenomenon between propylene sequences of similar stereoregularity in the various polymeric components, which results in a merging of the crystallization temperature of the latent components. Applicants do not wish to be bound by this theory. The combined FPC and SPC have a blend

melting point closer together than would be expected on a comparison of the properties of the individual components alone. Surprisingly, some blend compositions have a single crystallization temperature and a single melting temperature, since it would be expected by those skilled in the art that blending a crystalline polymer and a crystallizable polymer would result in a double crystallization temperature as well as a double melting temperature reflecting the two polymeric components. However, the intimate blending of the polymers having the required crystallinity characteristics apparently results in a crystallization phenomenon that modifies the other physical properties of the propylene/alpha-olefin copolymer, thus measurably increasing its commercial utility and range of applications.

**Morphology of the Blend**

The morphology of the blend as made is shown in Figure 2. The morphology of the fibers as made is shown in Figure 3.

**Blends of the FPC, SPC and Other Components**

The blends may be prepared by any procedure that produces a mixture of the components, e.g., dry blending, melt blending, etc. In certain embodiments, a complete mixture of the polymeric components is indicated by the uniformity of the morphology of the dispersion of the polymer components.

Melt blend: Continuous melt mixing equipment are generally used. These processes are well known in the art and include single and twin screw compounding extruders as well as other machines and processes, designed to homogenize the polymer components intimately.

Dry blend: The FPC, SPC and other component may be dry blended and fed directly into the fiber or nonwoven process extruders. Dry blending is accomplished by combining FPC, SPC and other ingredients in dry blending equipment. Such equipment and processes are well known in the art and include a drum tumbler, a double cone blender, etc. In this case, FPC, SPC and other ingredients are melted and homogenized in the process extruder similar to the melt blend process. Instead of making the pellets, the homogenized molten polymer is delivered to the die or spinneret to form the fiber and fabric.

**Chain Scission**

The term "chain scission" is defined as the process of using one or more free radical initiators to increase polymer melt flow rate (MFR). This is described in U.S. Patent No. 6,747,114. A "free radical initiator" is defined as a molecular fragment having one or more unpaired electrons.

A polymer undergoes chain scission in accordance with this invention when the polymer, or a blend of polymers, is treated with a free radical initiator, e.g., peroxide, preferably while the polymer is in a melted state, more preferably in a fully melted state. Preferably, the chain scission is controlled. For example, when a free radical initiator is used, free radicals of the polymers being treated are produced by thermal scission of the peroxide. Other sources of free radicals such as diazo compounds may also be utilized. In any case, it is contemplated that the free radicals produced from the initiator (e.g., peroxide) abstract the tertiary hydrogen on the propylene residue of the FPC. The resulting free radical disproportionates to two lower molecular weight chains, one with an olefin near the terminus and the other a saturated polymer. This process can continue with the generation of successively lower molecular weight polymers. Since the site of the attack and scission of the chains is random, the distribution of the molecular weight of the resulting degraded polymer approaches the most probable (PDI=2) irrespective of the PDI of the initial polymer. Thus, under the appropriate conditions, chain scission is initiated to cause controlled degradation of the polymer or polymer blend.

Crosslinking is a competing process that may occur during chain scission. In a crosslinking reaction, the free radicals combine to form branched macromolecules of higher molecular weight. Eventually, this synthesis reaction may lead to vulcanization of the polymer. In copolymers of ethylene and propylene, this balance of crosslinking and degradation is mainly dependent on the composition of the copolymer. Since the degradation reaction is uniquely associated with the propylene residues, lower amounts of propylene in the copolymer tend to favor crosslinking over degradation. However, it should be recognized that the scission and crosslinking reactions are not mutually exclusionary. That is, even during degradation, some amount of branching may occur. However, because the branching and scission reactions are random, these complementary processes should not lead to an increase in PDI. However, a polymeric material degraded as discussed herein preferably has a majority of branched molecules. The amount of branching depends on a number of variables, primarily the reaction conditions, and the composition of the polymers and the extent of degradation. Random copolymers having a higher ethylene content should generate a higher level of branching than those with a lower ethylene content. Thus, in certain embodiments of this invention, the rate or extent of degradation is substantially proportional
to the relative amounts of propylene and ethylene sites. For example, if too many ethylene sites are present, the use of

the peroxide or other free radical initiator may result in crosslinking rather than chain scission, and the material being treated will not degrade to a higher MFR. Thus, an important aspect of certain specific embodiments of this invention relates to the relative amounts of the polymers used in the blend. In blends of the FPC and the SPC, these degradation processes occur for both of the polymers independently of each other. It is contemplated that the SPC degrades faster than the FPC under similar conditions. Thus, a blend of random copolymer and polypropylene with change in PDI during the degradation procedure with the polypropylene degrading to a lower molecular weight sooner than the random copolymer is contemplated.

The free-radical initiator, e.g., peroxide, may be added to the polymer while the polymer is in a solid form, e.g., by coating polymer pellets with an initiator, such as peroxide, which may be in powder form, in which case the polymer is said to be "treated" with the initiator when the initiator becomes active, which usually happens at a temperature higher than melting point of the polymer. Preferably, however, the free-radical initiator is added to the polymer after the polymer has formed, but while the polymer is in a melted condition, e.g., during the post-polymerization processing, such as when a polymer mixture (which may include solvent) is introduced to a devolatalizer or extruder, which typically occurs at an elevated temperature.)

The term "melted" refers to the condition of the polymer when any portion of the polymer is melted, and includes fully melted and partially melted. Preferably, the polymer is treated by free-radical initiator while the temperature of the polymer is above its melting point.

One example of a peroxide is 2,5-bis(tert-butylperoxy)-2,5-dimethyl-hexane. Alternatively, the free radical initiator may include a diazo compound, or any other compound that promotes free radicals in an amount sufficient to cause degradation as specified herein.

## Industrial Applicability

The fibers and fabrics of the invention enjoy wide application spanning several industries. For example, elastic fabrics of the invention may be used in the manufacture of hygiene products. Examples include diapers and feminine hygiene products. The elastic fabrics of the invention are also useful for medical products. Examples include medical fabric for gowns, linens, towels, bandages, instrument wraps, scrubs, masks, head wraps, and drapes. Additionally, the elastic fabrics of the invention are useful in the manufacture of consumer products. Examples include seat covers, domestic linens, tablecloths, and car covers. It is also contemplated that the inventive elastic fabrics may make-up either a portion or a component of the articles described above.

The fibers and nonwoven webs prepared using the blends of this invention can be formed into fabrics, garments, clothing, medical garments, surgical gowns, surgical drapes, diapers, training pants, sanitary napkins, panty liners, incontinent wear, bed pads, bags, packaging material, packages, swimwear, body fluid impermeable backsheets, body fluid impermeable layers, body fluid permeable layers, body fluid permeable covers, absorbents, tissues, nonwoven composites, liners, cloth linings, scrubbing pads, face masks, respirators, air filters, vacuum bags, oil and chemical spill sorbents, thermal insulation, first aid dressings, medical wraps, fiberfill, outerwear, bed quilt stuffing, furniture padding, filter media, scrubbing pads, wipe materials, hosiery, automotive seats, upholstered furniture, carpets, carpet backing, filter media, disposable wipes, diaper coverstock, gardening fabric, geomembranes, geotextiles, sacks, housewrap, vapor barriers, breathable clothing, envelops, tamper evident fabrics, protective packaging, and coasters.

## Fiber and Fabric Formation

The formation of nonwoven fabrics from polyolefins and their blends generally requires the manufacture of fibers by extrusion followed by weaving or bonding. The extrusion process is typically accompanied by mechanical or aerodynamic drawing of the fibers. The elastic fabric of the present invention may be manufactured by any technique known in the art. Such methods and equipment are well known. For example, spunbond nonwoven fabrics may be produced by spunbond nonwoven production lines produced by Reifenhauser GmbH & Co., of Troisdorf, Germany. This utilizes a slot drawing technique as revealed in U.S. Patent No. 4,820,142. Fabrics of the present invention demonstrate desirable elongation, and in certain embodiments, enhanced softness. Specific embodiments are described as follows.

## Conventional Fine Denier Fibers

The three more conventional fiber operations, continuous filament, bulked continuous filament, and staple, are contemplated as application for the elastic fibers of the present invention. For example, the polymer melt is extruded through the holes in the die (spinneret) between, 0.3 mm to 0.8 mm in diameter. Low melt viscosity of the polymer is important and is achieved through the use of high melt temperature (230 ˚C to 280 ˚C) and high melt flow rates (15 g/10 min to 40 g/10 min) of the polymers used. A relatively large extruder is usually equipped with a manifold to distribute a high output of molten PP to a bank of eight to twenty spinnerets. Each spinhead is usually equipped with a separate

gear pump to regulate output through that spinhead; a filter pack, supported by a "breaker plate;" and the spinneret plate within the head. The number of holes in the spinneret plate determines the number of filaments in a yarn and varies considerably with the different yarn constructions, but it is typically in the range of 50 to 250. The holes are typically grouped into round, annular, or rectangular patterns to assist in good distribution of the quench air flow.

## Continuous Filament

Continuous filament yarns typically range from 40 denier to 2,000 denier (denier = number of grams/9000 yd). Filaments can range from 1 to 20 denier per filament (dpf) and the range is growing. Spinning speeds are typically 800 m/min to 1500 m/min (2500 ft/min to 5000 ft/min). An exemplary method would proceed as follows. The filaments are drawn at draw ratios of 3:1 or more (one-or two-stage draw) and wound onto a package. Two-stage drawing allows higher draw ratios to be achieved. Winding speeds are 2,000 m/min to 3,500 m/min (6,600 ft/min to 11,500 ft/min). Spinning speeds in excess of 900 m/min (3000 ft/min) require a narrow MWD to get the best spinability with the finer filaments. Resins with a minimum MFR of 5 g/10 min and a NMWD, with a polydispersity index (PI) under 2.8 are typical. In slower spinning processes, or in heavier denier filaments, a 16-MFR reactor grade product may be more appropriate.

## Partially Oriented Yarn (POY)

Partially oriented yarn (POY) is the fiber produced directly from fiber spinning without solid state drawing (as continuous filament mentioned above). The orientation of the molecules in the fiber is done only in the melt state just after the molten polymer leaves the spinneret. Once the fiber is solidified, no drawing of the fiber takes place and the fiber is wounded up into a package. The POY yarn (as opposed to fully oriented yarn, or FOY, which has gone through solid state orientation and has a higher tensile strength and lower elongation) tends to have a higher elongation and lower tenacity.

## Bulked Continuous Filament

Bulked Continuous Filament fabrication processes fall into two basic types, one-step and two steps. For example, in a two-step process, an undrawn yarn is spun at less than 1,000 m/min (3,300 ft/min), usually 750 m/min, and placed on a package. The yarn is drawn (usually in two stages) and "bulked" on a machine called a texturizer. Winding and drawing speeds are limited by the bulking or texturizing device to 2, 500 m/min (8,200 ft/min) or less. As in the two-step CF process, secondary crystallization requires prompt draw texturizing. The most common process today is the one-step spin/draw/text (SDT) process. This process provides better economics, efficiency and quality than the two-step process. It is similar to the one-step CF process, except that the bulking device is in-line. Bulk or texture changes yarn appearance, separating filaments and adding enough gentle bends and folds to make the yarn appear fatter (bulkier).

## Staple Fiber

There are two basic staple fiber fabrication processes: traditional and compact spinning. The traditional process typically involves two steps: 1) producing, applying finish, and winding followed by 2) drawing, a secondary finish application, crimping, and cutting into staple. Filaments can range, for example, from 1.5 dpf to >70 dpf, depending on the application. Staple length can be as short as 7 mm or as long as 200 mm (0.25 in. to 8 in.) to suit the application. For many applications the fibers are crimped. Crimping is accomplished by over-feeding the tow into a steam-heated stuffer box with a pair of nip rolls. The over-feed folds the tow in the box, forming bends or crimps in the filaments. These bends are heat-set by steam injected into the box. The MW, MWD, and isotactic content of the resin all affect crimp stability, amplitude, and ease of crimping.

## Meltblown Fabrics

Meltblown fibers are fibers formed by extruding a molten thermoplastic material through a plurality of fine, usually circular, die capillaries as molten threads or filaments into converging, usually hot and high velocity, gas, e.g. air, streams to attenuate the filaments of molten thermoplastic material and form fibers. During the meltblowing process, the diameter of the molten filaments is reduced by the drawing air to a desired size. Thereafter, the meltblown fibers are carried by the high velocity gas stream and are deposited on a collecting surface to form a web of randomly disbursed meltblown fibers. Such a process is disclosed, for example, in U.S. Patent Nos. 3,849,241 to Buntin et al., 4,526,733 to Lau, and 5,160,746 to Dodge, II et al. Meltblown fibers may be continuous or discontinuous and are generally smaller than ten microns in average diameter.

In a conventional meltblowing process, molten polymer is provided to a die that is disposed between a pair of

air plates that form a primary air nozzle. Standard meltblown equipment includes a die tip with a single row of capillaries along a knife edge. Typical die tips have approximately 30 capillary exit holes per linear inch of die width. The die tip is typically a 60° wedge-shaped block converging at the knife edge at the point where the capillaries are located. The air plates in many known meltblowing nozzles are mounted in a recessed configuration such that the tip of the die is set back from the primary air nozzle. However, air plates in some nozzles are mounted in a flush configuration where the air plate ends are in the same horizontal plane as the die tip; in other nozzles the die tip is in a protruding or "stick-out" configuration so that the tip of the die extends past the ends of the air plates. Moreover, as disclosed in U.S. Patent No. 5,160,746 to Dodge II et al., more than one air flow stream can be provided for use in the nozzle.

In some known configurations of meltblowing nozzles, hot air is provided through the primary air nozzle formed on each side of the die tip. The hot air heats the die and thus prevents the die from freezing as the molten polymer exits and cools. In this way the die is prevented from becoming clogged with solidifying polymer. The hot air also draws, or attenuates, the melt into fibers. Other schemes for preventing freezing of the die, such as that detailed in U.S. Patent No. 5,196,207 to Koenig, using heated gas to maintain polymer temperature in the reservoir, is also known. Secondary, or quenching, air at temperatures above ambient is known to be provided through the die head, as in U.S. Patent No. 6,001,303 to Haynes et al. Primary hot air flow rates typically range from about 20 to 24 standard cubic ft, per minute per in, of die width (SCFM/in).

Primary air pressure typically ranges from 5 to 10 pounds per square inch gauge (psig) at a point in the die head just prior to exit. Primary air temperature typically ranges from about 232 °C to about 315 °C, but temperatures of about 398 °C are not uncommon. The particular temperature of the primary hot air flow will depend on the particular polymer being drawn as well as other characteristics desired in the meltblown web.

Expressed in terms of the amount of polymer material flowing per inch of the die per unit of time, polymer throughput is typically 0.5 to 1.25 grams per hole per minute (ghm). Thus, for a die having 30 holes per inch, polymer throughput is typically about 2 to 5 Ibs/in/hr (PIH).

Moreover, in order to form meltblown fibers from an input of about five pounds per inch per hour of the polymer melt, about one hundred pounds per inch per hour of hot air is required to draw or attenuate the melt into discrete fibers. This drawing air must be heated to a temperature on the order of about 204 °C to about 315 °C in order to maintain proper heat to the die tip.

Because such high temperatures must be used, a substantial amount of heat is typically removed from the fibers in order to quench, or solidify, the fibers leaving the die orifice. Cold gases, such as air, have been used to accelerate cooling and solidification of the meltblown fibers. In particular, in U.S. Patent No. 5,075,068 to Milligan et al. and U.S. Patent No. 5,080,569 to Gubernick et al., secondary air flowing in a cross-flow perpendicular, or 90°, direction relative to the direction of fiber elongation, has been used to quench meltblown fibers and produce smaller diameter fibers. In addition, U.S. Patent No. 5,607,701 to Allen et al. uses a cooler pressurized quench air that fills chamber 71 and results in faster cooling and solidification of the fibers. In U.S. Patent No. 4,112,159 to Pall, a cold air flow is used to attenuate the fibers when it is desired to decrease the attenuation of the fibers.

Through the control of air and die tip temperatures, air pressure, and polymer feed rate, the diameter of the fiber formed during the meltblown process may be regulated. For example, typical meltblown polypropylene fibers have a diameter of 3 to 4 microns.

After cooling, the fibers are collected to form a nonwoven web. In particular, the fibers are collected on a forming web that comprises a moving mesh screen or belt located below the die tip. In order to provide enough space beneath the die tip for fiber forming, attenuation and cooling, forming distances of at least about 8 to 12 inches between the polymer die tip and the top of the mesh screen are required in the typical meltblowing process.

However, forming distances as low as 4 inches are described in U.S. Patent No. 4,526,733 to Lau (hereafter the Lau patent). As described in Example 3 of the Lau patent, the shorter forming distances are achieved with attenuating air flows of at least about 37 °C cooler than the temperature of the molten polymer. For example, Lau discloses the use of attenuating air at about 65 °C for polypropylene melt at a temperature of about 266 °C to allow a forming distance between die tip and forming belt of 4 inches. The Lau patent incorporates passive air gaps 36 (shown in FIG. 4 of Lau) to insulate the die tip.

Past efforts have largely focused on improved quenching in these short distances, where it can take as little as 1.3 ms for the meltblown extrudate to travel from the die to the collecting wire. The present invention approaches the problem of meltblown fiber formation from the opposite direction by seeking to increase the dwell time of the extrudate within the hot jet thermal core in order to further attenuate the fibers and also to allow the fibers to be formed from lower viscosity resins than were previously practical.

## Spunbonded Fabrics

A particular embodiment of the present invention involves the use of the invention copolymer alloys in the making of spunbonded fabrics. Conventional spunbond processes are illustrated in U.S. Patent Nos. 3,825,379;

4,813,864; 4,405,297; 4,208,366; and 4,334,340. The spunbonding process is one which is well known in the art of fabric production. Generally, continuous fibers are extruded, laid on an endless belt, and then bonded to each other, and often times to a second layer such as a melt blown layer, often by a heated calender roll, or addition of a binder. An overview of spunbonding may be obtained from L. C. Wadsworth and B. C. Goswami, Nonwoven Fabrics: "Spunbonded and Melt Blown Processes" proceedings Eight Annual Nonwovens Workshop, July 30 - August 3, 1990, sponsored by TANDEC, University of Knoxville, Tennessee.

A typical spunbond process consists of a continuous filament extrusion, followed by drawing, web formation by the use of some type of ejector, and bonding of the web. First, the invention ethylene-propylene copolymer alloy is visbroken using peroxide into a resin having a narrower molecular weight distribution and about 35 g/10 min MFR. During this step the polymer granules are converted into pellets. The pelletized 35 g/10 min MFR ethylene-propylene copolymer resin is then fed into an extruder. In the extruder, the pellets simultaneously are melted and forced through the system by a heating melting screw. At the end of the screw, a spinning pump meters the melted polymer through a filter to a spinneret where the melted polymer is extruded under pressure through capillaries, at a rate of 0.3 - 1.0 grams per hole per minute. The spinneret contains a few hundred capillaries, measuring 0.4 - 0.6 mm in diameter. The polymer is melted at about 30 ˚C - 50 ˚C above its melting point to achieve sufficiently low melt viscosity for extrusion. The fibers exiting the spinneret are quenched and drawn into fine fibers measuring 10 - 40 microns in diameter by cold, 1000 - 6000 m/minutes velocity air jets. The solidified fiber is laid randomly on a moving belt to form a random netlike structure known in the art as web. After web formation the web is bonded to achieve its final strength using a heated textile calenders known in the art as thermo bond calenders. The calenders consists of two heated steel rolls; one roll is plain ant the other bears a pattern of raised points. The web is conveyed to the calender wherein a fabric is formed by pressing the web between the rolls at a bonding temperature of about 130 ˚C-150 ˚C.

While bonding occurs within a wide temperature range the bonding temperature must be optimized for achieving a fabric having maximum mechanical strength. Over bonding, that is, bonding at a temperature greater than optimum results in fibers having significantly weaker fiber around the bonding point because of excessive melting of the fiber. These become the weak points in the fabric. Under bonding, that is, bonding at a temperature lower than the optimum results in insufficient bonding at the fiber-to-fiber links. The optimum bonding temperature depends upon the nature of the material that the fibers are made of.

Spunbond fabrics produced using the ethylene-propylene copolymer alloys of the present invention exhibit a surprisingly good balance of softness and mechanical strength. Moreover, their optimum bonding temperature is lower than that of conventional random copolymers, thus permitting less expensive processing (See FIG. 5). Note that all copolymers are melt spun at the same low draw-down speed in order to allow for a meaningful comparison.

Softness or "hand" as it is known in the art is measured using the Thwing-Albert Handle-O-Meter (Model 211-10-B/AERGLA). The quality of "hand" is considered to be the combination of resistance due to the surface friction and flexibility of a fabric material. The Handle-O-Meter measures the above two factors using an LVDT (Linear Variable Differential Transformer) to detect the resistance that a blade encounters when forcing a specimen of material into a slot of parallel edges. A 31/2 digit digital voltmeter (DVM) indicates the resistance directly in grams. The "hand" of any given sheet of material is the average of four readings taken on both sides and both directions of a test sample and is recorded in grams per standard width of sample material.

## Annealing

Another part of the invention is that the mechanical properties referred to above can be obtained by the annealing the polymer fiber. Annealing is often combined with mechanical orientation. It is preferred to employ an annealing step in the process. Annealing may also be done after fabrication of a non-woven material from the fibers. Annealing partially relieves the internal stress in the stretched fiber and restores the elastic recovery properties of the blend in the fiber. Annealing has been shown to lead to significant changes in the internal organization of the crystalline structure and the relative ordering of the amorphous and semicrystalline phases. This leads to recovery of the elastic properties. It has been found that by annealing the fiber at a temperature of at least about 4 ˚C, preferably at least about 6 ˚C above room temperature (but slightly below the crystalline melting point of the blend) is adequate for the formation of the elastic properties in the fiber. Thermal annealing of the polymer blend is conducted by maintaining the polymer blends or the articles made from a such a blend at temperature between room temperature to a maximum of 160 ˚C or more preferably to a maximum of 130 ˚C for a period between 5 minutes to less than 7 days. A typical annealing period is 3 days at 50 ˚C or 5 minutes at 100 ˚C. The annealing time and temperature can be adjusted for any particular blend composition comprising a SPC and one or two FPC by experimentation. It is believed that during this annealing process there are intermolecular rearrangements of the polymer chains leading to a material with much greater recovery from tensile deformation than the unannealed material. While the annealing is done in the absence of mechanical orientation, the latter can be a part of the annealing process on the fiber (past the extrusion operation) required to produce an elastic material. Mechanical orientation can be done by the temporary, forced extension of the polymer fiber for a short period

of time before it is allowed to relax in the absence of the extensional forces. It is believed that the mechanical orientation of the polymer leads to reorientation of the crystallizable portions of the blend of the first and the second polymer. Oriented polymer fibers are conducted by maintaining the polymer fibers or the articles made from a blend at an extension of 100% to 700% for a period of 0.1 seconds to 24 hours. A typical orientation is an extension of 200% for a momentary period at room temperature.

For orientation, a polymeric fiber at an elevated temperature (but below the crystalline melting point of the polymer) is passed from a feed roll of fiber around two rollers driven at different surface speeds and finally to a take-up roller. The driven roller closest to the take-up roll is driven faster than the driven roller closest to the feed roll, such that the fiber is stretched between the driven rollers. The assembly may include a roller intermediate the second roller and take-up roller to cool the fiber. The second roller and the take-up roller may be driven at the same peripheral speeds to maintain the fiber in the stretched condition. If supplementary cooling is not used, the fiber will cool to ambient temperature on the take up roll.

In other embodiments, the elastic nonwoven fabrics of the present invention require little to no post fabrication processing. In another embodiment, the elastic fabrics of the present invention are annealed in a single-step by a heated roll (godet) during calendering under low tension. Depending on the end use application, it is apparent what techniques are appropriate and what variations in process parameters are required to obtain the desired fabric properties. For example, the following table is provided for illustration.

## Multilayer Laminate

As used herein, "multilayer laminate" refers to a laminate wherein some of the layers are spunbond and some are meltblown such as spunbond/meltblown/spunbond (SMS) laminate and others disclosed in, for example, U.S. Patent Nos. 4,041,203; 5,169,706; 5,145,727; 5,178,931 and 5,188,885.

## Fabrication of Blends of the Invention

It has been surprisingly and inventively found that these same blends and blends containing these materials in the majority can be easily spun into fibers by extrusion through a spinneret followed by drawing, to the desired denier. Additionally it has been found that the ability to spin fibers of these blend, as measured by the rate of spinning, is unaffected across a wide composition range of blends of SPC and the FPC. This data is shown in Table 1.

**Table 1: Dependence of Fabric property on nonwoven process conditions and composition variables**

| FPC wt% | SPC wt% | Calendar Temp | Process Temp. | Line Speed | Take up Tension | MD Elasticity | TD elasticity | Permanen t Set |
|---|---|---|---|---|---|---|---|---|
| higher | Lower | same | same | same | same | High | high | low |
| lower | Higher | same | same | same | same | Low | low | high |
| same | Same | higher | same | same | same | High | high | low |
| same | Same | lower | same | same | same | Low | low | high |
| same | Same | same | higher | Same | same | weak effect | weak effect | weak effect |
| same | Same | same | lower | same | same | weak | weak | weak |
| same | Same | same | same | higher | -- | low | high | small effect |
| same | Same | same | same | lower | same | high | low | small effect |
| same | Same | same | same | same | higher | low | high | small effect |
| same | same | same | same | same | lower | high | lower | small effect |

## DEFINITIONS

Soft fibers are fibers made from a Polyolefin polymer or blend which has a 1% secant modulus less than 70,000 kpsi in/in.

Extremely soft fibers are fibers made from a Polyolefin polymer or blend which has a 1% secant modulus less

than 40,000 kpsi in/in.

Extensible fabrics are those which have a tensile elongation. For melt blown fabrics this elongation to greater than 80%. For spun bond fabrics this elongation is greater than 200%.

Elastic fabrics are those which have an immediate retraction from tensile elongation. For melt blown fabrics this retraction is to less than 130% of the original length on elongation to 50%. For spun bond fabrics this elongation is to less than 120% of the original length for elongation to 200%.

As used herein, the terms "multilayer laminate", "laminate", and "composite" refer to a layered structure wherein some of the layers may be spunbond fabric and some may be meltblown fabric such as, for example, spunbond/meltblown/spunbond ("SMS") laminate and others disclosed in, or other substrates such as films, netting, or other synthetic or natural material such as disclosed in, for example, U.S. Patent Nos. 4,041,203; 5,169,706; 5,145,727; 5,178,931 and 5,188,885. Such laminates or composites may also contain multiple layers of spunbond and meltblown fabrics in various combinations such as SMS, SSMMSS, etc. The laminates and composites of the present invention may comprise layers of the same or different materials. Each layer may also comprise a material or a combination of materials. Each layer may also comprise sub-layers.

As used herein, the term "polypropylene", "propylene polymer," or "PP" refers to homopolymers, copolymers, terpolymers, and interpolymers, made from propylene derived units, and $C_2$ to $C_{12}$ $\alpha$-olefin derived units.

As used herein, the term "reactor grade" refers to polyolefin resin whose molecular weight distribution, or polydispersity, has not been substantially altered after polymerization. The term particularly includes polyolefins which, after polymerization, have not been treated, or subjected to treatment, to substantially reduce viscosity or substantially reduce average molecular weight.

As used herein, "isotactic" is defined as having at least 40% isotactic pentads of methyl groups derived from propylene according to analysis by $^{13}$C-NMR. As used herein, molecular weight (Mn and Mw) and molecular weight distribution (MWD) refer to the methods disclosed in U.S. Patent No. 4,540,753 and references cited therein and in Macromolecules, 1988, volume 21, pg. 3360 and references cited therein.

## MEASUREMENTS

### Differential Scanning Calorimetry

Differential Scanning Calorimetry (DSC) is described as follows: 6 to 10 mg of a sheet of the polymer pressed at approximately 200 ˚C to 230 ˚C is removed with a punch die or part of a polymer pellet. The sample is placed in a Differential Scanning Calorimeter (Perkin Elmer 7 Series Thermal Analysis System) and cooled to -50 ˚C to -70 ˚C. The sample is heated at 10 ˚C/min to attain a final temperature of 200 ˚C to 220 ˚C. The thermal output during this heating is recorded. The melting peak of the sample is typically peaked at 30 ˚C to 175 ˚C and occurs between the temperatures of 0 ˚C and 200 ˚C. The area under the thermal output curve, measured in Joules, is a measure of the heat of fusion. The melting point is recorded as the temperature of the greatest heat absorption within the range of melting of the sample.

### Morphology of the Blend

The morphology of the blend as made or in the form of fibers and nonwoven fabric is shown in Transmission Electron Microscopy of the blends. In this procedure samples are exposed to vapors of 1% aqueous $RuO_4$ for 3 days. The $RuO_4$ penetrates the amorphous zones of the continuous, less crystalline phase of the polymer while the more crystalline domains composed largely of the SPC arc essentially unaffected. Within the continuous zone the $RuO_4$ stained the microzones of amorphous polymer while the lamellae of crystalline polymer are visible by contrast. The blend is cryomicrotomed at -196 ˚C to thin sections approximately 0.3 to 3 $\mu$m thick. Several sections are analyzed for each sample until a section is found where the crystalline domains is unstained while the continuous phase is stained to distinguish it from the dispersed phase and to observe the microstructure of the lamellae of polymer.

### Fabric Softness

The softness of a nonwoven fabric may be measured according to the "Handle-O-Meter" test as specified in operating manual on Handle-O-Meter model number 211-5 (from the Thwing-Albert Instrument Co., 10960 Dutton Road, Philadelphia, Pennsylvania 19154) with the following modifications: 1) two specimens per sample are used; and 2) readings are kept below 100 gram by adjusting the slot width used and the same slot width is used through out the whole series of samples being compared. In the examples, all samples are tested with a slot width of 10 mm. The Handle-O-Meter reading is in units of grams.

## Tensile and Elongation of the Blend

The FPC and their blends of the current invention have a tensile strength greater than 300 psi (2.1 MPa), or greater than 500 psi (3.5 MPa) or greater than 1000 psi (6.9 MPa).

Tensile and elongation properties are determined at 20 in/min (51 cm/min) according to the procedure described in ASTM D790. The data is reported in engineering units with no correction to the stress for the lateral contraction in the specimen due to tensile elongation. The tensile and elongation properties of embodiments of our invention are evaluated using dumbbell-shaped samples. The samples are compression molded at 180 ˚C to 200 ˚C for 15 minutes at a force of 15 tons (133 kN) into a plaque of dimensions of 6 in x 6 in (15 cm x 15 cm). The cooled plaques are removed and the specimens are removed with a die. The elasticity evaluation of the samples is conducted on an Instron 4465, made by Instron Corporation of 100 Royall Street, Canton, Massachusetts. The digital data is collected in a file collected by the Series IX Material Testing System available from Instron Corporation and analyzed using Excel a spreadsheet program available from Microsoft Corporation of Redmond, Washington.

## Elasticity of the FPC and the blends

The elasticity, represented by the fractional increase in the length of the sample, represented as percent of the length of the sample, is measured according to the general procedure ASTM D790. During tensile elongation, the copolymer sample is stretched, and the polymer attempts to recover its original dimensions when the stretching force is removed. This recovery is not complete, and the final length of the relaxed sample is slightly longer than that of the original sample. Elasticity is represented by the fractional increase in the length of the sample, expressed as a percent of the length of the original un-stretched sample.

The protocol for measuring the elasticity of the sample consists of prestretching the deformable zone of the dumbbell, made according to the procedure described above for the measurement of elongation and tensile strength, which is the narrow portion of the specimen, to 200% of its original length to prestretch the sample. This is conducted at a deformation rate of 10 inches (25 cm) per minute. The sample is relaxed at the same rate to form an analytical specimen which is a prestretched specimen of the original sample. This slightly oriented, or prestretched, sample is allowed to relax for 48 hours, at room temperature, prior to the determination of elasticity. The length of the deformation zone in the sample is measured to be $d_1$. After the 48 hours, it is again deformed at 10 inches per minute for a 200% extension of the deformation zone of the sample and allowed to relax at the same rate. The sample is removed and after 10 minutes of relaxation the sample is measured to have a new length of the deformation zone of $d_2$. The elasticity of the sample as a percent is determined as $100*(d_2-d_1)/d_1$.

Embodiments of the invention have elasticity, as measured by the procedure described above, of less than 30%, or less than 20%, or less than 10%, or less than 8% or less than 5%.

## Tensile and elongation of the fabric

As used herein, the tensile strength and elongation of a fabric may be measured according to the ASTM test D-5035 with four modifications: 1) the jaw width is 5 in instead of 3 in; 2) test speed is 5 in/min instead of 12 in/min; 3) metallic arc-type upper line grip and a flat lower rubber grip instead of a flat metallic upper and a flat metallic of other lower grip, and 6 MD and 6 CD measurements instead of 5 MD and 8 CD measurements are made for each specimen. This test measures the strength in pounds and elongation in percent of a fabric.

## Elasticity or permanent Set of the fabric

As used herein, permanent set can be measured according to the following procedure. The deformable zone (1" wide strip) of the fabric sample is prestretched to 100% of its original length at a deformation rate of 20 in/min in an INSTRON testing machine. The sample is then relaxed at the same rate. The strain at which no further change in stress is observed is taken to be the permanent set. An alternative way to measure permanent set is to measure the length of the sample that is deformed ($D_2$). The length of the deformation zone in the specimen prior to deformation is measured as $D_0$. The permanent set of the sample is determined by the formula: permanent set = $100 \times (D_2-D_0)/D_0$. The permanent set being a ratio of extension and contraction is generally relatively constant for these fabrics regardless of the axis along which the fabric is stretched. In the event of any variation the values in the claim refer to such permanent if it is obtainable in at least on direction of extension.

Extensibility is a key attribute for many applications. As stated above, the tensile strength and elongation of a fabric may be measured according to the ASTM test D-5035 with four modifications: 1) the jaw width is 5 in instead of 3 in; 2) test speed is 5 in/min instead of 12 in/min; 3) metallic arc-type upper line grip and a flat lower rubber grip instead of a flat metallic upper and a flat metallic of other lower grip, and 6 MD and 6 TD measurements instead of 5 MD and 8

TD measurements are made for each specimen. It can be measured as "peak elongation" or "break elongation". Peak elongation is percent increase in length of the specimen when the stress of the specimen is at its maximum. Break elongation is percent increase in length of the specimen when the specimen breaks. The elongation can be measured in the machine direction (MD) of the fabric or the cross direction (CD) of the fabric. The MD elongation is normally lower than the CD due to machine direction orientation of the fibers.

**Melt Flow rate**

The melt flow rate (MFR) is a measure of the viscosity of a polymer. The MFR is expressed as the weight of material which flows from a capillary of known dimensions under a specified load or shear rate for a measured period of time and is measured in grams/10 minutes at 230 ˚C according to, for example, ASTM test 1238-01, Condition B.

**Calculated MFR**

Calculated MFR for the blends is done by linear extrapolation of the composition weighted averages. Thus a blend of A and B components, in weight fraction of Wa and Wb, respectively, leads to Calculated MFR = Wa * MFRa + Wb*MFRb where MFRa and MFRb are the measured MFR of components A and B respectively.

**Brookfield Viscosity**

Melt Viscosity is measured according to ASTM D-3236 using a Brookfield Thermosel viscometer at 190 ˚C and is reported as cps.

**Flexural Modulus of the blend**

Softness of the copolymers of embodiments of the invention may be measured by flexural modulus. Flexural modulus is measured in accordance with ASTM D790, using a Type IV dogbone at crosshead speed of 0.05 in/min (1.3 mm/min). The values of the flexural modulus over the range of composition of the copolymer vary with the tensile strength of the sample as measured by the 500% tensile modulus. Flexural modulus of this family of copolymers is thus represented by two criteria: (a) extensibility to 500% elongation with a measurable modulus (500% tensile modulus); and (b) flexural modulus.

**Softness of the Fabric**

The inventive materials produce fabrics that are substantially softer as compared to conventional nonwoven fabrics. In certain embodiments, the amount of the FPC present in the inventive blends is increased to produce softer and/or more elastic fabrics.

The softness of a nonwoven fabric may be measured according to the "Handle-O-Meter" test as specified in operating manual on Handle-O-Meter model number 211-5 (from the Thwing-Albert Instrument Co., 10960 Dutton Road, Philadelphia, Pennsylvania 19154) with the following modifications: 1) two specimens per sample are used; and 2) readings are kept below 100 gram by adjusting the slot width used and the same slot width is used through out the whole series of samples being compared. In the examples, all samples are tested with a slot width of 10 mm. The Handle-O-Meter reading is in units of grams.

**Measurement of Fiber Properties**

The stress-strain elongation and elastic recovery properties of the fiber are evaluated for a bundle of fibers. The stress strain evaluation of the samples is conducted on an Instron 4465, made by Instron Corporation of 100 Royall Street, Canton, Massachusetts. The digital data is collected in a file collected by the Series IX Material Testing System available from Instron.

The testing procedure stress-stain elongation for the unannealed fibers is the following:

- The specimen consisting of a bundle of 72 fibers is mounted on the Instron and the elongated at 20"/min.
- The maximum elongation of the polymer fiber is recorded as Elongation (unannealed).
- The tensile strength at this elongation is recorded as Tensile Strength (unannealed). The testing procedure stress-stain elongation for the annealed fibers is the following:
- The specimen consisting of a bundle of 72 fibers is mounted on the Instron and the elongated at 20"/min.
- The maximum elongation of the polymer fiber is recorded as Elongation (annealed).

- The tensile strength at this elongation is recorded as Tensile Strength (annealed).

The testing procedure for the elastic recovery is the following:

- The specimen consisting of 720 fibers is mounted on the Instron and elongated at 20"/min to an extension of an additional 400% of the original length.
- The fiber bundle is allowed to retract at the same rate to its original dimension. The elongation and the stress on the fiber bundle are monitored during both the retraction and the elongation cycle at the rate of 20 observations per second.
- The elongation at which the stress is zero on the retraction cycle is defined as the set of the fiber specimen.

## Properties of the Fabric

### Hydrostatic Pressure Test Procedure

"Hydrohead" is a measure of the liquid barrier properties of a fabric. The hydrohead test determines the height of water (in centimeters) which the fabric will support before a predetermined amount of liquid passes through. A fabric with a higher hydrohead reading indicates it has a greater barrier to liquid penetration than a fabric with a lower hydrohead. The hydrohead test can be performed according to Federal Test Standard 191A, Method 5514, or with slight variations of this test as set forth below.

In this test, water pressure is measured to determine how much water pressure is required to induce leakage in three separate areas of a test material. The water pressure is reported in millibars (mbars) at the first sign of leakage in three separate areas of the test specimen. The pressure in millibars can be converted to hydrostatic head height in inches of water by multiplying millibars by 0.402. Pressure measured in terms of inches refers to pressure exerted by a number of inches of water. Hydrostatic pressure is pressure exerted by water at rest.

Apparatus used to carry out the procedure includes a hydrostatic head tester, such as TEXTEST FX-3000 available from ATI Advanced Testing Instruments Corp. of Spartanburg, South Carolina, a 25.7 $cm^2$ test head such as part number FX3000-26 also available from ATI Advanced Testing Instruments Corp., purified water such as distilled, deionized, or purified by reverse osmosis, a stopwatch accurate to 0.1 second, a one-inch circular level, and a cutting device, such as scissors, a paper cutter, or a die-cutter.

Prior to carrying out this procedure, any calibration routines recommended by manufacturers of the apparatus being used should be performed. Using the cutting device, the specimen is cut to the appropriate size. Each specimen has a minimum size that is sufficient to allow material to extend beyond the outer diameter of the test head. For example, the 25.7 $cm^2$ test head requires a 6-inch by 6-inch, or 6-inch diameter specimen. Specimens should be free of unusual holes, tears, folds, wrinkles, or other distortions.

First, make sure the hydrostatic head tester is level. Close the drain faucet at the front of the instrument and pull the upper test head clamp to the left side of the instrument. Pour approximately 0.5 liter of purified water into the test head until the head is filled to the rim. Push the upper test head clamp back onto the dovetail and make sure the plug is inserted into the socket at the left side of the instrument. Turn the instrument on and allow the sensor to stabilize for 15 minutes. Make sure the Pressure Gradient thumbwheel switch is set to 60 mbar/min. Make sure the drain faucet is closed. The water temperature should be maintained at about 23 °C, ±10 °C. Use the Light Intensity adjustment to set the test head illumination for best visibility of water droplets passing through the specimen.

Once the set-up is complete, slide the specimen onto the surface of the water in the test head, from the front side of the tester. Make sure there are no air bubbles under the specimen and that the specimen extends beyond the outer diameter of the test head on all sides. If the upper test head clamp is removed for loading the specimen, push the clamp back onto the dovetail. Pull down the lever to clamp the specimen to the test head and push the lever until it comes to a stop. Press the Reset button to reset the pressure sensor to ZERO. Press the Start/Pause button to start the test. Observe the specimen surface and watch for water passing through the specimen. When water droplets form in three separate areas of the specimen, the test is complete. Any drops that form within approximately 0.13 inch (3.25 mm) of the edge of the clamp should be ignored. If numerous drops or a leak forms at the edge of the clamp, repeat the test with another specimen. Once the test is complete, read the water pressure from the display and record. Press the Reset button to release the pressure from the specimen for removal. Repeat procedure for desired number of specimen repeats.

### Air Permeability

This test determines the airflow rate through a sample for a set area size and pressure. The higher the airflow rate per a given area and pressure, the more open the fabric is, thus allowing more fluid to pass through the fabric. Air

permeability is determined using a pressure of 125 Pa (0.5 inch water column) and is reported in cubic feet per minute per square foot. The air permeability data reported can be obtained using a TEXTEST FX 3300 air permeability tester.

## Fiber Diameter Test Procedures

Fiber diameters are tested using a Scanning Electron Microscope (SEM) Image Analysis of Meltblown Fiber Diameter test. The meltblown web is tested for Count-Based Mean Diameter and Volume-Based Mean Diameter.

## Count-Based Mean Diameter

The count-based mean diameter is the average fiber diameter based on all fiber diameter measurements. For each sample, 300 - 500 fiber diameter measurements are taken.

## Volume-Based Mean Diameter

The volume-based mean diameter is also an average fiber diameter based on all fiber diameter measurements taken. However, the volume-based mean diameter is based on the volume of the fibers measured. The volume is calculated for each test sample and is based on a cylindrical model using the following equation:

$$V=\pi A^2/2\,P$$

where A is the cross-sectional area of the test sample and P is the perimeter of the test sample. Fibers with a larger volume will carry a heavier weighting toward the overall average. For each test sample, 300 to 500 measurements are taken.

## Ethylene content of FPC

The composition of the FPC is measured as ethylene wt% according to the following technique. A thin homogeneous film of the SPC, pressed at a temperature of or greater than 150 °C is mounted on a Perkin Elmer PE 1760 infra red spectrophotometer. A full spectrum of the sample from 600 $cm^{-1}$ to 400 $cm^{-1}$ is recorded and the ethylene wt% of the SPC is calculated according to Equation 1 as follows:

$$\text{ethylene wt\%} = 82.585 - 111.987X + 30.045X^2$$

wherein X is the ratio of the peak height at 1155 $cm^{-1}$ and peak height at either 722 $cm^{-1}$ or 732 $cm^{-1}$, which ever is higher.

## Molecular Weight of the FPC: Bv GPC

Molecular weights (weight average molecular weight (Mw) and number average molecular weight (Mn)) are determined using a Waters 150 Size Exclusion Chromatograph (*SEC*) equipped with a differential refractive index detector (DRI), an online low angle light scattering (LALLS) detector and a viscometer (VIS). The details of the detector calibrations. have been described elsewhere [Reference: T. Sun, P. Brant, R. R. Chance, and W. W. Graessley, Macromolecules, Volume 34, Number 19, 6812-6820, (2001)]; attached below are brief descriptions of the components.

The *SEC* with three Polymer Laboratories PLgel 10mm Mixed-B columns, a nominal flow rate 0.5 $cm^3/min$, and a nominal injection volume 300 $\mu L$ is common to both detector configurations. The various transfer lines, columns and differential refractometer (the *DRI* detector, used mainly to determine eluting solution concentrations) are contained in an oven maintained at 135 °C. The LALLS detector is the model 2040 dual-angle light scattering photometer (Precision Detector Inc.). Its flow cell, located in the *SEC* oven, uses a 690 *nm* diode laser light source and collects scattered light at two angles, 15 °C and 90 °C. Only the 15 °C output is used in these experiments. Its signal is sent to a data acquisition board (National Instruments) that accumulates readings at a rate of 16 per second. The lowest four readings are averaged, and then a proportional signal is sent to the *SEC-LALLS-VIS* computer. The LALLS detector is placed after the *SEC* columns, but before the viscometer.

The viscometer is a high temperature Model 150R (Viscotek Corporation). It consists of four capillaries arranged in a Wheatstone bridge configuration with two pressure transducers. One transducer measures the total pressure drop across the detector, and the other, positioned between the two sides of the bridge, measures a differential pressure.

The specific viscosity for the solution flowing through the viscometer is calculated from their outputs. The viscometer is inside the *SEC* oven, positioned after the LALLS detector but before the DRI detector.

Solvent for the *SEC* experiment is prepared by adding 6 grams of butylated hydroxy toluene (BHT) as an antioxidant to a 4 liter bottle of 1,2,4 Trichlorobenzene (TCB)(Aldrich Reagent grade) and waiting for the BHT to solubilize. The TCB mixture is then filtered through a 0.7 μm glass pre-filter and subsequently through a 0.1 μm Teflon filter. There is an additional online 0.7 μm glass pre-filter/0.22 μm Teflon filter assembly between the high pressure pump and *SEC* columns. The TCB is then degassed with an online degasser (Phenomenex, Model DG-4000) before entering the SEC.

Polymer solutions are prepared by placing dry polymer in a glass container, adding the desired amount of TCB, then heating the mixture at 160 °C with continuous agitation for about 2 hours. All quantities are measured gravimetrically. The TCB densities used to express the polymer concentration in mass/volume units are 1.463 g/ml at room temperature and 1.324 g/ml at 135 °C. The injection concentration ranged from 1.0 to 2.0 mg/ml, with lower concentrations being used for higher molecular weight samples.

Prior to running each sample the DRI detector and the injector are purged. Flow rate in the apparatus is then increased to 0.5 ml/minute, and the DRI is allowed to stabilize for 8 - 9 hours before injecting the first sample. The argon ion laser is turned on 1 to 1.5 hours before running samples by running the laser in idle mode for 20 - 30 minutes and then switching to full power in light regulation mode.

The branching index is measured using *SEC* with an on-line viscometer (*SEC-VIS*) and are reported as g' at each molecular weight in the *SEC* trace. The branching index g' is defined as: where $\eta_b$ is the intrinsic viscosity of the branched polymer and $\eta_1$ is the intrinsic viscosity of a linear polymer of the same viscosity-averaged molecular weight ($M_v$) as the branched polymer. $\eta_l = KM_v^{\alpha}$, K and $\alpha$ are measured values for linear polymers and should be obtained on the same SEC-DRI-LS-VIS instrument as the one used for branching index measurement. For polypropylene samples presented in this invention, K = 0.0002288 and $\alpha$ = 0.705 are used. The SEC-DRI-LS-VIS method obviates the need to correct for polydispersities, since the intrinsic viscosity and the molecular weight are measured at individual elution volumes, which arguably contain narrowly dispersed polymer. Linear polymers selected as standards for comparison should be of the same viscosity average molecular wt. and comonomer content. Linear character for polymer containing C2 to C10 monomers is confirmed by Carbon-13 3 NMR the method of Randall (Rev. Macromol. Chem. Phys., C29 (2&3), p. 285-297).

## Composition Distribution for FPC

Composition distribution of the SPC is measured as described below. About 30 gms of the SPC is cut into small cubes ⅛" on the side. This is introduced into a thick walled glass bottle closed with screw cap along with 50 mg of Irganox1076, an antioxidant commercially available from Ciba-Geigy Corporation. Then, 425 ml of hexane (a principal mixture of normal and iso isomers) is added to the contents of the bottle and the sealed bottle is maintained at 23 °C for 24 hours. At the end of this period, the solution is decanted and the residue is treated with additional hexane for an additional 24 hours. At the end of this period, the two hexane solutions are combined and evaporated to yield a residue of the polymer soluble at 23 °C. To the residue is added sufficient hexane to bring the volume to 425 ml and the bottle is maintained at 31 °C for 24 hours in a covered circulating water bath. The soluble polymer is decanted and the additional amount of hexane is added for another 24 hours at 31 °C prior to decanting. In this manner, fractions of the SPC soluble at 40 °C, 48 °C, 55 °C, and 62 °C are obtained at temperature increases of approximately 8 °C between stages. Further, increases in temperature to 95 °C can be accommodated, if heptane, instead of hexane, is used as the solvent for all temperatures above 60 °C. The soluble polymers are dried, weighed and analyzed for composition, as wt% ethylene content, by the IR technique described above. Soluble fractions obtained in the adjacent temperature increases are the adjacent fractions in the specification above.

## EXAMPLES

## Procedure for the preparation of the FPC

All polymerizations are performed in a liquid filled, single-stage continuous reactor using mixed metallocene catalyst systems. The reactor is a 0.5-liter stainless steel autoclave reactor and is equipped with a stirrer, water cooling/steam heating element with a temperature controller, and a pressure controller. Solvents, propylene, and comonomers (such as hexane and octene) are first purified by passing through a three-column purification system. The purification system consisted of an Oxiclear column (Model # RGP-R1-500 from Labclear) followed by a 5A and a 3A molecular sieve columns. Purification columns are regenerated periodically whenever there is evidence of lower activity of polymerization. Both the 3A and 5A molecular sieve columns are regenerated in-house under nitrogen at a set temperature of 260 °C and 315 °C, respectively. The molecular sieve material is purchased from Aldrich. Oxiclear column is regenerated in the original manufacture. The purified solvents and monomers are then chilled to about -15 °C by passing through a

chiller before being fed into the reactor through a manifold. Solvent and monomers are mixed in the manifold and fed into reactor through a single tube. All liquid flow rates are measured using Brooksfield mass flow meters or Micro-Motion Coriolis-type flow meters.

The catalyst is rac-dimethylsilylbisindenyl hafnium dimethyl (obtained from Albemarle) pre-activated with N,N-dimethylanilinium tetrakis (pentafluorophenyl) (obtained from Albemarle) at a molar ratio of about 1:1 in toluene. The catalyst solution is kept in an inert atmosphere with <1.5 ppm water content and is fed into reactor by a metering pump through a separated line.

As an impurity scavenger, 250 ml of tri-n-octyl aluminum (TNOA) (25 wt% in hexane, Sigma Aldrich) is diluted in 22.83 kilogram of hexane. The TNOA solution is stored in a 37.9-liter cylinder under nitrogen blanket. The solution is used for all polymerization runs until about 90% of consumption, after which a new batch should be prepared. Pumping rates of the TNOA solution varied from polymerization reaction to reaction, ranging from 0 (no scavenger) to 4 ml per minutes.

The reactor is cleaned by continuously pumping solvent (e.g., hexane) and scavenger through the reactor system for at least one hour at a maximum allowed temperature (about 150 ˚C). After cleaning, the reactor is heated/cooled to the desired temperature using a water/steam mixture flowing through the reactor jacket and at a set pressure with a predetermined, desired solvent flow. Monomers and catalyst solutions are fed into the reactor when a steady state of operation is reached. An automatic temperature control system is used to control and maintain the reactor at a set temperature. Onset of polymerization activity can be determined by observation of a viscous product and lower temperature of water-steam mixture. Once the activity is established and the system reaches equilibrium, the reactor is lined out by continuing operating the system under the established condition for a time period of at least five times of mean residence time prior to sample collection. The resulting mixture, containing mostly solvent, polymer and unreacted monomers, is collected in a collection box after the system reaches a steady state operation. The collected samples are first air-dried in a hood to evaporate most of the solvent, and then dried in a vacuum oven at a temperature of about 90 ˚C for about 12 hours. The vacuum oven dried samples are weighed to obtain yields. All the reactions are carried out at a pressure of about 2.41 MPa-g.

**Materials:**

FPC 1: A propylene hexene copolymer with a hexene content of 13 wt%, the balance being propylene with a MFR@230 ˚C of 2200 g/10 min, a Brookfield viscosity of 7000cps at 190 ˚C a Delta H of fusion by DSC of 24 J/g and a MWD of 2.4 obtained in the form of pellets.

FPC 2: A propylene hexene copolymer with a hexene content of 7.6 wt%, the balance being propylene with a MFR@230 ˚C of 2910 g/10 min, a Brookfield viscosity of 7800cps at 190 ˚C a Delta H of fusion by DSC of 76 J/g, a MWD of 2.4 obtained in the form of pellets.

FPC 3: A propylene hexene copolymer with a hexene content of 10.6 wt%, the balance being propylene with a MFR@230 ˚C of 2576 g/10 min, a Brookfield viscosity of 8800cps at 190 ˚C a Delta H of fusion by DSC of 70 J/g, a MWD of 2.3 obtained in the form of pellets.

SPC 1: Escorene PP 3155, a Ziegler-Natta homopolymer iPP with a MFR@230 ˚C of 35 g/10 min available from ExxonMobil Chemical, Houston, Texas.

SPC 2: Escorene PP 3746G, a Homoisotactic iPP with a MFR@230 ˚C of 1400 g/10 min available from ExxonMobil Chemical, Houston, Texas.

SPC 3: B5S2AL785, a Homoisotactic iPP made with a conventional Ziegler-Natta catalysts in a gas phase process with a melting point by DSC in a range of 163 ˚C to 167 ˚C. It has a MFR@230 ˚C of approximately 800 and is available as an experimental sample from ExxonMobil Chemical Co., Houston, Texas.

SPC 4: Achieve 6936G1, a Homoisotactic iPP, made with a metallocene catalyst with a MFR@230 ˚C of 1600 g/10 min available from ExxonMobil Chemical, Houston, Texas.

SPC 5: 5S2AL385, a Homoisotactic iPP made with a conventional Ziegler-Natta catalysts in a gas phase process with a melting point by DSC in a range of 163 ˚C to 167 ˚C. It has a MFR@230 ˚C of approximately 400 and is available as an experimental sample from ExxonMobil Chemical Co., Houston, Texas.

**Example 1 :**

Blends of SPC 1 and FPC 1 according to the Table 1 may be made by melt blending the two components in the weight ratio as in Table 1 in 30 L/d twin screw extruder at zone temperatures of 200 ˚C to 240 ˚C with a mean residence time of 45 seconds. The resulting blend is homogeneous indicating compatible mixing of the ingredients of the mixtures as well as ease of mixing. The mixtures are pelletized into pellets about 3 to 6 mm in length. Rheological measurements of these blends are shown in Figure 1.

The blends in Example 1 are then further characterized by DSC as shown in Table 2

Table 2: Blends of SPC1 and SPC 2

| **Ex 1-** | **1** | **2** | **3** | **4** | **5** | **6** | **7** | **8** |
|---|---|---|---|---|---|---|---|---|
| SPC 1 | 150 | 150 | 135 | 110 | 90 | 65 | 33 | 87 |
| FPC 1 | 0 | 12 | 33 | 65 | 90 | 110 | 150 | 13 |

Table 3: Thermal analysis of the blends in Example 1

| | ***1st melt*** | | ***Crystallization*** | | ***2nd Melt*** | |
|---|---|---|---|---|---|---|
| Sample | Mpt (C) | Heat of Fusion (J/g) | Tc (C) | Heat of Crystall (J/g) | Mpt (C) | Heat of Fusion (J/g) |
| Ex 1-1 | 167 | 112 | 115 | 102 | 166 | 121 |
| Ex 1-2 | 166 | 109 | 119 | 99 | 163 | 117 |
| Ex 1-3 | 165 | 98 | 118 | 91 | 162 | 106 |
| Ex 1-4 | 165 | 96 | 115 | 75 | 165 | 109 |
| Ex 1-5 | 163 | 98 | 113 | 76 | 164 | 103 |
| Ex 1-7 | 160 | 89 | 104 | 62 | 162 | 94 |
| FPC 1 | 110 | 82 | 33 | 38 | 109 | 82 |
| SPC 1 | 166 | 106 | 114 | 99 | 166 | 111 |

**Example 2: Examples of Fiber Formation**

The blends of example 1 may be fabricated into fibers in the partially oriented yarn process. The melt blended resin system containing FPC and SPC is fed into the fiber spinning extruder. The fiber spinning is carried out in a conventional fiber spinning line under POY (partially oriented yarn) mode. It is equipped with a two inch diameter single screw extruder. The molten polymer from the extruder is fed to a melt pump, which delivers the molten polymer to a spinneret. The spinneret contains 72 capillaries, each with a diameter of 0.6 mm. The molten polymer exiting the spinneret is quenched by the cold air at about 15 ˚C and at the speed of about 18 m/min. The quenched fiber is taken up by a mechanical roll (or godet) whose speed can be varied from 0 to 5000 meter/min. To measure the maximum spinning speed of the sample, the output rate is maintained constant at 0.6 gram/hole/min. The speed of the godet is increased gradually which increases the fiber speed and reduces the fiber diameter. The speed is increased until the fiber break occurred. The speed at which the fiber break occurs is the maximum spinning speed. These results of the Partially Oriented yarn data for Blends in Example 1 are shown in Table 4.

Table 4 - Partially Oriented yarn dada for Blends in Example 1

| Ex 1- | 1 | 2 | 3 | 4 | 5 | 6 | 8 |
|---|---|---|---|---|---|---|---|
| MFR | | | | | | | |
| g/10 min | 36 | 44 | 68 | 137 | 227 | 465 | |
| POY | | | | | | | |
| Max. Spin Speed (m/m) | | | | | | | |
| Trial 1 | 4500 | 3660 | 4820 | 4660 | 4040 | 4150 | 3250 |
| Trial 2 | 4620 | 3600 | 4190 | 4320 | 4660 | 4060 | 3300 |
| Trial 3 | 4610 | | 4600 | 4390 | 4210 | 3780 | 3320 |
| Average | 4577 | 3630 | 4537 | 4457 | 4303 | 3997 | 3290 |
| Stick Point (cm) | | | | | | | |
| Sample collected at 1500 m/m | 70 | 75 | 70 | 80 | 130 | 130 | 75 |

(continued)

| Ex 1- | 1 | 2 | 3 | 4 | 5 | 6 | 8 |
|---|---|---|---|---|---|---|---|
| Sample collected at 2000 m/m | 60 | 55 | 60 | 70 | 80 | 130 | 65 |
| Sample collected at 2500 m/m | 50 | 45 | 50 | 60 | 70 | 80 | 55 |
| | | | | | | | |
| Elongation (%) | | | | | | | |
| Sample collected at 1500 m/m | 205 | 211 | 208 | 203 | 218 | 182 | |
| Sample collected at 2000 m/m | 174 | 187 | 191 | 214 | 178 | 157 | |
| Sample collected at 2500 m/m | 165 | 185 | 168 | 173 | 139 | 140 | |
| Tenacity (g/den) | | | | | | | |
| Sample collected at 1500 m/m | 2.0 | 2.0 | 1.9 | 1.8 | 1.8 | 2.0 | |
| Sample collected at 2000 m/m | 2.2 | 2.3 | 2.1 | 2.5 | 2.0 | 2.0 | |
| Sample collected at 2500 m/m | 2.6 | 2.3 | 2.3 | 2.2 | 2.0 | 2.1 | |
| Denier (dpf) | | | | | | | |
| Sample collected at 1500 m/m | 289 | 285 | 283 | 289 | 298 | 292 | |
| Sample collected at 2000 m/m | 208 | 207 | 213 | 210 | 203 | 211 | |
| collected at 2500 m/m | 161 | 166 | 166 | 164 | 168 | 170 | |

**Example 3: Examples of Melt Blown Fabric**

The fabrics may be produced on a 500 mm wide melt blown line manufactured by Reifenhauser GmbH & Co. The processing conditions are as noted below in Table 5. However, a dry blend of FPC and SPC may be dry blended and fed directly into the extruder of the melt blown process.

The dry blended pellets are introduced into the extruder of the melt blown process. After the polymer is melted and homogenized in the extruder, the extruder delivers the homogenized molten polymer to a melt pump, which delivers the molten polymer to the melt blown die. The die consists of a "coat hanger" to distribute the melt from the entrance to the die body to substantially the whole width of the die. The molten polymer filters and flows to the die tip, which is basically a single row of capillaries (melt blown die tip). The capillary of each hole is 0.4 mm in diameter. The molten polymer exiting the die is attenuated by the high velocity air which is heated to near the same temperature as the molten polymer at the die. The air is supplied by a compressor, heated and introduced to the die body. Those who are skilled in the art are familiar with the general set up of the melt blown process. The air gap where the hot air exit is set at 0.8 mm and the set-back of the die tip is set at 0.8 mm. This allows the air to exit at high velocity and attenuation of the fiber. The fiber exiting the die tip is attenuated first by the hot air and then quenched by the ambient air. The melt blown fiber is then collected on the moving porous belt (forming belt) to form the nonwoven melt blown web. The web should have sufficient strength that no thermal bonding is required. The web is then tested for the physical properties. The Melt Blown fabric data from Example 3 is shown in Table 5. The process data for MB fabric data from Example 3 is shown in Tables 6 and 7. Air permeability and hydrohead data from Example 3 is shown in Table 8.

Table 5 - Melt Blown fabric data from Example 3

| Ex. 3 | SPC 2 | SPC 3 | SPC 4 | FPC 1 | | Calculated MFR | Thruput | DCD | Basis Weight |
|---|---|---|---|---|---|---|---|---|---|
| | Wt% | Wt % | Wt% | Wt % | | g/10 min | ghm | inch | gsm |
| | | | | | | | | | |
| 1.1 | 100 | | | 0 | | 1400 | 0.4 | 8" | 34.5 |
| 1.2 | 80 | | | 20 | | 1560 | 0.4 | 8" | 34.6 |
| 1.3 | 60 | | | 40 | | 1720 | 0.4 | 8" | 34.3 |
| 1.4 | 40 | | | 60 | | 1880 | 0.4 | 8" | 34.8 |

(continued)

| Ex. 3 | SPC 2 | SPC 3 | SPC 4 | FPC 1 | | Calculated MFR | Thruput | DCD | Basis Weight |
|---|---|---|---|---|---|---|---|---|---|
| | Wt% | Wt % | Wt% | Wt % | | g/10 min | ghm | inch | gsm |
| 1.5 | 20 | | | 80 | | 2040 | 0.4 | 8" | 35 |
| 1.6 | 0 | | | 100 | | 2200 | 0.4 | 15 | |
| 2.1 | | | 100 | 0 | | 1600 | 0.4 | 8" | 34.7 |
| 2.2 | | | 80 | 20 | | 1720 | 0.4 | 8" | 34.5 |
| 2.3 | | | 60 | 40 | | 1840 | 0.4 | 8" | 34.3 |
| 2.4 | | | 40 | 60 | | 1960 | 0.4 | 8" | 35.9 |
| 2.5 | | | 20 | 80 | | 2080 | 0.4 | 8" | 35.4 |
| 3.1 | | 100 | | 0 | | 800 | 0.4 | 8" | 34.8 |
| 3.2 | | 80 | | 20 | | 1080 | 0.4 | 8" | 34.6 |
| 3.3 | | 80 | | 20 | | 1080 | 0.4 | 10" | 34.7 |
| 3.4 | | 60 | | 40 | | 1360 | 0.4 | 8" | 34.2 |
| 3.5 | | 60 | | 40 | | 1360 | 0.4 | 12" | 34.3 |
| 3.6 | | 40 | | 60 | | 1640 | 0.4 | 8" | 35.4 |
| 3.7 | | 40 | | 60 | | 1640 | 0.4 | 14" | 34.8 |
| 3.8 | | 20 | | 80 | | 1920 | 0.4 | 8" | 35.1 |
| 3.9 | | 20 | | 80 | | 1920 | 0.4 | 16" | 35.4 |
| 3.10 | | 10 | | 90 | | 2060 | 0.4 | 16" | 38.3 |
| 3.11 | | 10 | | 90 | | 2060 | 0.4 | 16" | 34.3 |
| 4.1 | | | | 100 | | 2200 | 0.4 | 15" | 34.5 |
| 4.2 | | | | 100 | | 2200 | 0.4 | 15" | 34 |
| 4.3 | | | | 100 | | 2200 | 0.4 | 15" | 34.3 |
| 4.4 | | | | 100 | | 2200 | 0.4 | 15" | |
| 4.5 | | | | 100 | | 2200 | 0.4 | 15" | 33.9 |
| 4.6 | | | | | Ex 1-7, 100 | | 0.4 | 10" | 33.8 |
| 4.7 | | | | | Ex 1-6, 100 | | 0.4 | 10" | |

Table 6 - Process data for MB fabric data from Example 3

| Sample Number | Extruder Temperature ˚C (˚F) | | | Die Temperature ˚C (˚F) | | | |
|---|---|---|---|---|---|---|---|
| | Zone 1 | Zone 2 | Zone 3 | Zone 8 | Zone 9 | Zone10 | Zone 11 |
| 1.1 | 182.2 (360) | 232.2 (450) | 260.0 (500) | 260.5 (501) | 261.1 (502) | 257.7 (496) | 260.5 (501) |
| 1.2 | 182.2 (360) | 232.2 (450) | 260.0 (500) | 261.1 (502) | 260.0 (500) | 258.3 (497) | 260.0 (500) |
| 1.3 | 182.2 (360) | 232.2 (450) | 260.0 (500) | 260.5 (501) | 261.1 (502) | 257.7 (496) | 260.0 (500) |
| 1.4 | 182.2 (360) | 232.2 (450) | 260.0 (500) | 261.1 (502) | 261.6 (503) | 258.3 (497) | 260.5 (501) |

(continued)

| Sample Number | Extruder Temperature ˚C (˚F) | | | Die Temperature ˚C (˚F) | | | |
|---|---|---|---|---|---|---|---|
| | Zone 1 | Zone 2 | Zone 3 | Zone 8 | Zone 9 | Zone10 | Zone 11 |
| 1.5 | 182.2 (360) | 232.2 (450) | 260.0 (500) | 260.5 (501) | 261.1 (502) | 257.7 (496) | 260.0 (500) |
| 1.6 | 182.2 (360) | 232.2 (450) | 260.0 (500) | 260.5 (501) | 260.5 (501) | 258.3 (497) | 260.5 (501) |
| 2.1 | 182.2 (360) | 232.2 (450) | 260.0 (500) | 260.0 (500) | 260.0 (500) | 257.7 (496) | 260.0 (500) |
| 2.2 | 182.2 (360) | 232.2 (450) | 260.0 (500) | 260.5 (501) | 260.0 (500) | 257.7 (496) | 260.0 (500) |
| 2.3 | 182.2 (360) | 232.2 (450) | 260.0 (500) | 260.5 (501) | 261.1 (502) | 258.3 (497) | 260.5 (501) |
| 2.4 | 182.2 (360) | 232.2 (450) | 260.0 (500) | 260.0 (500) | 260.5 (501) | 257.7 (496) | 260.5 (501) |
| 2.5 | 182.2 (360) | 232.2 (450) | 260.0 (500) | 260.5 (501) | 260.5 (501) | 258.3 (497) | 259.4 (499) |
| 3.1 | 182.2 (360) | 232.2 (450) | 260.0 (500) | 260.0 (500) | 260.0 (500) | 256.6 (494) | 260.0 (500) |
| 3.2 | 182.2 (360) | 232.2 (450) | 260.0 (500) | 259.4 (499) | 260.5 (501) | 257.2 (495) | 260.5 (501) |
| 3.3 | 182.2 (360) | 232.2 (450) | 260.0 (500) | 260.0 (500) | 260.0 (500) | 258.8 (498) | 259.4 (499) |
| 3.4 | 182.2 (360) | 232.2 (450) | 260.0 (500) | 260.5 (501) | 260.5 (501) | 257.7 (496) | 259.4 (499) |
| 3.5 | 182.2 (360) | 232.2 (450) | 260.0 (500) | 260.5 (501) | 260.0 (500) | 258.8 (498) | 259.4 (499) |
| 3.6 | 182.2 (360) | 232.2 (450) | 260.0 (500) | 260.5 (501) | 260.0 (500) | 257.7 (496) | 260.0 (500) |
| 3.7 | 182.2 (360) | 232.2 (450) | 260.0 (500) | 260.0 (500) | 260.5 (501) | 258.3 (497) | 260.0 (500) |
| 3.8 | 182.2 (360) | 232.2 (450) | 260.0 (500) | 260.0 (500) | 260.0 (500) | 258.8 (498) | 261.1 (502) |
| 3.9 | 182.2 (360) | 232.2 (450) | 260.0 (500) | 260.0 (500) | 260.0 (500) | 258.3 (497) | 260.5 (501) |
| 3.10 | 182.2 (360) | 232.2 (450) | 260.0 (500) | 260.5 (501) | 260.5 (501) | 258.3 (497) | 260.0 (500) |
| 3.11 | 182.2 (360) | 232.2 (450) | 260.0 (500) | 260.0 (500) | 260.5 (501) | 258.8 (498) | 260.0 (500) |
| 3.12 | 182.2 (360) | 232.2 (450) | 260.0 (500) | 260.5 (501) | 260.5 (501) | 258.8 (498) | 260.0 (500) |
| 4.1 | 182.2 (360) | 215.5 (420) | 248.8 (480) | 248.3 (479) | 248.8 (480) | 249.4 (481) | 248.8 (480) |
| 4.2 | 182.2 (360) | 210.0 (410) | 237.7 (460) | 237.7 (460) | 237.7 (460) | 237.7 (460) | 236.1 (457) |

(continued)

| Sample Number | Extruder Temperature ˚C (˚F) | | | Die Temperature ˚C (˚F) | | | |
|---|---|---|---|---|---|---|---|
| | Zone 1 | Zone 2 | Zone 3 | Zone 8 | Zone 9 | Zone10 | Zone 11 |
| 4.3 | 182.2 (360) | 210.0 (410) | 237.7 (460) | 237.7 (460) | 237.7 (460) | 238.3 (461) | 236.6 (458) |
| 4.4 | 182.2 (360) | 210.0 (410) | 226.6 (440) | 227.2 (441) | 226.6 (440) | 227.7 (442) | 226.6 (440) |
| 4.5 | 171.1 (340) | 193.3 (380) | 215.5 (420) | 215.5 (420) | 215.0 (419) | 215.5 (420) | 216.1 (421) |
| 4.6 | 171.1 (340) | 193.3 (380) | 215.5 (420) | 216.6 (422) | 216.1 (421) | 216.1 (421) | 216.6 (422) |
| 4.7 | 171.1 (340) | 193.3 (380) | 215.5 (420) | 216.6 (422) | 216.1 (421) | 216.1 (421) | 216.6 (422) |

Table 7 - Process data for MB fabric data from Example 3

| Sample Number | Air Temperature ˚C (˚F) | | | DCD Inch | airpsi | extruder psi | screw rpm | extruder AMP | beltft/ min |
|---|---|---|---|---|---|---|---|---|---|
| | Heater 1 | Heater 2 | Die Exit | | | | | | |
| 1.1 | 230.5 (447) | 263.3 (506) | 260.0 (500) | 8 | 11.5 | 87 | 15 | 3.2 | 30.6 |
| 1.2 | 238.3 (461) | 270.0 (518) | 260.0 (500) | 8 | 11 | 76 | 15 | 3.2 | 31.5 |
| 1.3 | 238.3 (461) | 270.5 (519) | 260.0 (500) | 8 | 10 | 80 | 15 | 3.2 | 30.2 |
| 1.4 | 238.8 (462) | 269.4 (517) | 260.0 (500) | 8 | 7 | 78 | 15 | 3.2 | 30 |
| 1.5 | 238.3 (461) | 268.8 (516) | 260.0 (500) | 8 | 5 | 85 | 15 | 3.2 | 29.8 |
| 1.6 | 238.8 (462) | 270.0 (518) | 260.0 (500) | 15 | 3 | 83 | 15 | 3.2 | 30.6 |
| 2.1 | 238.3 (461) | 268.8 (516) | 260.0 (500) | 8 | 9 | 82 | 16 | 3.2 | 35.3 |
| 2.2 | 235.0 (455) | 267.7 (514) | 260.0 (500) | 8 | 8 | 75 | 16 | 3.2 | 35.8 |
| 2.3 | 234.4 (454) | 268.8 (516) | 260.0 (500) | 8 | 6 | 77 | 16 | 3.2 | 34.8 |
| 2.4 | 235.0 (455) | 271.6 (515) | 260.0 (500) | 8 | 5 | 80 | 16 | 3.2 | 33.1 |
| 2.5 | 235.5 (456) | 267.7 (514) | 260.0 (500) | 8 | 3.5 | 81 | 16 | 3.2 | 33.6 |
| 3.1 | 242.2 (468) | 271.6 (521) | 260.0 (500) | 8 | 23 | 82 | 18 | 3.3 | 32.8 |
| 3.2 | 240.5 (465) | 270.5 (519) | 260.0 (500) | 8 | 18 | 79 | 18 | 3.3 | 32.3 |

(continued)

| Sample Number | Air Temperature ˚C (˚F) | | | DCD Inch | airpsi | extruder psi | screw rpm | extruder AMP | beltft/ min |
|---|---|---|---|---|---|---|---|---|---|
| | Heater 1 | Heater 2 | Die Exit | | | | | | |
| 3.3 | 237.7 (460) | 271.6 (515) | 260.0 (500) | 10 | 18 | 79 | 18 | 3.3 | 32.5 |
| 3.4 | 236.6 (458) | 267.7 (514) | 260.0 (500) | 8 | 15 | 70 | 18 | 3.3 | 33 |
| 3.5 | 236.6 (458) | 271.6 (515) | 260.0 (500) | 12 | 16.5 | 70 | 18 | 3.3 | 32.8 |
| 3.6 | 236.1 (457) | 267.7 (514) | 260.0 (500) | 8 | 9.5 | 65 | 18 | 3.3 | 31.6 |
| 3.7 | 236.6 (458) | 271.6 (515) | 260.0 (500) | 14 | 11.5 | 66 | 18 | 3.3 | 32.7 |
| 3.8 | 235.5 (456) | 267.7 (514) | 260.0 (500) | 8 | 7.5 | 68 | 18 | 3.3 | 31.8 |
| 3.9 | 236.1 (457) | 271.6 (515) | 260.0 (500) | 16 | 10 | 70 | 18 | 3.3 | 31.5 |
| 3.10 | 236.1 (457) | 267.7 (514) | 260.0 (500) | 8 | 4.5 | 71 | 18 | 3.3 | 29.1 |
| 3.11 | 235.5 (456) | 267.2 (513) | 260.0 (500) | 16 | 6 | 69 | 18 | 3.3 | 32.8 |
| 3.12 | 235.5 (456) | 266.6 (512) | 260.0 (500) | 18 | 8 | 70 | 18 | 3.3 | 32.6 |
| 4.1 | 198.8 (390) | 232.2 (450) | 248.8 (480) | 15 | 5 | 70 | 16 | 3.2 | 31.6 |
| 4.2 | 193.3 (380) | 226.6 (440) | 237.7 (460) | 15 | 8 | 68 | 16 | 3.2 | 32.4 |
| 4.3 | 193.8 (381) | 228.8 (444) | 237.7 (460) | 8 | 6 | 71 | 16 | 3.2 | 32.8 |
| 4.4 | 160.0 (320) | 198.8 (390) | 226.6 (440) | 15 | 10.5 | 70 | 16 | 3.2 | 31.3 |
| 4.5 | 154.4 (310) | 182.2 (360) | 215.5 (420) | 15 | 12 | 72 | 16 | 3.2 | 31.5 |
| 4.6 | 148.8 (300) | 179.4 (355) | 215.5 (420) | 8 | 13 | 71 | 16 | 3.2 | 32.6 |
| 4.7 | 148.8 (300) | 179.4 (355) | 215.5 (420) | 15 | 16 | 70 | 16 | 3.2 | 32.9 |

Table 8 - Air permeability and hydrohead data for MB fabric data from Example 3

| | **Sample** | **1.1** | **1.2** | **1.3** | **1.4** | **1.5** | **1.6** | **2.1** | **2.2** |
|---|---|---|---|---|---|---|---|---|---|
| Hydrohead (mbar) | Avg | 61.4 | 67.8 | 68.9 | 55.3 | 42.9 | 28.8 | 54.3 | 45.1 |
| | StdDev | 6.69 | 4.50 | 7.43 | 4.73 | 3.88 | 7.77 | 2.22 | 7.18 |
| | CV% | 10.90 | 6.64 | 10.79 | 8.57 | 9.05 | 27.04 | 4.09 | 15.91 |
| Air | Avg | 67.7 | 52.5 | 41.5 | 40.8 | 31.0 | 92.8 | 58.6 | 49.2 |

(continued)

| | Sample | 1.1 | 1.2 | 1.3 | 1.4 | 1.5 | 1.6 | 2.1 | 2.2 |
|---|---|---|---|---|---|---|---|---|---|
| Permeability($ft^3/ft^2/min$) | StdDev | 1.16 | 3.15 | 1.85 | 1.65 | 2.49 | 4.03 | 4.30 | 3.34 |
| | RSD% | 1.71 | 6.01 | 4.47 | 4.05 | 8.04 | 4.35 | 7.34 | 6.80 |
| | | | | | | | | | |
| | **Sample** | **2.3** | **2.4** | **2.5** | **3.1** | **3.2** | **3.3** | **3.4** | **3.5** |
| Hydrohead (mbar) | Avg | 33.1 | 35.5 | 28.6 | 55.0 | 68.4 | 53.4 | 68.5 | 49.9 |
| | StdDev | 3.84 | 3.39 | 3.22 | 1.22 | 0.48 | 1.65 | 3.44 | 2.39 |
| | CV% | 11.59 | 9.55 | 11.26 | 2.23 | 0.70 | 3.10 | 5.02 | 4.80 |
| Air Permeability($ft^3/ft^2/min$) | Avg | 46.5 | 34.5 | 34.2 | 70.1 | 60.7 | 79.7 | 49.5 | 85.2 |
| | StdDev | 2.58 | 1.56 | 2.65 | 2.03 | 2.81 | 2.14 | 1.54 | 5.44 |
| | RSD% | 5.56 | 4.52 | 7.73 | 2.90 | 4.62 | 2.68 | 3.12 | 6.39 |
| | | | | | | | | | |
| | **Sample** | **3.6** | **3.7** | **3.8** | **3.9** | **3.10** | **3.11** | **3.12** | **4.1** |
| Hydrohead (mbar) | Avg | 64.4 | 44.1 | 45.5 | 66.5 | 40.1 | 49.9 | 64.3 | 25.0 |
| | StdDev | 6.57 | 0.85 | 2.97 | 3.44 | 0.85 | 2.75 | 8.78 | 5.15 |
| | CV% | 10.21 | 1.94 | 6.53 | 5.17 | 2.13 | 5.51 | 13.66 | 20.59 |
| Air Permeability($ft^3/ft^2/min$) | Avg | 45.2 | 99.2 | 56.6 | 59.2 | 31.5 | 85.0 | 43.4 | 88.4 |
| | StdDev | 2.69 | 4.39 | 3.39 | 3.06 | 2.71 | 4.70 | 2.37 | 8.69 |
| | RSD% | 5.96 | 4.42 | 5.99 | 5.17 | 8.59 | 5.53 | 5.46 | 9.84 |
| | | | | | | | | | |
| | **Sample** | **4.2** | **4.3** | **4.4** | **4.5** | **4.6** | **4.7** | | |
| Hydrohead (mbar) | Avg | 41.4 | 37.3 | 43.8 | 40.0 | 48.9 | 43.4 | | |
| | StdDev | 2.95 | 2.33 | 4.41 | 3.03 | 4.63 | 2.78 | | |
| | CV% | 7.14 | 6.25 | 10.07 | 7.57 | 9.46 | 6.41 | | |
| Air Permeability($ft^3/ft^2/min$) | Avg | 77.3 | 29.2 | 71.5 | 85.2 | 51.4 | 85.3 | | |
| | StdDcv | 7.86 | 4.11 | 2.74 | 8.05 | 3.67 | 4.94 | | |
| | RSD% | 10.17 | 14.07 | 3.83 | 9.44 | 7.14 | 5.79 | | |

**Example 4: Example of Melt Blown fabric formation**

Granules of the following polymers as in Table 9 may be converted into melt blown fabric using the procedure outlined in Example 3. The composition data and fabric formation data for blends in Example 4 are shown in Table 9. Table 10 shows process data for blends in Example 4. Tables 11 and 12 show fabric data for blends of example 4.

Table 9 - Composition data and fabric formation data for blends in Example 4

| Ex 4- | SPC 2 | SPC 3 | SPC 4 | SPC 5 | FPC 2 | FPC 3 | FPC 1 | Calculated MFR g/10 min | Die Temp ˚C (˚F) | Air Temp Set˚C (˚F) | Thruput ghm |
|---|---|---|---|---|---|---|---|---|---|---|---|
| 1.1 | 100 | | | | | | | 1400 | 260.0 (500) | 260.0 (500) | 0.4 |
| 1.2 | 100 | | | | | | | 1400 | 260.0 (500) | 260.0 (500) | 0.4 |

(continued)

| Ex 4- | SPC 2 | SPC 3 | SPC 4 | SPC 5 | FPC 2 | FPC 3 | FPC 1 | Calculated MFR g/10 min | Die Temp ˚C (˚F) | Air Temp Set˚C (˚F) | Thruput ghm |
|---|---|---|---|---|---|---|---|---|---|---|---|
| 1.3 | 80 | | | | 20 | | | 1702 | 260.0 (500) | 260.0 (500) | 0.4 |
| 1.4 | 80 | | | | | 20 | | 1635.2 | 260.0 (500) | 260.0 (500) | 0.4 |
| 1.5 | 80 | | | | | | 20 | 1560 | 260.0 (500) | 260.0 (500) | 0.4 |
| 1.6 | 60 | | | | 40 | | | 2004 | 260.0 (500) | 260.0 (500) | 0.4 |
| 1.7 | 60 | | | | | 40 | | 1870.4 | 260.0 (500) | 260.0 (500) | 0.4 |
| 1.8 | 40 | | | | 60 | | | 2306 | 260.0 (500) | 260.0 (500) | 0.4 |
| 1.9 | 40 | | | | | 60 | | 2105.6 | 260.0 (500) | 260.0 (500) | 0.4 |
| 1.10 | 20 | | | | 80 | | | 2608 | 260.0 (500) | 260.0 (500) | 0.4 |
| 1.11 | 20 | | | | | 80 | | 2340.8 | 260.0 (500) | 260.0 (500) | 0.4 |
| 1.12 | 20 | | | | | | 80 | 2040 | 260.0 (500) | 260.0 (500) | 0.4 |
| 2.1 | | | | | | | 100 | 2200 | 260.0 (500) | 260.0 (500) | 0.4 |
| 2.2 | | | | | | | 100 | 2200 | 260.0 (500) | 260.0 (500) | 0.4 |
| 2.3 | | | | | | | 100 | 2200 | 260.0 (500) | 260.0 (500) | 0.4 |
| 2.4 | 5 | | | | | | 95 | 2160 | 260.0 (500) | 260.0 (500) | 0.4 |
| 2.5 | 10 | | | | | | 90 | 2120 | 260.0 (500) | 260.0 (500) | 0.4 |
| 2.6 | | | | | | 100 | | 2576 | 260.0 (500) | 260.0 (500) | 0.4 |
| 2.7 | | | | | | 100 | | 2576 | 260.0 (500) | 260.0 (500) | 0.4 |
| 2.8 | | | | | | 100 | | 2576 | 260.0 (500) | 260.0 (500) | 0.4 |
| 2.9 | 5 | | | | | 95 | | 2517.2 | 260.0 (500) | 260.0 (500) | 0.4 |
| 2.10 | 10 | | | | | 90 | | 2458.4 | 260.0 (500) | 260.0 (500) | 0.4 |
| 2.11 | | | | | 100 | | | 2910 | 260.0 (500) | 260.0 (500) | 0.4 |

(continued)

| Ex 4- | SPC 2 | SPC 3 | SPC 4 | SPC 5 | FPC 2 | FPC 3 | FPC 1 | Calculated MFR g/10 min | Die Temp ˚C (˚F) | Air Temp Set˚C (˚F) | Thruput ghm |
|---|---|---|---|---|---|---|---|---|---|---|---|
| 2.12 | | | | | 100 | | | 2910 | 260.0 (500) | 260.0 (500) | 0.4 |
| 2.13 | | | | | 100 | | | 2910 | 260.0 (500) | 260.0 (500) | 0.4 |
| 2.14 | 5 | | | | 95 | | | 2834.5 | 260.0 (500) | 260.0 (500) | 0.4 |
| 2.15 | 10 | | | | 90 | | | 2759 | 260.0 (500) | 260.0 (500) | 0.4 |
| 2.16 | | | | | 100 | | | 2910 | 243.3 (470) | 243.3 (470) | 0.4 |
| 2.17 | | | | | 100 | | | 2910 | 243.3 (470) | 243.3 (470) | 0.4 |
| 2.18 | | | | | 100 | | | 2910 | 243.3 (470) | 243.3 (470) | 0.4 |
| 2.19 | | 5 | | | 95 | | | 2804.5 | 243.3 (470) | 243.3 (470) | 0.4 |
| 2.20 | | 10 | | | 90 | | | 2699 | 243.3 (470) | 243.3 (470) | 0.4 |
| 2.21 | | | | | | 100 | | 2576 | 243.3 (470) | 243.3 (470) | 0.4 |
| 2.22 | | | | | | 100 | | 2576 | 243.3 (470) | 243.3 (470) | 0.4 |
| 2.23 | | | | | | 100 | | 2576 | 243.3 (470) | 243.3 (470) | 0.4 |
| 2.24 | | 5 | | | | 95 | | 2487.2 | 243.3 (470) | 243.3 (470) | 0.4 |
| 2.25 | | 10 | | | | 90 | | 2398.4 | 243.3 (470) | 243.3 (470) | 0.4 |
| 2.26 | | | | | | | 100 | 2200 | 243.3 (470) | 243.3 (470) | 0.4 |
| 2.27 | | | | | | | 100 | 2200 | 243.3 (470) | 243.3 (470) | 0.4 |
| 2.28 | | | | | | | 100 | 2200 | 243.3 (470) | 243.3 (470) | 0.4 |
| 2.29 | | 5 | | | | | 95 | 2130 | 243.3 (470) | 243.3 (470) | 0.4 |
| 2.30 | | 10 | | | | | 90 | 2060 | 243.3 (470) | 243.3 (470) | 0.4 |
| 2.31 | | | | | | | 100 | 2200 | 226.6 (440) | 226.6 (440) | 0.4 |
| 2.32 | | | | | | | 100 | 2200 | 226.6 (440) | 226.6 (440) | 0.4 |

(continued)

| Ex 4- | SPC 2 | SPC 3 | SPC 4 | SPC 5 | FPC 2 | FPC 3 | FPC 1 | Calculated MFR g/10 min | Die Temp ˚C (˚F) | Air Temp Set˚C (˚F) | Thruput ghm |
|---|---|---|---|---|---|---|---|---|---|---|---|
| 2.33 | | | | | | | 100 | 2200 | 226.6 (440) | 226.6 (440) | 0.4 |
| 2.34 | | | | | | 100 | | 2576 | 226.6 (440) | 226.6 (440) | 0.4 |
| 2.35 | | | | | | 100 | | 2576 | 226.6 (440) | 226.6 (440) | 0.4 |
| 2.36 | | | | | | 100 | | 2576 | 226.6 (440) | 226.6 (440) | 0.4 |
| 2.37 | | | | | 100 | | | 2910 | 226.6 (440) | 226.6 (440) | 0.4 |
| 2.38 | | | | | 100 | | | 2910 | 226.6 (440) | 226.6 (440) | 0.4 |
| 2.39 | | | | | 100 | | | 2910 | 226.6 (440) | 226.6 (440) | 0.4 |
| 2.40 | | | | | 100 | | | 2910 | 210.0 (410) | 210.0 (410) | 0.4 |
| 2.41 | | | | | 100 | | | 2910 | 210.0 (410) | 210.0 (410) | 0.4 |
| 2.42 | | | | | 100 | | | 2910 | 210.0 (410) | 210.0 (410) | 0.4 |
| 2.43 | | 5 | | | 95 | | | 2804.5 | 210.0 (410) | 210.0 (410) | 0.4 |
| 2.44 | | 10 | | | 90 | | | 2699 | 210.0 (410) | 210.0 (410) | 0.4 |
| 2.45 | | | | | | 100 | | 2576 | 210.0 (410) | 210.0 (410) | 0.4 |
| 2.46 | | | | | | 100 | | 2576 | 210.0 (410) | 210.0 (410) | 0.4 |
| 2.47 | | | | | | 100 | | 2576 | 210.0 (410) | 210.0 (410) | 0.4 |
| 2.48 | | 5 | | | | 95 | | 2487.2 | 210.0 (410) | 210.0 (410) | 0.4 |
| 2.49 | | 10 | | | | 90 | | 2398.4 | 210.0 (410) | 210.0 (410) | 0.4 |
| 2.50 | | | | | | | 100 | 2200 | 210.0 (410) | 210.0 (410) | 0.4 |
| 2.51 | | | | | | | 100 | 2200 | 210.0 (410) | 210.0 (410) | 0.4 |
| 2.52 | | | | | | | 100 | 2200 | 210.0 (410) | 210.0 (410) | 0.4 |
| 2.53 | | 5 | | | | | 95 | 2130 | 210.0 (410) | 210.0 (410) | 0.4 |

(continued)

| Ex 4- | SPC 2 | SPC 3 | SPC 4 | SPC 5 | FPC 2 | FPC 3 | FPC 1 | Calculated MFR g/10 min | Die Temp ˚C (˚F) | Air Temp Set˚C (˚F) | Thruput ghm |
|---|---|---|---|---|---|---|---|---|---|---|---|
| 2.54 | | 10 | | | | | 90 | 2060 | 210.0 (410) | 210.0 (410) | 0.4 |
| 3.1 | | | 100 | | | | | 1600 | 260.0 (500) | 260.0 (500) | 0.4 |
| 3.2 | | | 80 | | 20 | | | 1862 | 260.0 (500) | 260.0 (500) | 0.4 |
| 3.3 | | | 80 | | | 20 | | 1795.2 | 260.0 (500) | 260.0 (500) | 0.4 |
| 3.4 | | | 80 | | | | 20 | 1720 | 260.0 (500) | 260.0 (500) | 0.4 |
| 3.5 | | | 60 | | 40 | | | 2124 | 260.0 (500) | 260.0 (500) | 0.4 |
| 3.6 | | | 60 | | | 40 | | 1990.4 | 260.0 (500) | 260.0 (500) | 0.4 |
| 3.7 | | | 40 | | 60 | | | 2386 | 260.0 (500) | 260.0 (500) | 0.4 |
| 3.8 | | | 40 | | | 60 | | 2185.6 | 260.0 (500) | 260.0 (500) | 0.4 |
| 3.9 | | | 20 | | 80 | | | 2648 | 260.0 (500) | 260.0 (500) | 0.4 |
| 3.10 | | | 20 | | | 80 | | 2380.8 | 260.0 (500) | 260.0 (500) | 0.4 |
| 3.11 | | | 20 | | | | 80 | 2080 | 260.0 (500) | 260.0 (500) | 0.4 |

Table 10 - Fabric data for Blends of Example 4

| Ex 4- | DCD Inch | airpsi | extruder psi | screw rpm | extruder AMP | beltft/min | basis weight |
|---|---|---|---|---|---|---|---|
| 1.1 | 8 | 7 | 42 | 18 | 3.1 | 31 | 34.3 |
| 1.2 | 8 | 7 | 41 | 18 | 3.1 | 31 | 34.1 |
| 1.3 | 8 | 7 | 44 | 18 | 3.1 | 31 | 36.4 |
| 1.4 | 8 | 7 | 49 | 18 | 3.1 | 31 | 35.6 |
| 1.5 | 8 | 7 | 48 | 18 | 3.1 | 31 | 36.2 |
| 1.6 | 8 | 7 | 48 | 18 | 3.2 | 31 | 35.1 |
| 1.7 | 8 | 7 | 50 | 18 | 3.2 | 31 | 35.5 |
| 1.8 | 8 | 7 | 49 | 18 | 3.2 | 31 | 35.8 |
| 1.9 | 8 | 7 | 51 | 18 | 3.2 | 31 | 35.9 |
| 1.10 | 8 | 6 | 52 | 18 | 3.2 | 31 | 35.2 |
| 1.11 | 8 | 5.5 | 51 | 18 | 3.2 | 31 | 36.1 |
| 1.12 | 8 | 5 | 53 | 18 | 3.2 | 31 | 34.9 |

(continued)

| Ex 4- | DCD Inch | airpsi | extruder psi | screw rpm | extruder AMP | beltft/min | basis weight |
|---|---|---|---|---|---|---|---|
| 2.1 | 8 | | | | | | |
| 2.2 | 12 | 4 | 46 | 18 | 3.2 | 31 | 34.3 |
| 2.3 | 15 | 4.5 | 48 | 18 | 3.2 | 31 | 29 |
| 2.4 | 15 | 5.5 | 53 | 18 | 3.2 | 31 | 32.5 |
| 2.5 | 15 | 6.5 | 52 | 18 | 3.2 | 31 | 37.2 |
| 2.6 | 8 | | | | | | |
| 2.7 | 10 | 6 | 51 | 18 | 3.2 | 31 | 36 |
| 2.8 | 15 | 6.5 | 50 | 18 | 3.2 | 31 | 34.6 |
| 2.9 | 15 | 7 | 54 | 18 | 3.2 | 31 | 38.2 |
| 2.10 | 15 | 7 | 57 | 18 | 3.2 | 31 | 36.1 |
| 2.11 | 8 | 2 | 60 | 18 | 3.2 | 31 | 34.6 |
| 2.12 | 12 | 5 | 61 | 18 | 3.2 | 31 | 34.6 |
| 2.13 | 15 | 6 | 57 | 18 | 3.2 | 31 | 34.6 |
| 2.14 | 15 | 7 | 60 | 18 | 3.2 | 31 | 34 |
| 2.15 | 15 | 7 | 62 | 18 | 3.2 | 31 | 34 |
| 2.40 | 8 | 11.5 | 38 | 18 | 3.2 | 31 | 37.6 |
| 2.41 | 12 | 12 | 37 | 18 | 3.2 | 31 | 35.3 |
| 2.42 | 15 | 12.5 | 37 | 18 | 3.2 | 31 | 35.4 |
| 2.43 | 15 | 14.5 | 35 | 18 | 3.2 | 31 | 36.5 |
| 2.44 | 15 | 15 | 36 | 18 | 3.2 | 31 | 37.2 |
| 2.45 | 8 | 14.5 | 35 | 18 | 3.2 | 31 | 35.5 |
| 2.46 | 12 | 15 | 36 | 18 | 3.2 | 31 | 35 |
| 2.47 | 15 | 15.5 | 36 | 18 | 3.2 | 31 | 34 |
| 2.48 | 15 | 16.5 | 37 | 18 | 3.2 | 31 | 36.1 |
| 2.49 | 15 | 17 | 37 | 18 | 3.2 | 31 | 34.6 |
| 2.50 | 8 | 8 | 38 | 18 | 3.2 | 31 | |
| 2.51 | 12 | 10 | 38 | 18 | 3.2 | 31 | 33.2 |
| 2.52 | 15 | 10 | 40 | 18 | 3.2 | 31 | 29 |
| 2.53 | 15 | 11.5 | 38 | 18 | 3.2 | 31 | 36.1 |
| 2.54 | 15 | 12 | 39 | 18 | 3.2 | 31 | 35.8 |
| 2.31 | 8 | 7.5 | 40 | 18 | 3.2 | 31 | |
| 2.32 | 12 | 8 | 41 | 18 | 3.2 | 31 | 36.8 |
| 2.33 | 15 | 8.5 | 39 | 18 | 3.2 | 31 | 33.9 |
| 2.34 | 8 | 10 | 44 | 18 | 3.2 | 31 | 35.8 |
| 2.35 | 12 | 11 | 42 | 18 | 3.2 | 31 | 36.3 |
| 2.36 | 15 | 12 | 41 | 18 | 3.2 | 31 | 32 |
| 2.37 | 8 | 8 | 39 | 18 | 3.2 | 31 | 35.5 |
| 2.38 | 12 | 9.5 | 38 | 18 | 3.2 | 31 | 36.2 |

(continued)

| Ex 4- | DCD Inch | airpsi | extruder psi | screw rpm | extruder AMP | beltft/min | basis weight |
|---|---|---|---|---|---|---|---|
| 2.39 | 15 | 10.5 | 38 | 18 | 3.2 | 31 | 37.3 |
| 2.16 | 8 | 4 | 51 | 18 | 3.2 | 31 | 35.7 |
| 2.17 | 12 | 6 | 47 | 18 | 3.2 | 31 | 33.7 |
| 2.18 | 15 | 7.5 | 47 | 18 | 3.2 | 31 | 33 |
| 2.21 | 8 | 5 | 46 | 18 | 3.2 | 31 | 32.2 |
| 2.22 | 12 | 6.5 | 44 | 18 | 3.2 | 31 | 40 |
| 2.23 | 15 | 7.5 | 44 | 18 | 3.2 | 31 | 40.2 |
| 2.26 | 8 | | | | | | |
| 2.27 | 12 | 5.5 | 45 | 18 | 3.2 | 31 | 44 |
| 2.28 | 15 | 6.5 | 46 | 18 | 3.2 | 31 | 35.4 |

Table 11 - Air permeability data in ft3/ft2.min for Fabric of example 4

| | | | | | | | | | | | | | |
|---|---|---|---|---|---|---|---|---|---|---|---|---|---|
| Sample | **1.1** | **1.2** | **1.3** | **1.4** | **1.5** | **2.16** | **.17** | **2.18** | **2.21** | **2.22** | **2.23** | **2.27** | **2.28** |
| Avg | 38.3 | 38.3 | 29.5 | 29.8 | 27.0 | 66.1 | 68.2 | 77.8 | 42.5 | 65.7 | 77.9 | 51.0 | 42.4 |
| StdDev | 1.80 | 1.70 | 3.07 | 1.13 | 1.25 | 5.18 | 4.41 | 5.17 | 1.86 | 1.56 | 1.96 | 1.70 | 2.93 |
| RSD% | 4.70 | 4.45 | 10.42 | 3.80 | 4.65 | 7.83 | 6.47 | 6.65 | 4.37 | 2.37 | 2.51 | 3.34 | 6.91 |
| | | | | | | | | | | | | | |
| Sample | **1.6** | **1.7** | **1.8** | **1.9** | **1.10** | **2.32** | **2.33** | **2.34** | **2.35** | **2.36** | **2.37** | **2.38** | **2.39** |
| Avg | 29.3 | 23.4 | 26.0 | 31.8 | 15.6 | 60.9 | 79.6 | 49.0 | 85.5 | 90.9 | 54.2 | 76.1 | 125.4 |
| StdDev | 0.82 | 0.72 | 1.84 | 6.52 | 1.17 | 2.91 | 7.10 | 3.53 | 5.18 | 3.35 | 2.01 | 2.86 | 8.42 |
| RSD% | 2.79 | 3.06 | 7.08 | 20.53 | 7.46 | 4.78 | 8.92 | 7.21 | 6.06 | 3.69 | 3.71 | 3.76 | 6.72 |
| | | | | | | | | | | | | | |
| Sample | **1.11** | **1.12** | **2.2** | **2.3** | **2.4** | | | | | | | | |
| Avg | 19.9 | 23.8 | 25.7 | 104.9 | 28.4 | | | | | | | | |
| StdDev | 0.82 | 3.42 | 4.17 | 7.88 | 1.59 | | | | | | | | |
| RSD% | 4.14 | 14.37 | 16.21 | 7.51 | 5.60 | | | | | | | | |
| | | | | | | | | | | | | | |
| Sample | **2.5** | **2.7** | **2.8** | **2.9** | **2.10** | | | | | | | | |
| Avg | 30.8 | 32.2 | 27.5 | 27.2 | 29.3 | | | | | | | | |
| StdDev | 2.51 | 2.29 | 2.95 | 2.09 | 4.55 | | | | | | | | |
| RSD% | 8.14 | 7.11 | 10.74 | 7.69 | 15.52 | | | | | | | | |
| | | | | | | | | | | | | | |
| Sample | **2.11** | **2.12** | **2.13** | **2.14** | **2.15** | | | | | | | | |
| Avg | 25.8 | 25.0 | 29.5 | 31.7 | 31.7 | | | | | | | | |

(continued)

| | | | | | | | | | | | | | |
|---|---|---|---|---|---|---|---|---|---|---|---|---|---|
| Sample | **2.11** | **2.12** | **2.13** | **2.14** | **2.15** | | | | | | | | |
| StdDev | 1.95 | 2.92 | 2.25 | 1.34 | 1.34 | | | | | | | | |
| RSD% | 7.53 | 11.68 | 7.64 | 4.24 | 4.24 | | | | | | | | |
| | | | | | | | | | | | | | |
| Sample | **2.40** | **2.41** | **2.42** | **2.43** | **2.44** | | | | | | | | |
| Avg | 31.7 | 42.9 | 53.8 | 46.5 | 49.4 | | | | | | | | |
| StdDev | 0.95 | 3.46 | 3.21 | 2.99 | 2.61 | | | | | | | | |
| RSD% | 3.01 | 8.08 | 5.97 | 6.43 | 5.27 | | | | | | | | |
| | | | | | | | | | | | | | |
| Sample | **2.46** | **2.47** | **2.48** | **2.49** | **2.51** | | | | | | | | |
| Avg | 52.7 | 64.8 | 57.5 | 57.6 | 45.1 | | | | | | | | |
| StdDev | 3.50 | 2.33 | 0.99 | 1.09 | 1.90 | | | | | | | | |
| RSD% | 6.65 | 3.59 | 1.72 | 1.90 | 4.22 | | | | | | | | |
| | | | | | | | | | | | | | |
| Sample | **2.52** | **2.53** | **2.54** | | | | | | | | | | |
| Avg | 61.0 | 54.9 | 64.7 | | | | | | | | | | |
| StdDev | 2.00 | 3.01 | 2.30 | | | | | | | | | | |
| RSD% | 3.28 | 5.49 | 3.56 | | | | | | | | | | |

Table 12 - Hydrohead data in mm Hg for Fabric of example 4

| | | | | | | | | | | | |
|---|---|---|---|---|---|---|---|---|---|---|---|
| Sample | 1.1 | 1.2 | 1.3 | 1.4 | 1.5 | 1.6 | 1.7 | 1.8 | 1.9 | 1.10 | |
| Avg | 60.1 | 57.1 | 62.6 | 63.6 | 65.0 | 59.1 | 59.6 | 65.0 | 65.0 | 71.8 | |
| StdDev | 1.75 | 3.42 | 3.45 | 2.39 | 1.08 | 3.07 | 3.09 | 5.70 | 1.47 | 3.97 | |
| CV% | 2.91 | 6.00 | 5.51 | 3.76 | 1.66 | 5.18 | 5.19 | 8.77 | 2.26 | 5.53 | |
| Sample | 1.11 | 1.12 | 2.2 | 2.3 | 2.4 | 2.5 | 2.7 | 2.8 | 2.9 | 2.10 | 2.11 |
| Avg | 56.0 | 55.4 | 53.0 | 80.8 | 72.0 | 63.6 | 64.5 | 65.3 | 56.9 | 57.6 | 24.8 |
| StdDev | 1.00 | 2.17 | 0.91 | 5.92 | 7.04 | 2.53 | 4.74 | 2.22 | 1.31 | 7.20 | 2.60 |
| CV% | 1.79 | 3.93 | 1.72 | 7.34 | 9.77 | 3.97 | 7.35 | 3.40 | 2.31 | 12.50 | 10.50 |
| Sample | 2.12 | 2.13 | 2.14 | 2.15 | 2.16 | 2.17 | 2.18 | 2.21 | 2.22 | 2.23 | |
| Avg | 79.8 | 74.9 | 70.8 | 74.8 | 43.0 | 62.6 | 60.3 | 38.8 | 52.9 | 51.0 | |
| StdDev | 1.32 | 4.37 | 1.85 | 2.22 | 1.22 | 1.75 | 0.96 | 4.19 | 0.63 | 4.08 | |
| CV% | 1.66 | 5.83 | 2.61 | 2.97 | 2.85 | 2.79 | 1.59 | 10.82 | 1.19 | 8.00 | |
| Sample | 2.27 | 2.28 | 2.32 | 2.33 | 2.34 | 2.35 | 2.36 | 2.37 | 2.38 | 2.39 | |
| Avg | 62.9 | 66.0 | 48.4 | 45.5 | 60.1 | 53.0 | 45.5 | 65.8 | 57.1 | 55.8 | |
| StdDev | 1.49 | 3.72 | 5.28 | 4.65 | 1.60 | 0.71 | 3.81 | 8.57 | 5.25 | 1.85 | |
| CV% | 2.37 | 5.64 | 10.92 | 10.23 | 2.66 | 1.33 | 8.37 | 13.03 | 9.19 | 3.32 | |
| Sample | 2.40 | 2.41 | 2.42 | 2.43 | 2.44 | 2.45 | 2.46 | 2.47 | 2.48 | | |
| Avg | 56.6 | 47.0 | 46.0 | 44.0 | 39.6 | 52.5 | 43.9 | 40.4 | 40.4 | | |
| StdDev | 3.15 | 0.91 | 0.58 | 1.47 | 0.95 | 2.68 | 1.70 | 1.84 | 0.25 | | |
| CV% | 5.56 | 1.94 | 1.26 | 3.35 | 2.39 | 5.10 | 3.88 | 4.56 | 0.62 | | |
| Sample | 2.49 | 2.51 | 2.52 | 2.53 | 2.54 | | | | | | |
| Avg | 39.5 | 39.8 | 37.3 | 39.0 | 38.5 | | | | | | |
| StdDev | 1.22 | 2.63 | 1.61 | 1.08 | 1.08 | | | | | | |
| CV% | 3.10 | 6.62 | 4.32 | 2.77 | 2.81 | | | | | | |

## Example 5: Examples of Spunbond Fabric

Spunbond Fabrics can be produced in general according to the following procedure. The spunbond system uses a 1 meter wide single spunbond beam line manufactured by Reifenhauser GmbH. The melt blended or dry blended resin system containing FPC and SPC is fed into the extruder of the spunbond system. The output rate can range from 0.2 to 0.4 gram/hole/min, depending on the desired fiber size. The processing conditions are very similar to spunbond fabrication using conventional polypropylene homopolymers.

The polymer blend of FPC and SPC is prepared by melt blending the FPC and SPC in a single screw extruder including pelletization to produce pellets containing well homogenized FPC and SPC. However, a dry blend of FPC and SPC may be dry blended and fed directly into the extruder of the spunbond process. In this case, a screw design having good mixing capability is generally preferred.

The extruder of the spunbond system delivers the homogenized molten to a melt pump, which delivers the molten polymer to the spin beam. The spin beam has approximately a 1 meter wide rectangular spinneret having approximately 4000 holes. Each hole has a diameter of 0. 6 mm. The molten polymer thread exiting the spinneret is quenched and drawn down into fine fibers by the cold air. The quenched and highly drawn fiber is deposited on a moving porous web (forming web) to form a mate of nonwoven web. The unbonded web is then passed through a calender roll which is heated to approximately 95° C. As the web passes through the nip of the calender, it is annealed, and the elasticity of the fiber is enhanced. The bonded nonwoven fabric is elastic, having good stretchability and low T-set.

It is apparent that the inventive fabrics are softer and have a higher elongation than the conventional PP homopolymer fabric. The higher elongation and lower peak force are indications of the good elasticity of the inventive

fabric. The formation conditions for spun bond fabric are shown in Table 13. The Spun Bond process conditions for the blends in Example 5 are shown in Table 14. The spun bond fabric properties for blends in Example 5 are shown in Table 15. The fiber diameters in μm for fabric made in Example 5 are shown in Table 16.

Table 13 - Formation conditions for spun bond fabric

| Ex 5- | Resin | Melt temp ˚C | Thruput (ghm) | Suction RPM | Cool RPM | Calender Actual | |
|---|---|---|---|---|---|---|---|
| | | | | | | Upper | Lower |
| 1.1 | Ex 1-1 | 235.0 | 0.20 | 1533 | 1855 | 280 | 277 |
| 1.2 | | 235.0 | 0.20 | Max. possible | Max. possible | | |
| 1.3 | | 235.0 | 0.20 | 1534 | 1851 | | |
| 1.4 | | 235.0 | 0.40 | 2487 | 3000 | 286 | 284 |
| 1.5 | | 235.0 | 0.40 | 2487 | 3005 | | |
| 2.1 | Ex 1-2 | 235.0 | 0.20 | 1684 | 2010 | | |
| 2.2 | | 235.0 | 0.20 | 1630 | 1954 | | |
| 2.3 | | 235.0 | 0.20 | 1629 | 1957 | | |
| 2.4 | | 235.0 | 0.40 | 2383 | 2905 | | |
| 2.5 | | 235.0 | 0.40 | 2384 | 2901 | | |
| 3.1 | Ex 1-8 | 235.0 | 0.20 | 1780 | 2109 | | |
| 3.2 | | 235.0 | 0.20 | 1745 | 2050 | | |
| 3.3 | | 235.0 | 0.20 | 1723 | 2054 | | |
| 3.4 | | 235.0 | 0.40 | 2381 | 2914 | | |
| 3.5 | | 235.0 | 0.40 | 2070 | 2616 | | |
| 4.1 | Ex 1-3 | 235.0 | 0.20 | 1932 | 2248 | | |
| 4.2 | | 235.0 | 0.20 | 1876 | 2202 | | |
| 4.3 | | 235.0 | 0.20 | 1881 | 2210 | | |
| 4.4 | | 235.0 | 0.40 | 2379 | 2827 | | |
| 4.5 | | 235.0 | 0.40 | 2426 | 2846 | | |
| 5.1 | Ex 1-4 | 235.0 | 0.20 | 1993 | 2308 | | |
| 5.2 | | 235.0 | 0.20 | 1993 | 2307 | | |
| 5.3 | | 235.0 | 0.20 | 1994 | 2313 | | |
| 5.4 | | 235.0 | 0.40 | 2476 | 3002 | | |
| 5.5 | | 235.0 | 0.40 | 2477 | 3004 | | |
| 6.1 | Ex 1-5 | 235.0 | 0.20 | 1991 | 2310 | 287 | 284 |
| 6.2 | | 235.0 | 0.20 | 2290 | 2601 | | |
| 6.3 | | 235.0 | 0.20 | 2290 | 2618 | | |
| 6.4 | | 235.0 | 0.40 | 2488 | 3010 | | |
| 6.5 | | 235.0 | 0.40 | 1606 | 2123 | | |
| 7.1 | Ex 1-5 | 200.0 | 0.20 | 2109 | 2524 | 266 | 264 |
| 7.2 | | 200.0 | 0.20 | 1979 | 2405 | | |
| 7.3 | | 200.0 | 0.20 | 1979 | 2395 | | |
| 7.4 | | 200.0 | 0.40 | 2487 | 3005 | | |

(continued)

| Ex 5- | Resin | Melt temp ˚C | Thruput (ghm) | Suction RPM | Cool RPM | Calender Actual | |
|---|---|---|---|---|---|---|---|
| | | | | | | Upper | Lower |
| 7.5 | | 200.0 | 0.40 | 2486 | 3006 | | |
| 8.1 | Ex 1-4 | 200.0 | 0.20 | 1578 | 1801 | 273 | 270 |
| 8.2 | | 200.0 | 0.20 | 1578 | 1809 | | |
| 8.3 | | 200.0 | 0.20 | 1523 | 1749 | | |
| 8.4 | | 200.0 | 0.40 | 2457 | 2795 | | |
| 8.5 | | 200.0 | 0.40 | 2457 | 2793 | 258 | 255 |

Table 14- Spun Bond process conditions for blends in Example 5

| Ex 5- | Thruput (ghm) | Actual B. W. (gsm) | Suction Fan RPM | Cool Fan RPM | Cabin press pa |
|---|---|---|---|---|---|
| 1.1 | 0.20 | 21.00 | 1550 | 1850 | 713 |
| 1.2 | 0.20 | 35.30 | 1550 | 1850 | 720 |
| 1.3 | 0.20 | 51.40 | 1550 | 1850 | 720 |
| 1.4 | 0.40 | 36.20 | 2487 | 3000 | 1805 |
| 1.5 | 0.40 | 50.90 | 2487 | 3000 | 1869 |
| 2.1 | 0.20 | 19.00 | 1700 | 2000 | 836 |
| 2.2 | 0.20 | 37.00 | 1700 | 2000 | 782 |
| 2.3 | 0.20 | 49.00 | 1600 | 1950 | 788 |
| 2.4 | 0.40 | 36.30 | 2400 | 2900 | 1716 |
| 2.5 | 0.40 | 51.40 | 2400 | 2900 | 1702 |
| 3.1 | 0.20 | 21.00 | 1800 | 2100 | 905 |
| 3.2 | 0.20 | 34.50 | 1750 | 2050 | 862 |
| 3.3 | 0.20 | 48.50 | 1750 | 2050 | 862 |
| 3.4 | 0.40 | 36.70 | 2500 | 3000 | 1838 |
| 3.5 | 0.40 | 52.10 | 2400 | 2900 | 1732 |
| 4.1 | 0.20 | 21.70 | 1950 | 2250 | 976 |
| 4.2 | 0.20 | 35.50 | 1950 | 2250 | 1012 |
| 4.3 | 0.20 | 51.30 | 1900 | 2200 | 953 |
| 4.4 | 0.40 | | 2500 | 3000 | 1807 |
| 4.5 | 0.40 | 50.80 | 2427 | 2859 | 1580 |
| 5.1 | 0.20 | 22.20 | 2000 | 2300 | 1075 |
| 5.2 | 0.20 | 37.20 | 2000 | 2300 | 1072 |
| 5.3 | 0.20 | 51.80 | 2000 | 2300 | 1072 |
| 5.4 | 0.40 | 37.40 | 2500 | 3000 | 1820 |
| 5.5 | 0.40 | 52.10 | 2500 | 3000 | 1820 |
| 6.1 | 0.20 | 22.30 | 2000 | 2300 | 1023 |
| 6.2 | 0.20 | 38.10 | 2290 | 2600 | 1401 |
| 6.3 | 0.20 | 55.50 | 2290 | 2600 | 1323 |

(continued)

| Ex 5- | Thruput (ghm) | Actual B. W. (gsm) | Suction Fan RPM | Cool Fan RPM | Cabin press pa |
|---|---|---|---|---|---|
| 6.4 | 0.40 | 36.10 | 2500 | 3000 | 1727 |
| 6.5 | 0.40 | 51.70 | 2500 | 3000 | 1753 |
| 7.1 | 0.20 | | 2500 | 2100 | 1262 |
| 7.2 | 0.20 | 40.40 | 2000 | 2400 | 1170 |
| 7.3 | 0.20 | 51.50 | 2000 | 2400 | 1160 |
| 7.4 | 0.40 | 38.40 | 2500 | 3000 | 1807 |
| 7.5 | 0.40 | 53.30 | 2500 | 3000 | 1833 |
| 8.1 | 0.20 | 22.70 | 1600 | 1800 | 656 |
| 8.2 | 0.20 | 37.80 | 1600 | 1800 | 656 |
| 8.3 | 0.20 | 53.40 | 1525 | 1757 | 616 |
| 8.4 | 0.40 | 36.60 | 2450 | 2800 | 1552 |
| 8.5 | 0.40 | 51.50 | 2450 | 2800 | 1552 |

Table 15 - Spun bond fabric properties for blends in example 5

| EX 5- | MDTensile (lbs) | MD Elongation (%) | CD Tensile (lbs) | CD Elongation (%) |
|---|---|---|---|---|
| 1.1 | 6.04 | 39 | 2.56 | 38 |
| 1.2 | 3.81 | 176 | 2.35 | 192 |
| 1.3 | 4.74 | 174 | 2.44 | 175 |
| 1.4 | 11.48 | 69 | 7.35 | 76 |
| 1.5 | 15.53 | 64 | 9.08 | 65 |
| 2.1 | 5.70 | 40 | 2.79 | 46 |
| 2.2 | 13.19 | 74 | 6.65 | 67 |
| 2.3 | 17.70 | 75 | 10.86 | 89 |
| 2.4 | 11.49 | 78 | 7.35 | 82 |
| 2.5 | 17.10 | 84 | 10.79 | 88 |
| 3.1 | 5.06 | 39 | 2.36 | 41 |
| 3.2 | 12.25 | 72 | 6.20 | 67 |
| 3.3 | 17.25 | 78 | 10.27 | 82 |
| 3.4 | 10.08 | 70 | 6.94 | 80 |
| 3.5 | 15.94 | 81 | 11.08 | 93 |
| 4.1 | 5.06 | 37 | 2.89 | 45 |
| 4.2 | 11.67 | 61 | 6.93 | 77 |
| 4.3 | 17.20 | 70 | 10.61 | 89 |
| 4.4 | 9.82 | 67 | 6.43 | 68 |
| 4.5 | 14.93 | 63 | 10.42 | 87 |
| 5.1 | 3.96 | 31 | 2.51 | 40 |
| 5.2 | 8.48 | 41 | 5.07 | 50 |
| 5.3 | 13.95 | 61 | 8.71 | 62 |

(continued)

| EX 5- | MDTensile (lbs) | MD Elongation (%) | CD Tensile (lbs) | CD Elongation (%) |
|---|---|---|---|---|
| 5.4 | 6.80 | 57 | 4.97 | 59 |
| 5.5 | 11.04 | 60 | 8.42 | 74 |
| 6.1 | 3.18 | 19 | 1.89 | 29 |
| 6.2 | 6.20 | 23 | 4.09 | 38 |
| 6.3 | 9.81 | 25 | 6.31 | 38 |
| 6.4 | 3.82 | 31 | 3.42 | 49 |
| 6.5 | 7.57 | 42 | 5.12 | 47 |
| 7.1 | 4.20 | 35 | 2.54 | 46 |
| 7.2 | 7.62 | 50 | 5.49 | 67 |
| 7.3 | 11.50 | n/a | 8.63 | 79 |
| 7.4 | 6.18 | 62 | 4.37 | 64 |
| 7.5 | 9.90 | 73 | 7.47 | 80 |
| 8.1 | 4.28 | 63 | 2.87 | 71 |
| 8.2 | 8.38 | 77 | 6.44 | 98 |
| 8.3 | 13.51 | 105 | 10.06 | 106 |
| 8.4 | 7.70 | 82 | 5.52 | 87 |
| 8.5 | 11.14 | 87 | 8.50 | 94 |

Table 16 - Fiber diameter in $\mu$m for fabric in Example 5

| EX 5- | 1.1 | 1.2 | 1.3 | 1.4 | 1.5 |
|---|---|---|---|---|---|
| Avg | 17.5 | 15.0 | 16.4 | 17.4 | 17.5 |
| StdDev | 1.24 | 0.79 | 1.18 | 0.85 | 0.74 |
| RSD% | 7.08 | 5.28 | 7.23 | 4.85 | 4.21 |
| | | | | | |
| EX 5- | 2.1 | 2.2 | 2.3 | 2.4 | 2.5 |
| Avg | 14.0 | 14.9 | 15.9 | 17.3 | 17.8 |
| StdDev | 0.80 | 1.41 | 0.79 | 0.60 | 0.73 |
| RSD% | 5.74 | 9.45 | 4.99 | 3.49 | 4.09 |
| | | | | | |
| EX 5- | 3.1 | 3.2 | 3.3 | 3.4 | 3.5 |
| Avg | 16.0 | 15.4 | 14.5 | 17.1 | 17.8 |
| StdDev | 1.55 | 1.08 | 1.56 | 0.77 | 0.96 |
| RSD% | 9.67 | 7.05 | 10.81 | 4.49 | 5.38 |
| | | | | | |

(continued)

| | | | | | |
|---|---|---|---|---|---|
| EX 5- | 4.1 | 4.2 | 4.3 | 4.4 | 4.5 |
| Avg | 14.6 | 15.6 | 14.2 | 16.8 | 17.7 |
| StdDev | 1.57 | 1.24 | 1.26 | 0.40 | 0.64 |
| RSD% | 10.74 | 7.92 | 8.87 | 2.39 | 3.60 |
| | | | | | |
| EX 5- | 5.1 | 5.2 | 5.3 | 5.4 | 5.5 |
| Avg | 14.1 | 13.2 | 14.7 | 17.4 | 17.2 |
| StdDev | 1.59 | 0.47 | 1.09 | 0.39 | 0.76 |
| RSD% | 11.30 | 3.57 | 7.41 | 2.27 | 4.42 |
| | | | | | |
| EX 5- | 6.1 | 6.2 | 6.3 | 6.4 | 6.5 |
| Avg | 14.7 | 13.3 | 14.8 | 17.3 | 17.5 |
| StdDev | 0.92 | 1.69 | 2.09 | 0.60 | 0.99 |
| RSD% | 6.23 | 12.75 | 14.11 | 3.48 | 5.67 |
| | | | | | |
| EX 5- | 7.1 | 7.2 | 7.3 | 7.4 | 7.5 |
| Avg | 14.7 | 14.2 | 14.4 | 17.3 | 17.6 |
| StdDev | 0.89 | 1.06 | 1.41 | 0.70 | 0.51 |
| RSD% | 6.06 | 7.47 | 9.84 | 4.05 | 2.88 |
| | | | | | |
| EX 5- | 8.1 | 8.2 | 8.3 | 8.4 | 8.5 |
| Avg | 15.5 | 15.7 | 15.7 | 18.2 | 18.0 |
| StdDev | 0.88 | 1.01 | 1.88 | 1.11 | 0.60 |
| RSD% | 5.66 | 6.46 | 11.96 | 6.08 | 3.33 |

**Example 6: Examples of melt Blown fabric**

Dry blended compositions as outlined in Table 17 are made into melt blown fabric by the procedure outlined earlier. Table 18 shows the hydrohead data for fabrics made from the dry blended compositions of Example 6. Table 19 shows the Permeability data in $ft^3$/ft2 min for dry blended compositions of Example 6.

Table 17

| | Blend composition | | | Melt Temp | Air temp | Thruput | Target B.W. | DCD* | Calculated MFR |
|---|---|---|---|---|---|---|---|---|---|
| Ex 6- | SPC2 | FPC2 | FPC3 | Target ˚C (˚F) | Set ˚C (˚F) | ghm | gsm | | g/10 min |
| 2.1 | 100 | | | 230.0 (446) | 230.0 (446) | 0.4 | 35.0 | 8" | 1400 |
| 2.2 | 100 | | | 230.0 (446) | 230.0 (446) | 0.4 | 35.0 | 12 | 1400 |
| 2.3 | 100 | | | 230.0 (446) | 230.0 (446) | 0.6 | 35.0 | 8" | 1400 |

(continued)

| | Blend composition | | | Melt Temp | Air temp | Thruput | Target B.W. | DCD* | Calculated MFR |
|---|---|---|---|---|---|---|---|---|---|
| Ex 6- | SPC2 | FPC2 | FPC3 | Target ˚C (˚F) | Set ˚C (˚F) | ghm | gsm | | g/10 min |
| 2.4 | 100 | | | 230.0 (446) | 230.0 (446) | 0.6 | 35.0 | 12 | 1400 |
| 2.5 | | 100 | | 230.0 (446) | 230.0 (446) | 0.4 | 35.0 | 8" | 2910 |
| 2.6 | | 100 | | 230.0 (446) | 230.0 (446) | 0.4 | 35.0 | 12 | 2910 |
| 2.7 | | 100 | | 230.0 (446) | 230.0 (446) | 0.6 | 35.0 | 8" | 2910 |
| 2.8 | | 100 | | 230.0 (446) | 230.0 (446) | 0.6 | 35.0 | 12 | 2910 |
| 2.9 | | 100 | | 230.0 (446) | 230.0 (446) | 0.6 | 35.0 | 15" | 2910 |
| 2.10 | 10 | 90 | | 230.0 (446) | 230.0 (446) | 0.4 | 35.0 | 8" | 2759 |
| 2.11 | 10 | 90 | | 230.0 (446) | 230.0 (446) | 0.4 | 35.0 | 12" | 2759 |
| 2.12 | 10 | 90 | | 230.0 (446) | 230.0 (446) | 0.6 | 35.0 | 8" | 2759 |
| 2.13 | 10 | 90 | | 230.0 (446) | 230.0 (446) | 0.6 | 35.0 | 12" | 2759 |
| 2.14 | | | 100 | 230.0 (446) | 230.0 (446) | 0.4 | 35.0 | 8" | 2576 |
| 2.15 | | | 100 | 230.0 (446) | 230.0 (446) | 0.4 | 35.0 | 12" | 2576 |
| 2.16 | | | 100 | 230.0 (446) | 230.0 (446) | 0.6 | 36.0 | 12" | 2576 |
| 2.17 | | | 100 | 230.0 (446) | 230.0 (446) | 0.6 | 35.0 | 15" | 2576 |
| 2.18 | | 100 | | 230.0 (446) | 230.0 (446) | 0.2 | 35.0 | 8" | 2910 |
| 2.19 | | 100 | | 230.0 (446) | 230.0 (446) | 0.2 | 35.0 | 12" | 2910 |
| 2.20 | | 100 | | 230.0 (446) | 230.0 (446) | 0.4 | 36.0 | 8" | 2910 |
| 2.21 | | 100 | | 230.0 (446) | 230.0 (446) | 0.4 | 35.0 | 12" | 2910 |
| 2.22 | | 100 | | 230.0 (446) | 230.0 (446) | 0.6 | 35.0 | 8" | 2910 |
| 2.23 | | 100 | | 230.0 (446) | 230.0 (446) | 0.6 | 35.0 | 12" | 2910 |
| 2.24 | | 100 | | 230.0 (446) | 230.0 (446) | 0.8 | 35.0 | 12" | 2910 |

(continued)

| | Blend composition | | | Melt Temp | Air temp | Thruput | Target B.W. | DCD* | Calculated MFR |
|---|---|---|---|---|---|---|---|---|---|
| Ex 6- | SPC2 | FPC2 | FPC3 | Target ˚C (˚F) | Set ˚C (˚F) | ghm | gsm | | g/10 min |
| 2.25 | | 100 | | 230.0 (446) | 230.0 (446) | 0.8 | 35.0 | 15" | 2910 |
| 3.1 | | 100 | | 245.0 (473) | 245.0 (473) | 0.2 | 35.0 | 8" | 2910 |
| 3.2 | | 100 | | 245.0 (473) | 245.0 (473) | 0.2 | 35.0 | 12" | 2910 |
| 3.3 | | 100 | | 245.0 (473) | 245.0 (473) | 0.4 | 35.0 | 8" | 2910 |
| 3.4 | | 100 | | 245.0 (473) | 245.0 (473) | 0.4 | 35.0 | 12" | 2910 |
| 3.5 | | 100 | | 245.0 (473) | 245.0 (473) | 0.6 | 35.0 | 8" | 2910 |
| 3.6 | | 100 | | 245.0 (473) | 245.0 (473) | 0.6 | 35.0 | 12" | 2910 |
| 3.7 | | 100 | | 245.0 (473) | 245.0 (473) | 0.8 | 35.0 | 12" | 2910 |
| 3.8 | | 100 | | 245.0 (473) | 245.0 (473) | 0.8 | 35.0 | 15" | 2910 |
| 3.9 | 10 | 90 | | 245.0 (473) | 245.0 (473) | 0.2 | 35.0 | 8" | 2759 |
| 3.10 | 10 | 90 | | 245.0 (473) | 245.0 (473) | 0.2 | 35.0 | 12" | 2759 |
| 3.11 | 10 | 90 | | 245.0 (473) | 245.0 (473) | 0.4 | 35.0 | 8" | 2759 |
| 3.12 | 10 | 90 | | 245.0 (473) | 245.0 (473) | 0.4 | 35.0 | 12" | 2759 |
| 3.13 | 10 | 90 | | 245.0 (473) | 245.0 (473) | 0.6 | 35.0 | 8" | 2759 |
| 3.14 | 10 | 90 | | 245.0 (473) | 245.0 (473) | 0.6 | 35.0 | 12" | 2759 |
| 3.15 | 10 | 90 | | 245.0 (473) | 245.0 (473) | 0.8 | 35.0 | 12" | 2759 |
| 3.16 | 10 | 90 | | 245.0 (473) | 245.0 (473) | 0.8 | 35.0 | 15" | 2759 |
| 3.17 | 100 | | | 245.0 (473) | 245.0 (473) | 0.2 | 35.0 | 8" | 1400 |
| 3.18 | 100 | | | 245.0 (473) | 245.0 (473) | 0.2 | 35.0 | 12" | 1400 |
| 3.19 | 100 | | | 245.0 (473) | 245.0 (473) | 0.4 | 35.0 | 8" | 1400 |
| 3.20 | 100 | | | 245.0 (473) | 245.0 (473) | 0.4 | 35.0 | 12" | 1400 |

(continued)

| | Blend composition | | | Melt Temp | Air temp | Thruput | Target B.W. | DCD* | Calculated MFR |
|---|---|---|---|---|---|---|---|---|---|
| Ex 6- | SPC2 | FPC2 | FPC3 | Target ˚C (˚F) | Set ˚C (˚F) | ghm | gsm | | g/10 min |
| 3.21 | 100 | | | 245.0 (473) | 245.0 (473) | 0.6 | 35.0 | 8" | 1400 |
| 3.22 | 100 | | | 245.0 (473) | 245.0 (473) | 0.6 | 35.0 | 12" | 1400 |
| 3.23 | 100 | | | 245.0 (473) | 245.0 (473) | 0.8 | 35.0 | 8" | 1400 |
| 3.24 | 100 | | | 245.0 (473) | 245.0 (473) | 0.8 | 35.0 | 12" | 1400 |
| 4.1 | 100 | | | 260.0 (500) | 260.0 (500) | 0.2 | 35.0 | 8" | 1400 |
| 4.2 | 100 | | | 260.0 (500) | 260.0 (500) | 0.2 | 35.0 | 12" | 1400 |
| 4.3 | 100 | | | 260.0 (500) | 260.0 (500) | 0.4 | 35.0 | 8" | 1400 |
| 4.4 | 100 | | | 260.0 (500) | 260.0 (500) | 0.4 | 35.0 | 12" | 1400 |
| 4.5 | 100 | | | 260.0 (500) | 260.0 (500) | 0.6 | 35.0 | 8" | 1400 |
| 4.6 | 100 | | | 260.0 (500) | 260.0 (500) | 0.6 | 35.0 | 12" | 1400 |
| 4.7 | 100 | | | 260.0 (500) | 260.0 (500) | 0.8 | 35.0 | 8" | 1400 |
| 4.8 | 100 | | | 260.0 (500) | 260.0 (500) | 0.8 | 35.0 | 12" | 1400 |
| 4.9 | 10 | 90 | | 260.0 (500) | 260.0 (500) | 0.2 | 35.0 | 8" | 2759 |
| 4.10 | 10 | 90 | | 260.0 (500) | 260.0 (500) | 0.2 | 35.0 | 12" | 2759 |
| 4.11 | 10 | 90 | | 260.0 (500) | 260.0 (500) | 0.4 | 35.0 | 8" | 2759 |
| 4.12 | 10 | 90 | | 260.0 (500) | 260.0 (500) | 0.4 | 35.0 | 12" | 2759 |
| 4.13 | 10 | 90 | | 260.0 (500) | 260.0 (500) | 0.6 | 35.0 | 8" | 2759 |
| 4.14 | 10 | 90 | | 260.0 (500) | 260.0 (500) | 0.6 | 35.0 | 12" | 2759 |
| 4.15 | 10 | 90 | | 260.0 (500) | 260.0 (500) | 0.8 | 35.0 | 12" | 2759 |
| 4.16 | 10 | 90 | | 260.0 (500) | 260.0 (500) | 0.8 | 35.0 | 15" | 2759 |
| 4.17 | | 100 | | 260.0 (500) | 260.0 (500) | 0.2 | 35.0 | 8" | 2910 |

(continued)

| | Blend composition | | | Melt Temp | Air temp | Thruput | Target B.W. | DCD* | Calculated MFR |
|---|---|---|---|---|---|---|---|---|---|
| Ex 6- | SPC2 | FPC2 | FPC3 | Target ˚C (˚F) | Set ˚C (˚F) | ghm | gsm | | g/10 min |
| 4.18 | | 100 | | 260.0 (500) | 260.0 (500) | 0.2 | 35.0 | 12" | 2910 |
| 4.19 | | 100 | | 260.0 (500) | 260.0 (500) | 0.4 | 35.0 | 8" | 2910 |
| 4.20 | | 100 | | 260.0 (500) | 260.0 (500) | 0.4 | 35.0 | 12" | 2910 |
| 4.21 | | 100 | | 260.0 (500) | 260.0 (500) | 0.6 | 35.0 | 8" | 2910 |
| 4.22 | | 100 | | 260.0 (500) | 260.0 (500) | 0.6 | 35.0 | 12" | 2910 |
| 4.23 | | 100 | | 260.0 (500) | 260.0 (500) | 0.8 | 35.0 | 8" | 2910 |
| 4.24 | | 100 | | 260.0 (500) | 260.0 (500) | 0.8 | 35.0 | 12" | 2910 |
| 4.25 | | | 100 | 260.0 (500) | 260.0 (500) | 0.2 | 35.0 | 8" | 2576 |
| 4.26 | | | 100 | 260.0 (500) | 260.0 (500) | 0.2 | 35.0 | 12" | 2576 |
| 4.27 | | | 100 | 260.0 (500) | 260.0 (500) | 0.4 | 35.0 | 8" | 2576 |
| 4.28 | | | 100 | 260.0 (500) | 260.0 (500) | 0.4 | 35.0 | 12" | 2576 |
| 4.29 | | | 100 | 260.0 (500) | 260.0 (500) | 0.6 | 35.0 | 12" | 2576 |
| 4.30 | | | 100 | 260.0 (500) | 260.0 (500) | 0.6 | 35.0 | 15" | 2576 |
| 4.31 | | | 100 | 260.0 (500) | 260.0 (500) | 0.8 | 35.0 | 12" | 2576 |
| 4.32 | | | 100 | 260.0 (500) | 260.0 (500) | 0.8 | 35.0 | 15" | 2576 |

Table 18 - Hydrohead data in mm Hg for melt blown fabric in Example 6

| Sample 6- | 2.1 | 2.2 | 2.3 | 2.4 | 2.5 | 2.6 | 2.7 | 2.8 | 2.9 |
|---|---|---|---|---|---|---|---|---|---|
| Avg | 62.5 | 49.4 | 60.1 | 46.1 | 73.4 | 59.9 | 46.1 | 50.1 | 60.5 |
| StdDev | 3.24 | 1.18 | 1.75 | 1.44 | 3.94 | 1.18 | 4.94 | 3.47 | 0.41 |
| CV% | 5.18 | 2.39 | 2.91 | 3.11 | 5.38 | 1.97 | 10.71 | 6.93 | 0.67 |
| | | | | | | | | | |
| Sample 6- | 2.10 | 2.11 | 2.12 | 12.13 | 2.14 | 2.15 | 2.16 | 2.17 | 2.18 |
| Avg | 76.1 | 64.9 | 51.4 | 49.6 | 62.5 | 69.4 | 44.3 | 47.4 | 93.4 |

(continued)

| | | | | | | | | | |
|---|---|---|---|---|---|---|---|---|---|
| Sample 6- | 2.10 | 2.11 | 2.12 | 12.13 | 2.14 | 2.15 | 2.16 | 2.17 | 2.18 |
| StdDev | 1.44 | 2.02 | 1.31 | 12.75 | 4.69 | 2.50 | 0.50 | 1.11 | 6.60 |
| CV% | 1.89 | 3.11 | 2.56 | 5.54 | 7.50 | 3.60 | 1.13 | 2.34 | 7.07 |
| | | | | | | | | | |
| Sample 6- | 2.19 | 2.20 | 2.21 | 2.22 | 2.23 | 2.24 | 2.25 | | |
| Avg | 75.9 | 80.5 | 65.0 | 149.0 | 51.1 | 38.3 | 42.1 | | |
| StdDev | 4.25 | 3.76 | 1.35 | | 1.80 | 3.23 | 1.44 | | |
| CV% | 5.60 | 4.68 | 2.08 | 8.37 | 3.51 | 8.44 | 3.41 | | |
| | | | | | | | | | |
| Sample 6- | 3.1 | 3.2 | 3.3 | 3.4 | 3.5 | 3.6 | 3.7 | 3.8 | 3.9 |
| Avg | 106.3 | 75.9 | 77.6 | 72.0 | 60.0 | 58.5 | 36.6 | 45.0 | 87.1 |
| StdDev | 4.19 | 0.95 | 5.85 | 1.68 | 1.08 | 4.34 | 6.25 | 1.96 | 3.42 |
| CV% | 3.95 | 1.25 | 7.54 | 2.34 | 1.80 | 7.42 | 17.06 | 4.35 | 3.93 |
| | | | | | | | | | |
| Sample 6- | 3.10 | 3.11 | 3.12 | 3.13 | 3.14 | 3.15 | 3.16 | 3.17 | 3.18 |
| Avg | 79.6 | 89.1 | 66.0 | 63.0 | 57.8 | 43.0 | 43.8 | 70.9 | 58.9 |
| StdDev | 4.96 | 2.59 | 2.80 | 4.95 | 2.02 | 2.45 | 0.96 | 3.20 | 1.03 |
| CV% | 6.22 | 2.91 | 4.24 | 7.86 | 3.50 | 5.70 | 2.19 | 4.51 | 1.75 |
| | | | | | | | | | |
| Sample 6- | 3.19 | 3.20 | 3.21 | 2.22 | 3.23 | 3.24 | | | |
| Avg | 68.8 | 52.0 | 67.4 | 52.9 | 61.0 | 44.1 | | | |
| StdDev | 2.18 | 0.71 | 0.95 | 1.31 | 1.08 | 2.10 | | | |
| CV% | 3.17 | 1.36 | 1.40 | 2.49 | 1.77 | 4.75 | | | |
| | | | | | | | | | |
| Sample 6- | 4.1 | 4.2 | 4.3 | 4.4 | 4.5 | 4.6 | 4.7 | 4.8 | |
| Avg | 79.3 | 67.1 | 73.9 | 61.6 | 70.4 | 57.4 | 58.1 | 54.8 | |
| StdDev | 5.46 | 6.34 | 3.75 | 1.25 | 2.43 | 1.93 | 3.75 | 3.84 | |
| CV% | 6.89 | 9.45 | 5.08 | 2.03 | 3.45 | 3.37 | 6.45 | 7.01 | |
| | | | | | | | | | |
| Sample 6- | 4.17 | 4.18 | 4.19 | 4.20 | 4.21 | 4.22 | 4.23 | 4.24 | |
| Avg | 114.0 | 56.8 | 55.9 | 54.0 | 50.6 | 60.3 | 32.9 | 43.3 | |
| StdDev | 8.37 | 2.63 | 5.25 | 2.35 | 5.62 | 4.17 | 2.72 | 2.84 | |
| CV% | 7.34 | 4.63 | 9.40 | 4.34 | 11.10 | 6.93 | 8.27 | 6.57 | |

(continued)

| Sample 6- | 4.17 | 4.18 | 4.19 | 4.20 | 4.21 | 4.22 | 4.23 | 4.24 | |
|---|---|---|---|---|---|---|---|---|---|
| | | | | | | | | | |

Table 19 - Permeability data in ft3/ft2.min for melt blown fabric made in Example 5

| Sample 6- | 2.1 | 2.2 | 2.3 | 2.4 | 2.5 | 2.6 | 2.7 | 2.8 | 2.9 |
|---|---|---|---|---|---|---|---|---|---|
| Avg | 54.7 | 83 | 54 | 85.7 | 30.6 | 45.6 | 32.7 | 55.5 | 47.9 |
| StdDev | 4.44 | 7.88 | 3.62 | 4.42 | 4.54 | 6.55 | 3.03 | 4.11 | 3.35 |
| RSD% | 8.1 | 9.5 | 6.71 | 5.16 | 14.83 | 14.37 | 9.27 | 7.41 | 6.99 |
| | | | | | | | | | |
| Sample 6- | 2.1 | 2.11 | 2.12 | 2.13 | 2.14 | 2.15 | 2.16 | 2.17 | 2.18 |
| Avg | 34.1 | 52.9 | 37.5 | 54.9 | 26 | 42.7 | 44.3 | 54.7 | 25.3 |
| StdDev | 3.13 | 4.76 | 5.1 | 4.52 | 2.98 | 2.21 | 3.92 | 1.3 | 1.01 |
| RSD% | 9.19 | 8.99 | 13.61 | 8.24 | 11.48 | 5.16 | 8.86 | 2.37 | 3.98 |
| | | | | | | | | | |
| Sample 6- | 3.1 | 3.2 | 3.3 | 3.4 | 3.5 | 3.6 | 3.7 | 3.8 | 3.9 |
| Avg | 23 | 30.8 | 25.2 | 37.5 | 26 | 40.1 | 43.4 | 54.4 | 27.2 |
| StdDev | 2.07 | 4.91 | 2.85 | 6.35 | 4.98 | 4.75 | 7.51 | 5.73 | 1.75 |
| RSD% | 9.01 | 15.94 | 11.29 | 16.93 | 19.12 | 11.85 | 17.32 | 10.53 | 6.44 |
| | | | | | | | | | |
| Sample 6- | 3.1 | 3.11 | 3.12 | 3.13 | 3.14 | 3.15 | 3.16 | 3.17 | 3.18 |
| Avg | 29.4 | 29.5 | 45 | 31 | 47.4 | 50.9 | 62.6 | 44 | 64.3 |
| StdDev | 2.71 | 2.52 | 6.15 | 4.27 | 4.67 | 7.91 | 9.13 | 4.65 | 4.7 |
| RSD% | 9.21 | 8.56 | 13.67 | 13.76 | 9.86 | 15.55 | 14.59 | 10.58 | 7.31 |
| | | | | | | | | | |
| Sample 6- | 3.19 | 3.2 | 3.21 | 3.22 | 3.23 | 3.24 | | | |
| Avg | 44.7 | 67.5 | 46 | 68.9 | 50.5 | 81.1 | | | |
| StdDev | 3.29 | 4.67 | 4.71 | 9.18 | 3.66 | 7.01 | | | |
| RSD% | 7.36 | 6.91 | 10.25 | 13.31 | 7.25 | 8.64 | | | |
| | | | | | | | | | |
| Sample 6- | 4.1 | 4.2 | 4.3 | 4.4 | 4.5 | 4.6 | 4.7 | 4.8 | |
| Avg | 35.4 | 56.5 | 42.1 | 54.3 | 39.3 | 57.1 | 42.4 | 58.1 | |
| StdDev | 2.19 | 5.31 | 3.18 | 5.9 | 2.46 | 7.17 | 2.6 | 3.92 | |
| RSD% | 6.19 | 9.39 | 7.56 | 10.86 | 6.27 | 12.55 | 6.14 | 6.74 | |
| | | | | | | | | | |

(continued)

| Sample 6- | 4.17 | 4.18 | 4.19 | 4.2 | 4.21 | 4.22 | 4.23 | 4.24 | |
|---|---|---|---|---|---|---|---|---|---|
| Avg | 19.6 | 42.8 | 30.3 | 53.3 | 25.6 | 40 | 32.3 | 41.7 | |
| StdDev | 3.68 | 5.02 | 1.73 | 5.77 | 1.17 | 3.92 | 1.05 | 6.12 | |
| RSD% | 18.75 | 11.73 | 5.72 | 10.83 | 4.56 | 9.8 | 3.26 | 14.67 | |

In other embodiments, this invention relates to:

1. A nonwoven fabric comprising:

a. a first component comprising from 5% to 99% by weight based on the total weight of the composition wherein the first component is selected from the group consisting of homopolymers of propylene and random copolymers of propylene, the first component having a heat of fusion as determined by DSC of less than 50 J/g, stereoregular propylene crystallinity, and a Melt Flow Rate between 300 g/10 min and 5000 g/10 min; and
b. a second component comprising from 95% to 1% by weight based on the total weight of the composition of a propylene polymer or blends of propylene polymers; wherein the nonwoven fabric has a permanent set of less than 60%.

2. A nonwoven fabric comprising:

a. a first component comprising from 5% to 100% by weight based on the total weight of the composition of a polymer selected from the group consisting of homopolymers of propylene and random copolymers of propylene, the polymer having a heat of fusion as determined by DSC of less than 50 J/g and stereoregular propylene crystallinity; and
b. a second component comprising from 95% to 0% by weight based on the total weight of the composition of a propylene polymer or blends of propylene polymers;
wherein the nonwoven fabric has a permanent set of less than 60%.

3. The nonwoven fabric of 1. or 2., wherein the permanent set is less than 30%.
4. The nonwoven fabric of any of 1. - 3., wherein the permanent set is less than 15%.
5. The nonwoven fabric of any of 1. - 4., wherein the nonwoven fabric has an elongation of greater than 80%.
6. The nonwoven fabric of any of 1. - 5., wherein the nonwoven fabric has an elongation of greater than 300%.
7. The nonwoven fabric of any of 1. - 6., wherein the nonwoven fabric demonstrates anisotropic elongation.
8. The nonwoven fabric of any of 1. - 7., wherein the first component has isotactic stereoregular propylene crystallinity.
9. The nonwoven fabric of any of 1. - 8., wherein the first component is a random copolymer of propylene and has at least one comonomer selected from ethylene, $C_4$-$C_{12}$ $\alpha$-olefins, and combinations thereof.
10. The nonwoven fabric of Claim 9, wherein the comonomer is ethylene.
11. The nonwoven fabric of any of 1. - 10., wherein the first component has a narrow compositional distribution, and a melting point as determined by DSC of from 25 ˚C to 110 ˚C.
12. The nonwoven fabric of 11., wherein the first component comprises from 2 wt% to 25 wt% polymerized ethylene units, based on the total weight of the first component.
13. The nonwoven fabric of any of 1. - 12., wherein the first component has a heat of fusion as determined by DSC of from 3 J/g to 15 J/g.
14. The nonwoven fabric of any of 1. - 13., wherein the first component has a melting point as determined by DSC of from 35 ˚C to 70 ˚C.
15. The nonwoven fabric of any of 1. - 14., wherein the first component has a molecular weight distribution Mw/Mn of from 2.0 to 4.5.
16. The nonwoven fabric of any of 1. - 15., wherein the first component has an MFR of from 5 g/10 min to 5000 g/10 min.
17. The nonwoven fabric of any of 1. - 16., wherein the second component comprises a propylene polymer produced using a metallocene catalyst system or a Ziegler-Natta catalyst system.
18. The nonwoven fabric of any of 1. - 17., wherein the second component has a Mw/Mn of from 1.5 to 8.0
19. The nonwoven fabric of any of 1. - 18., wherein the second component has a melting point greater than 110 ˚C.
20. The nonwoven fabric of any of 1. - 19., wherein the first component is present in the composition in an amount of from 90 wt% to 99 wt% and the second component is present in an amount of from 10 wt% to 1 wt%, based on the total weight of the composition.

21. A laminate comprising the nonwoven fabric of any of 1. - 20.
22. A laminate produced by the process of thermobonding a plurality of layers comprising the nonwoven fabric of any of 1. - 21. having at least one layer of a melt blown fabric, a spunbond fabric, or a combination of a melt blown fabric and a spunbond fabric.
23. An article of manufacture comprising the nonwoven fabric of any of 1. - 22.
24. The article of manufacture of 23. where the article is selected from the group consisting of fabrics, garments, clothing, medical garments, surgical gowns, surgical drapes, diapers, training pants, sanitary napkins, panty liners, incontinent wear, bed pads, bags, packaging material, packages, swimwear, body fluid impermeable backsheets, body fluid impermeable layers, body fluid permeable layers, body fluid permeable covers, absorbents, tissues, nonwoven composites, liners, cloth linings, scrubbing pads, face masks, respirators, air filters, vacuum bags, oil and chemical spill sorbents, thermal insulation, first aid dressings, medical wraps, fiberfill, outerwear, bed quilt stuffing, furniture padding, filter media, scrubbing pads, wipe materials, hosiery, automotive seats, upholstered furniture, carpets, carpet backing, filter media, disposable wipes, diaper coverstock, gardening fabric, geomembranes, geotextiles, sacks, housewrap, vapor barriers, breathable clothing, envelops, tamper evident fabrics, protective packaging, and coasters.
25. A process to produce a nonwoven fabric, the process comprising the steps of:

a. blending a first component comprising from 5% to 99% by weight based on the total weight of the composition of a polymer selected from the group consisting of homopolymers of propylene and random copolymers of propylene, the polymer having a heat of fusion as determined by DSC of less than 50 J/g, stereoregular propylene crystallinity, and a Melt Flow Rate between 300 g/10 min and 5000 g/10 min; and a second component comprising from 95% to 1% by weight based on the total weight of the composition of a propylene polymer or blends of propylene polymers; to form a blend;
b. extruding the blend to form a plurality of fibers to form a web; and
c. calendering the web to form the nonwoven fabric, the nonwoven fabric having a permanent set of less than 60%.

26. The process of 25., wherein the calendering further comprises annealing.
27. The process of 25. or 26., wherein the calendering comprises annealing the nonwoven fabric in a single step.
28. The process of any of 25. - 27., wherein the annealing is performed at temperature of at least 40 °C.
29. The process of any of 25. - 28., wherein the annealing is performed at temperature of at least 160 °C.

While the present invention has been described and illustrated by reference to particular embodiments, those of ordinary skill in the art will appreciate that the invention lends itself to many different variations not illustrated herein. For these reasons, then, reference should be made solely to the appended claims for purposes of determining the scope of the present invention. Further, certain features of the present invention are described in terms of a set of numerical upper limits and a set of numerical lower limits. It should be appreciated that ranges formed by any combination of these limits are within the scope of the invention unless otherwise indicated.
All priority documents are herein fully incorporated by reference for all jurisdictions in which such incorporation is permitted. Further, all documents cited herein, including testing procedures, are herein fully incorporated by reference for all jurisdictions in which such incorporation is permitted.

## Claims

**1.** A nonwoven fabric comprising:

a. a first component comprising from 5% to 99% by weight based on the total weight of the composition wherein the first component is selected from random copolymers of propylene, the first component having a heat of fusion as determined by DSC of less than 50 J/g, stereoregular propylene crystallinity, a Melt Flow Rate between 2000 g/10 min and 3000 g/10 min at 230°C according to ASTM test 1238-01 Condition B, a narrow compositional distribution, and a melting point as determined by DSC of from 25 °C to 110 °C and wherein the first component comprises from 2 wt% to 25 wt% polymerized ethylene units, based on the total weight of the first component; and
b. a second component comprising from 95% to 1% by weight based on the total weight of the composition of a propylene polymer or blends of propylene polymers;

wherein the nonwoven fabric has a permanent set of less than 60%.

**2.** The nonwoven fabric of Claim 1, wherein the permanent set is less than 30%.

3. The nonwoven fabric of any of Claims 1 or 2 wherein the permanent set is less than 15%.

4. The nonwoven fabric of any of Claims 1 to 3, wherein the nonwoven fabric has an elongation of greater than 80%.

5. The nonwoven fabric of any of Claims 1 to 4, wherein the nonwoven fabric has an elongation of greater than 300%.

6. The nonwoven fabric of any of Claims 1 to 5, wherein the nonwoven fabric demonstrates anisotropic elongation.

7. The nonwoven fabric of any of Claims 1 to 6, wherein the first component has isotactic stereoregular propylene crystallinity.

8. The nonwoven fabric of any of Claims 1 to 7, wherein the first component is a random copolymer of propylene and has at least one comonomer selected from ethylene, $C_4$-$C_{12}$ $\alpha$-olefins, and combinations thereof.

9. The nonwoven fabric of any one of Claims 1 to 8, wherein the first component has a heat of fusion as determined by DSC of from 3 J/g to 15 J/g.

10. The nonwoven fabric of any one of Claims 1 to 9, wherein the first component has a melting point as determined by DSC of from 35 ˚C to 70 ˚C.

11. The nonwoven fabric of any one of Claims 1 to 10, wherein the first component has a molecular weight distribution Mw/Mn of from 2.0 to 4.5.

## Patentansprüche

1. Faservlies, das:

   a. einen ersten Bestandteil umfasst, der bezogen auf das Gesamtgewicht der Zusammensetzung von 5 New.-% bis 99 Gew.-% ausmacht, wobei der erste Bestandteil ausgewählt ist aus statistischen Copolymeren von Propylen, wobei der erste Bestandteil eine Schmelzwärme, gemessen mittels DSC, von weniger als 50 J/g, stereoreguläre Propylenkristallinität, eine Schmelzflussgeschwindigkeit wischen 2000 g/10 min. und 3000 g/10 min., bei 230˚C gemäß ASTM-Test 1238-01 Bedingung B, eine enge Zusammensetzungsverteilung und einen Schmelzpunkt, wie mittels DSC bestimmt, von 25˚C bis 110˚C aufweist, und wobei der erste Bestandteil von 2 Gew.-% bis 25 Gew.-% polymerisierte Ethyleneinheiten umfasst, bezogen auf das Gesamtgewicht des ersten Bestandteils, und
   b. einen zweiten Bestandteil, der bezogen auf das Gesamtgewicht der Zusammensetzung 95 Gew.-% bis 1 Gew.-% eines Propylenpolymers oder eines Gemisches von Propylenpolymeren umfasst,

   wobei das Faservlies eine permanente Fixierung von weniger als 60% aufweist.

2. Faservlies nach Anspruch 1, bei dem die permanente Fixierung weniger als 30% beträgt.

3. Faservlies nach einem der Ansprüche 1 oder 2, bei dem die permanente Fixierung weniger als 15% beträgt.

4. Faservlies nach einem der Ansprüche 1 bis 3, bei dem das Faservlies eine Dehnung von größer als 80% aufweist.

5. Faservlies nach einem der Ansprüche 1 bis 4, bei dem das Faservlies eine Dehnung von größer als 300% aufweist.

6. Faservlies nach einem der Ansprüche 1 bis 5, bei dem das Faservlies eine anisotrope Dehnung zeigt.

7. Faservlies nach einem der Ansprüche 1 bis 6, bei dem der erste Bestandteil isotaktische stereoreguläre Propylenkristallinität aufweist.

8. Faservlies nach einem der Ansprüche 1 bis 7, bei dem der erste Bestandteil ein statistisches Copolymer von Propylen ist und mindestens ein Comonomer ausgewählt aus Ethylen, $C_4$- bis $C_{12}$-$\alpha$-Olefinen und Kombinationen davon aufweiset.

9. Faservlies nach einem der Ansprüche 1 bis 8, bei dem der erste Bestandteil eine Schmelzwärme von 3 J/g bis 15 J/g aufweist, wie mittels DSC bestimmt.

10. Faservlies nach einem der Ansprüche 1 bis 9, bei dem der erste Bestandteil einen Schmelzpunkt von 35˚C bis 70˚C aufweist, wie mittels DSC bestimmt.

11. Faservlies nach einem der Ansprüche 1 bis 10, bei dem der erste Bestandteil eine Molekulargewichtsverteilung Mw/Mn von 2,0 bis 4,5 aufweist.

**Revendications**

1. Tissu non tissé comprenant :

   a. un premier constituant représentant de 5% à 99% en poids, par rapport au poids total de la composition, dans lequel le premier constituant est choisi parmi les copolymères statistiques de propylène, le premier constituant présentant une chaleur de fusion, déterminée par DSC, de moins de 50 J/g, la cristallinité d'un propylène stéréorégulier, un indice de fluidité à chaud entre 2000 g/10 min et 3000 g/10 min à 230˚C selon l'essai ASTM 1238-01, condition B, une distribution des compositions étroite et un point de fusion, déterminé par DSC, de 25˚C à 110˚C, et dans lequel le premier constituant comprend de 2% en poids à 25% en poids de motifs éthylène polymérisés, par rapport au poids total du premier constituant ; et
   b. un deuxième constituant représentant de 95% à 1% en poids, par rapport au poids total de la composition, d'un polymère de propylène ou de mélanges de polymères de propylène ;

   dans lequel le tissu non tissé présente une déformation rémanente de moins de 60%.

2. Tissu non tissé selon la revendication 1, dans lequel la déformation rémanente est inférieure à 30%.

3. Tissu non tissé selon l'une quelconque des revendications 1 ou 2 dans lequel la déformation rémanente est inférieure à 15%.

4. Tissu non tissé selon l'une quelconque des revendications 1 à 3, dans lequel le tissu non tissé présente un allongement supérieur à 80%.

5. Tissu non tissé selon l'une quelconque des revendications 1 à 4, dans lequel le tissu non tissé présente un allongement supérieur à 300%.

6. Tissu non tissé selon l'une quelconque des revendications 1 à 5, dans lequel le tissu non tissé présente un allongement anisotrope.

7. Tissu non tissé selon l'une quelconque des revendications 1 à 6, dans lequel le premier constituant possède la cristallinité d'un propylène stéréorégulier isotactique.

8. Tissu non tissé selon l'une quelconque des revendications 1 à 7, dans lequel le premier constituant est un copolymère statistique de propylène et possède au moins un comonomère choisi parmi l'éthylène, les $\alpha$-oléfines en $C_4$-$C_{12}$, et leurs combinaisons.

9. Tissu non tissé selon l'une quelconque des revendications 1 à 8, dans lequel le premier constituant possède une chaleur de fusion, déterminée par DSC, de 3 J/g à 15 J/g.

10. Tissu non tissé selon l'une quelconque des revendications 1 à 9, dans lequel le premier constituant présente un point de fusion, déterminé par DSC, de 35˚C à 70˚C.

11. Tissu non tissé selon l'une quelconque des revendications 1 à 10, dans lequel le premier constituant présente une distribution des masses moléculaires Mw/Mn de 2,0 à 4,5.

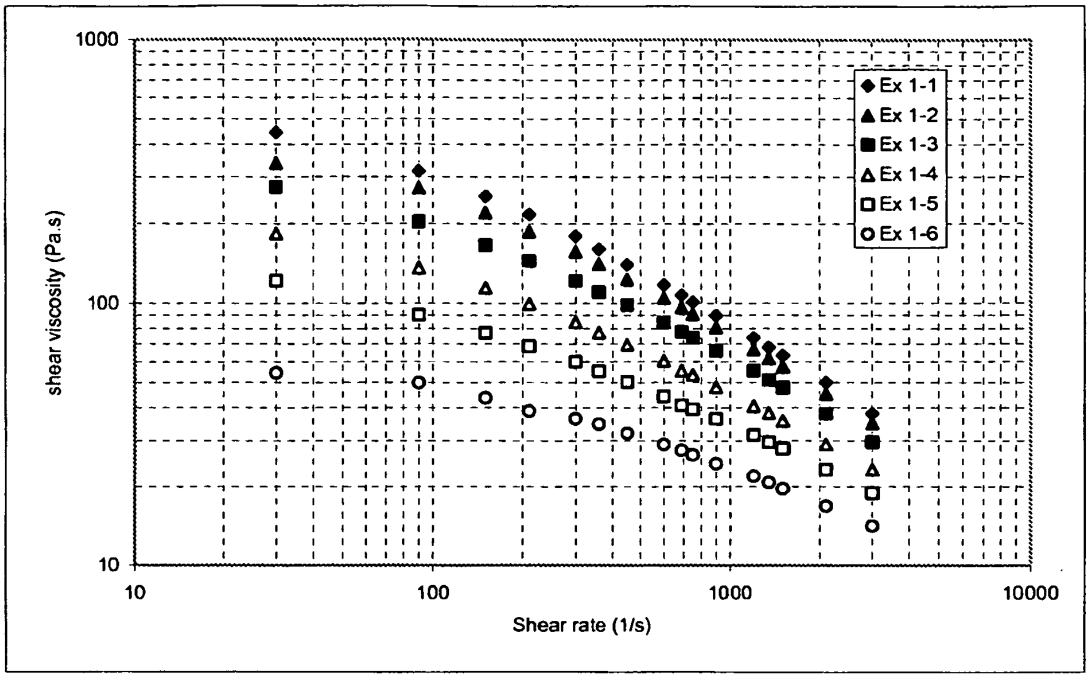


Figure 1: Rheological measurements of the blends in Example 1

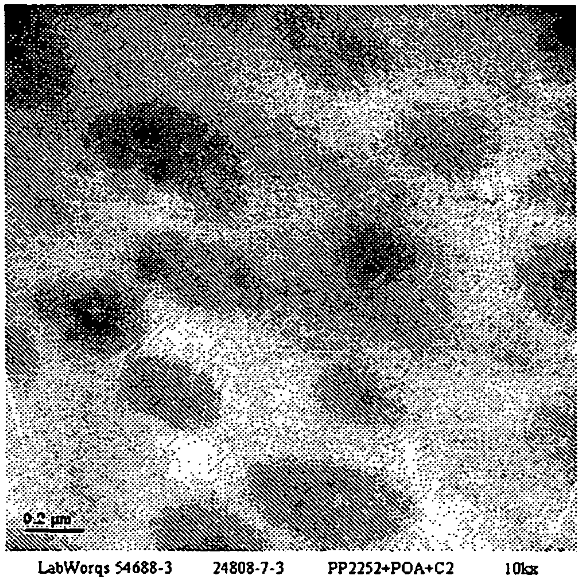


Figure 2A: Electron Micrograph of PP Escorene 9302 (ExxonMobil Chemical)

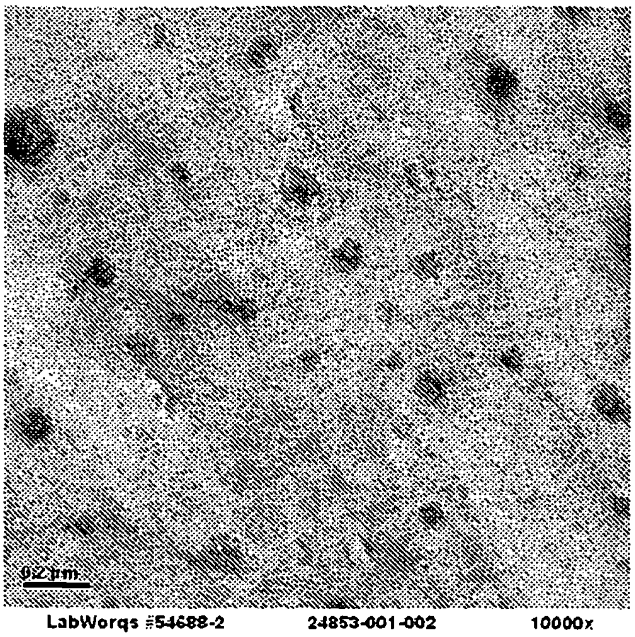


LabWorqs #54688-2 24853-001-002 10000x

Figure 2B: Electron Micrograph of PP Escorene 9302 with 30 wt% of C3-C2 FPC

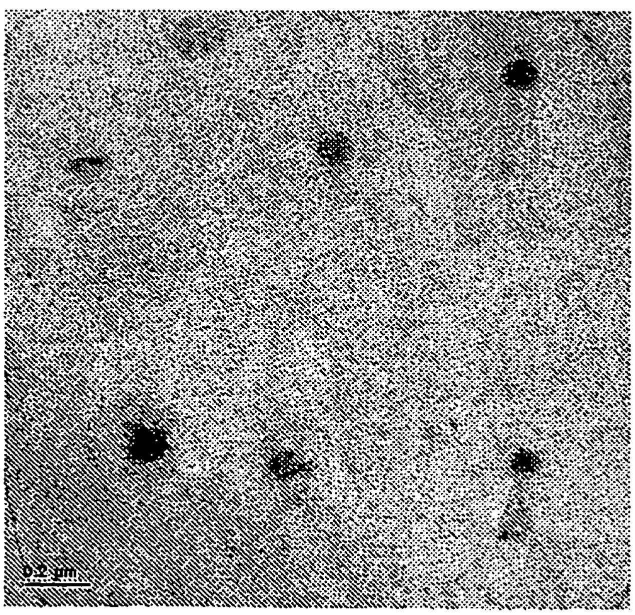


LabWorqs 54688-6 24808-6-5 PP9302+POA+C6 10kx

Figure 2C: Electron Micrograph of PP Escorene 9302 with 30 wt% of C3-C6 FPC

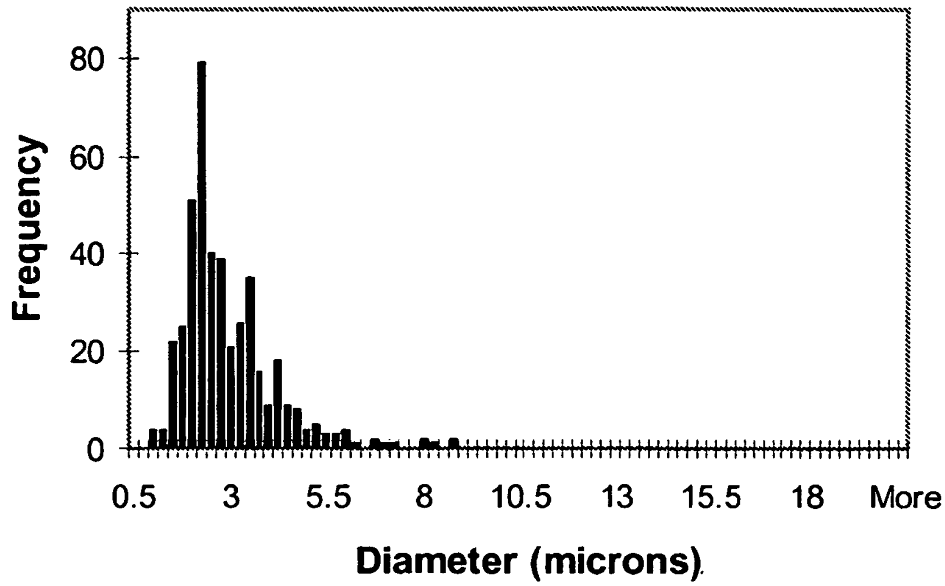


Figure 3A: Fiber diameter distribution for an inventive Melt blown fabric

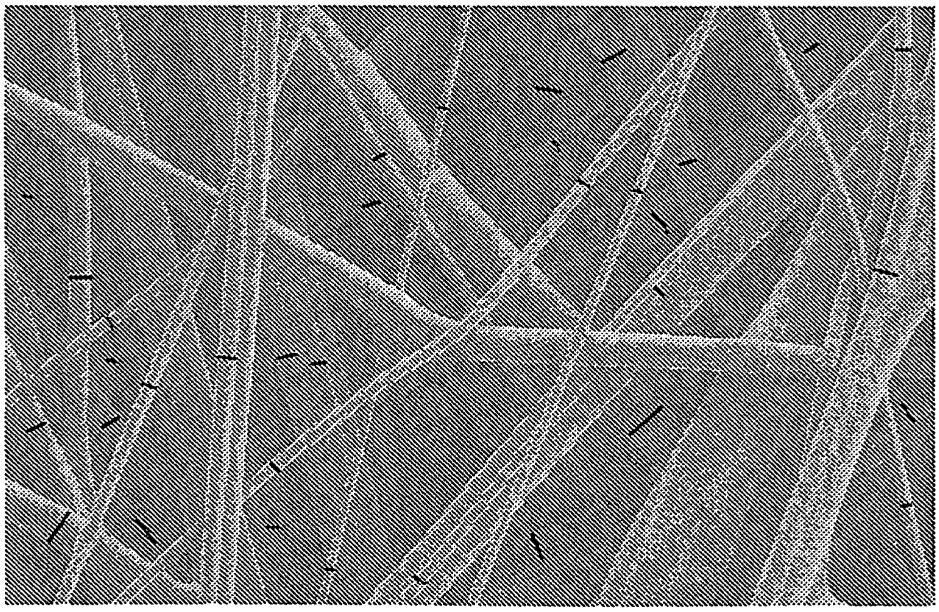

Figure 3B: Fibers micrograph for an inventive Melt Blown fabric. For both Figure 3A and 3B the FPC contains 7.6% C6 , has a heat of fusion of 78J/g and a MFR of 2910

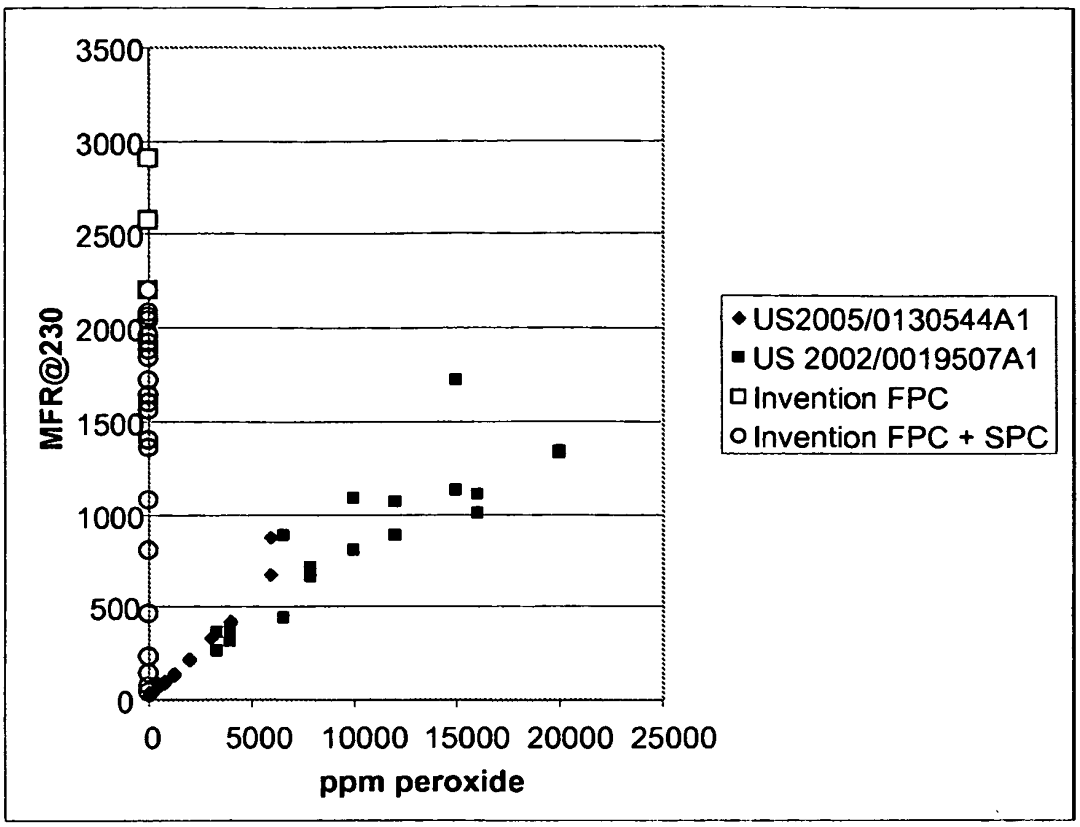


Figure 4: Comparison of the level of the molecular degradation agent versus the MFR of the FPC and the mixture of the FPC and the SPC of the present invention and the prior art.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3853969 A
- US 3378606 A
- US 3262992 A
- US 3882197 A
- US 3888949 A
- US 5594080 A
- US 5723217 A
- US 5726103 A
- US 5736465 A
- US 5763080 A
- US 6010588 A
- US 5891814 A
- WO 9919547 A
- US 6342565 B
- WO 03040202 A
- US 20050106978 A
- WO 2006044083 A
- US 5504172 A
- US 4540753 A
- US 5198401 A
- US 5057475 A
- US 5153157 A
- US 5391629 A
- US 4543399 A
- US 4588790 A
- US 5028670 A
- US 4808561 A
- US 4897455 A
- US 4937301 A
- US 4937217 A
- US 4912075 A
- US 5008228 A
- US 5086025 A
- US 5147949 A
- US 5238892 A
- US 5324800 A
- US 5278119 A
- US 5387568 A
- US 5120867 A
- US 5017714 A
- US 4871705 A
- US 4542199 A
- US 4752597 A
- US 5132262 A
- US 5243001 A
- US 5278264 A
- US 5296434 A
- US 5304614 A
- EP 0277003 A
- EP 0277004 A
- WO 9200333 A
- EP 0426637 A
- EP 0573403 A
- EP 0427697 A
- EP 0520732 A
- EP 0495375 A
- WO 9722639 A
- WO 9608519 A
- WO 9722635 A
- US 3973068 A
- US 4070218 A, Weber
- US 4578414 A, Sawyer
- US 4923914 A, Nohr
- US 5696191 A, Nohr
- US 5145727 A, Potts
- US 4855360 A, Duchesne
- US 4863983 A, Johnson
- US 5798402 A, Fitzgerald
- US 5459188 A
- US 5025052 A
- US 5290886 A
- US 5397832 A
- US 6747114 B
- US 4820142 A
- US 3849241 A, Buntin
- US 4526733 A, Lau
- US 5160746 A, Dodge, II
- US 5196207 A, Koenig
- US 6001303 A, Haynes
- US 5075068 A, Milligan
- US 5080569 A, Gubernick
- US 5607701 A, Allen
- US 4112159 A, Pall
- US 3825379 A
- US 4813864 A
- US 4405297 A
- US 4208366 A
- US 4334340 A
- US 4041203 A
- US 5169706 A
- US 5178931 A
- US 5188885 A

**Non-patent literature cited in the description**


- *Journal American Chemical Society,* 1995, vol. 117, 11586
- *Journal American Chemical Society,* 1997, vol. 119, 3635
- *Journal of the American Chemical Society,* 1991, vol. 113, 8569-8570
- *Journal Macromolecules,* 1995, vol. 28, 3771-3778
- **F. W. Billmeyer, Jr.** Textbook of Polymer Chemistry. Interscience Publishers, 1957, 221
- *Polymer,* 1989, vol. 30, 1350
- **Carman et al.** *journal Rubber Chemistry and Technology,* 1971, vol. 44, 781
- **K. Soga ; T. Shiono ; S. Takemura ; W. Kaminski.** *Macromolecular Chemistry Rapid Communication,* 1987, vol. 8, 305
- *Macromolecules,* 1993, vol. 26, 2064
- Polymer Molecular Weights Part II. Marcel Dekker, Inc, 1975, 287-368
- **Rodriguez, F.** Principles of Polymer Systems. Hemisphere Pub. Corp, 1989, 155-160
- **Verstrate et al.** *Macromolecules,* 1988, vol. 21, 3360
- Nomenclature of Organic Compounds. ACS, 1974
- **L. C. Wadsworth ; B. C. Goswami.** Nonwoven Fabrics: ''Spunbonded and Melt Blown Processes''. *proceedings Eight Annual Nonwovens Workshop,* 30 July 1990
- *Macromolecules,* 1988, vol. 21, 3360
- **T. Sun ; P. Brant ; R. R. Chance ; W. W. Graessley.** *Macromolecules,* 2001, vol. 34 (19), 6812-6820
- **Randall.** *Rev. Macromol. Chem. Phys.,* vol. C29 (2, 3), 285-297